# EUROPÄISCHE PATENTSCHRIFT

(11) **EP 2 741 854 B1**
(45) Veröffentlichungstag und Bekanntmachung des Hinweises auf die Patenterteilung: **17.01.2018**
(21) Anmeldenummer: 12724910.0
(22) Anmeldetag: 25.05.2012
(51) Int. Cl.: B01J 20/20, B01J 20/28, B01J 20/32, B01D 39/02, B01D 53/02, B01D 39/06, B01D 39/08, B01D 39/16, B01D 39/20, C01B 32/354, C01B 32/372, B01J 31/12, A41D 13/00

(54) **AKTIVKOHLE MIT METALLHALTIGER IONISCHER FLÜSSIGKEIT**
ACTIVATED CARBON WITH A METAL-CONTAINING IONIC LIQUID
CHARBON ACTIF CONTENANT UN LIQUIDE IONIQUE MÉTALLIQUE

(30) Priorität: 14.08.2011 DE 102011110103; 23.09.2011 DE 102011114133
(43) Veröffentlichungstag der Anmeldung: 18.06.2014
(73) Patentinhaber: Blücher GmbH, 40699 Erkrath (DE)
(72) Erfinder: BÖHRINGER, Bertram, 42115 Wuppertal (DE); ECKLE, Ilsebill, 45886 Gelsenkirchen (DE); WASSERSCHEID, Peter, 91054 Erlangen (DE); ROTH, Daniel, 91058 Erlangen (DE)
(74) Vertreter: Von Rohr Patentanwälte Partnerschaft mbB
(86) Internationale Anmeldenummer: PCT/EP2012/002246
(87) Internationale Veröffentlichungsnummer: WO 2013/023715

(56) Entgegenhaltungen:
- WO-A2-2012/046057
- CN-A- 101 928 394
- DE-A1-102009 029 284

## Beschreibung

Die vorliegende Erfindung betrifft das technische Gebiet adsorptiver Materialien auf Basis von Aktivkohle, welche insbesondere eine katalytische und/oder reaktive Ausrüstung aufweisen.

Insbesondere betrifft die vorliegende Erfindung eine Aktivkohle mit reaktiver bzw. katalytischer Ausrüstung, wobei die Aktivkohle in Form von diskreten Aktivkohlepartikeln in Kugel- bzw. Kornform vorliegt und wobei die Aktivkohle mit mindestens einer Metallkomponente ausgerüstet bzw. ausgestattet ist.

Darüber hinaus betrifft die vorliegende Erfindung Verfahren zur Herstellung der mit mindestens einer Metallkomponente ausgerüsteten bzw. ausgestatteten Aktivkohle nach der Erfindung.

Die vorliegende Erfindung betrifft zudem Verwendungen der Aktivkohle nach der Erfindung zur Herstellung von Schutzmaterialien aller Art sowie zur Herstellung von Filtern und Filtermaterialien aller Art. Des Weiteren betrifft die vorliegende Erfindung Verwendungen der Aktivkohle nach der Erfindung als Sorptionsspeicher für Gase oder Flüssigkeiten oder im Bereich der Katalyse als Katalysator oder Katalysatorträger bzw. für die chemische Katalyse. Die vorliegende Erfindung betrifft zudem Verwendungen der Aktivkohle nach der Erfindung in oder als Gassensoren bzw. in Brennstoffzellen sowie für sorptive, insbesondere adsorptive Anwendungen. Die vorliegende Erfindung betrifft auch Verwendungen der Aktivkohle nach der Erfindung für die Gasreinigung bzw. Gasaufbereitung sowie für die Entfernung von Schadstoffen. Darüber hinaus betrifft die vorliegende Erfindung eine Verwendung der Aktivkohle nach der Erfindung zur Aufbereitung bzw. Bereitstellung von Reinraumatmosphären.

Die vorliegende Erfindung betrifft auch Schutzmaterialien als solche, welche unter Verwendung der Aktivkohle nach der Erfindung hergestellt sind bzw. diese aufweisen. Zudem betrifft die vorliegende Erfindung auch Filter bzw. Filtermaterialien, welche unter Verwendung der Aktivkohle nach der Erfindung hergestellt sind bzw. welche die erfindungsgemäße Aktivkohle aufweisen.

Schließlich betrifft die vorliegende Erfindung ein Verfahren zur Reinigung bzw. Aufbereitung von Gasen.

Aktivkohle ist aufgrund ihrer recht unspezifischen adsorptiven Eigenschaften das am meisten angewendete Adsorbens. Gesetzliche Auflagen, aber auch das steigende Bewusstsein der Verantwortung für die Umwelt, führen zu einem steigenden Bedarf an Aktivkohle.

Aktivkohle wird im Allgemeinen durch Carbonisierung (synonym auch als Schwelung, Pyrolyse, Abbrand etc. bezeichnet) und anschließende Aktivierung kohlenstoffhaltiger Ausgangsverbindungen erhalten, wobei solche Ausgangsverbindungen bevorzugt werden, die zu ökonomisch vernünftigen Ausbeuten führen. Denn die Gewichtsverluste durch Abspalten flüchtiger Bestandteile bei der Carbonisierung und durch den nachfolgenden Abbrand bei der Aktivierung sind erheblich. Für weitergehende Einzelheiten zu der Aktivkohleherstellung kann beispielsweise verwiesen werden auf *H. v.* Kienle und E. Bäder, "Aktivkohle und ihre industrielle Anwendung", Enke Verlag Stuttgart, 1980.

Die Beschaffenheit der erzeugten Aktivkohle - fein- oder grobporig, fest oder brüchig etc. - hängt dabei auch vom Ausgangsmaterial ab. Übliche Ausgangsmaterialien sind Kokosnussschalen, Holzkohle und Holz (z. B. Holzabfälle), Torf, Steinkohle, Peche, aber auch besondere Kunststoffe, die unter anderem bei der Herstellung von Aktivkohlegeweben eine gewisse Rolle spielen.

Aktivkohle wird in verschiedenen Formen verwendet: Pulverkohle, Splitterkohle bzw. Kornkohle, Formkohle und seit Ende der 1970er Jahre auch kugelförmige Aktivkohle ("Kugelkohle"). Kugelförmige Aktivkohle hat gegenüber anderen Formen von Aktivkohle, wie Pulver-, Splitter-, Korn- und Formkohle und dergleichen, eine Reihe von Vorteilen, die sie für bestimmte Applikationen wertvoll oder sogar unverzichtbar macht: Sie ist rieselfähig, abriebfest bzw. staubfrei und hart. Kugelkohle ist wegen ihrer speziellen Form, aber auch wegen der hohen Abriebfestigkeit beispielsweise für besondere Einsatzgebiete sehr gefragt.

Kugelkohle wird heute noch meist durch mehrstufige und sehr aufwendige Verfahren hergestellt. Das bekannteste Verfahren besteht in der Herstellung von Kügelchen aus Steinkohlenteerpech und geeigneten asphaltartigen Rückständen der Erdölchemie, welche oxidiert - damit sie unschmelzbar werden - und nachfolgend geschwelt und aktiviert werden. Beispielsweise kann die Kugelkohle auch in einem mehrstufigen Verfahren ausgehend von Bitumen hergestellt werden. Diese mehrstufigen Verfahren sind sehr kostenintensiv, und der damit verbundene hohe Preis dieser Kugelkohle verhindert viele Anwendungen, bei denen die Kugelkohle aufgrund ihrer Eigenschaften eigentlich bevorzugt werden müsste.

In der WO 98/07655 A1 wird ein Verfahren zur Herstellung von Aktivkohlekügelchen beschrieben, bei dem zunächst eine Mischung, die einen aus der Diisocyanatherstellung stammenden Destillationsrückstand, einen kohlenstoffhaltigen Verarbeitungshilfsstoff und gegebenenfalls einen oder mehrere weitere Zusatzstoffe umfasst, zu rieselförmigen Kügelchen verarbeitet wird und anschließend die auf diese Weise erhaltenen Kügelchen carbonisiert und dann aktiviert werden.

Aus dem Stand der Technik bekannt ist ferner die Herstellung von Kugelkohle durch Schwelung und anschließende Aktivierung von neuen oder gebrauchten Ionenaustauschern, die Sulfonsäuregruppen enthalten, bzw. durch Schwelung von Ionenaustauschervorstufen in Gegenwart von Schwefelsäure und anschließende Aktivierung, wobei die Sulfonsäuregruppen bzw. die Schwefelsäure die Funktion eines Vernetzers haben. Solche Verfahren sind beispielsweise in der DE 43 28 219 A1 und in der DE 43 04 026 A1 sowie in der DE 196 00 237 A1 einschließlich der deutschen Zusatzanmeldung DE 196 25 069 A1 beschrieben.

Weiterhin sind aus dem Stand der Technik Verfahren bekannt, bei denen die Herstellung von Aktivkohle, insbesondere Kugelkohle, durch Schwelung und anschließende Aktivierung sulfonierter divinylbenzolvernetzter Polystyrole (d. h. sulfonierte Styrol/Divinylbenzol-Copolymere) erfolgt (vgl. z. B. DE 10 2007 O50 971 A1).

Bei speziellen Anwendungen ist aber nicht nur die Geometrie bzw. die äußere Gestalt der Aktivkohle von entscheidender Bedeutung, sondern auch deren Porosität, insbesondere das Gesamtporenvolumen und die Adsorptionskapazität einerseits und die Verteilung der Poren, d. h. der Anteil an Mikro-, Meso- und Makroporen in Bezug auf das Gesamtporenvolumen, andererseits; insbesondere kann die Porosität durch die Auswahl der Ausgangsmaterialien sowie die Verfahrensbedingungen gezielt gesteuert werden. Im Rahmen der vorliegenden Erfindung bezeichnet der Begriff der Mikroporen solche Poren mit Porendurchmessern von weniger als 2 nm, wohingegen der Begriff der Mesoporen solche Poren mit Porendurchmessern im Bereich von 2 nm (d. h. 2 nm einschließlich) bis 50 nm einschließlich bezeichnet und der Begriff der Makroporen solche Poren mit Porendurchmessern von mehr als 50 nm (d. h. > 50 nm) bezeichnet.

Aufgrund ihrer guten adsorptiven Eigenschaften kommt Aktivkohle für eine Vielzahl von Anwendungen zum Einsatz: So wird Aktivkohle beispielsweise in der Medizin oder Pharmazie eingesetzt, aber auch in der Lebensmittelindustrie. Auch für Filteranwendungen findet Aktivkohle weitreichende Anwendungen (z. B. Filtration von Gasen und Flüssigkeiten, Entfernung von unerwünschten oder schädlichen bzw. toxischen Gasen etc.).

Insbesondere kann Aktivkohle in Adsorptionsfiltermaterialien, insbesondere auch speziell in Schutzmaterialien gegenüber Giften, wie chemischbiologischen Kampfstoffen, wie beispielsweise ABC-Schutzbekleidung, zum Einsatz kommen. Zu diesem Zweck sind insbesondere luft- und wasserdampfdurchlässige Schutzanzüge gegen chemische Kampfstoffe bekannt; derartige luft- und wasserdampfdurchlässige Schutzanzüge besitzen oftmals eine Adsorptionsfilterschicht mit Aktivkohle, welche die chemischen Gifte adsorbieren.

Zur Steigerung der Adsorptionsleistung werden permeable adsorptive Filtersysteme, insbesondere auf Basis von Aktivkohle, oft mit einer katalytisch aktiven oder reaktiven Komponente ausgerüstet, indem die Aktivkohle beispielsweise mit einem biozid bzw. biostatisch wirkenden Katalysator, insbesondere auf Basis von Metallen oder Metallverbindungen, imprägniert wird.

Ein derartiges Schutzmaterial ist beispielsweise in der DE 195 19 869 A1 beschrieben, welche ein mehrlagiges, textiles, gasdurchlässiges Filtermaterial mit einer Adsorptionsschicht auf Basis von Aktivkohle, insbesondere in Form von karbonisierten Fasern, enthält, die mit einem Katalysator aus der Gruppe von Kupfer, Cadmium, Platin, Palladium, Quecksilber und Zink in Mengen von 0,05 bis 12 Gew.-%, bezogen auf das Aktivkohlematerial, imprägniert ist.

Eine spezielle, in diesem Zusammenhang zum Einsatz kommende Imprägnierung ist beispielsweise eine so genannte ABEK-Imprägnierung, welche gegenüber spezifischen toxischen Substanzen eine katalytische bzw. abbauende Wirkung aufweist. In diesem Zusammenhang bezieht sich Typ A auf bestimmte organische Gase und Dämpfe mit einem Siedepunkt > 65°C, beispielsweise Cyclohexan. Typ B bezieht sich auf bestimmte anorganische Gase und Dämpfe, beispielsweise Cyanwasserstoff. Typ E bezieht sich auf eine abbauende bzw. schützende Wirkung gegenüber Schwefeldioxid und anderen sauren Gasen und Dämpfen. Typ K schließlich bezieht sich auf eine Schutzfunktion gegenüber Ammoniak und organischen Ammoniakderivaten. Für weiterführende Informationen kann auf die diesbezügliche Europäische Norm EN 14387 (Januar 2004) verwiesen werden.

Nachteilig bei herkömmlichen Imprägnierungen von Aktivkohle mit Metallen bzw. Metallsalzen ist insbesondere die Tatsache, dass durch die Imprägnierung ein Teil der Adsorptionskapazität der Aktivkohle, welche für die Adsorption und somit für die Unschädlichmachung von chemischen Schadstoffen benötigt wird, verlorengeht. Durch die aus dem Stand der Technik bekannten Imprägnierprozesse der Aktivkohle mit Metallen bzw. Metallsalzen wird somit die Leistungsfähigkeit der Aktivkohle nachteilig beeinträchtigt. Des Weiteren wird durch eine herkömmliche Imprägnierung nicht immer die gewünschte Wirksamkeit erreicht. Auch das Problem des Durchschlagens von Gift- bzw. Kampfstoffen bei hohen Konzentrationen wird durch dieses Prinzip nicht immer gelöst; andererseits wird bei sehr geringen Konzentrationen an zu entfernenden Schadstoffen oder störenden Gasen (z. B. bei der Luftaufbereitung für Reinraumbedingungen) oft nicht die gewünschte Effizienz erreicht, da eine Adsorption erst bei höheren Konzentrationen einsetzt. Schließlich benötigt der herkömmliche Imprägnierprozess mit Metallen bzw. Metallsalzen relativ große Mengen des Imprägniermaterials, da ein großer Teil des als Feststoff vorliegenden Imprägniermaterials bei der Adsorption nicht zur Verfügung steht, insbesondere dann nicht, wenn größere Schichtdicken des Imprägniermaterials im Porensystem der Aktivkohle, insbesondere in Form von Kristalliten, vorliegen. Die DE 10 2009 029 284 A1 betrifft ein Katalysatorsystem, welches aus einem Trägermaterial, einer Ionischen Flüssigkeit, einer katalytisch wirksamen Zusammensetzung, welche Nickel enthält, und einem Aktivator in Form einer Lewis-Säure mit alkylierenden Eigenschaften besteht.
Zudem betrifft die CN 101 928 394 A eine Aktivkohle, welche mit einer Nitrilgruppen bereitstellenden Ionischen Flüssigkeit, welche zudem Palladium enthält, ausgerüstet ist. Die Aktivkohle soll zur Herstellung von Polyketonen als Katalysator eingesetzt werden.
Es ist daher eine Aufgabe der vorliegenden Erfindung, adsorptive Materialien mit reaktiven und/oder katalytischen Eigenschaften in Form von Aktivkohle und ein entsprechendes Herstellungsverfahren bereitzustellen, wobei die zuvor geschilderten Nachteile des Standes der Technik zumindest weitgehend vermieden oder aber wenigstens abgeschwächt werden sollen.

Insbesondere soll im Rahmen der vorliegenden Erfindung eine Aktivkohle bereitgestellt werden, welche eine reaktive bzw. katalytische Ausrüstung aufweist, wobei insbesondere die Wirksamkeit der bereitgestellten Aktivkohle im Hinblick auf die Entfernung bzw. Sorption von Schadstoffen oder dergleichen gegenüber dem Stand der Technik weiterführend verbessert sein soll. Insbesondere soll im Rahmen der vorliegenden Erfindung ein Aktivkohlematerial bereitgestellt werden, bei welchem es gewährleistet ist, dass die adsorptiven Eigenschaften der Aktivkohle durch die spezielle reaktive bzw. katalytische Ausrüstung nicht negativ beeinträchtigt werden. Zudem soll im Rahmen der vorliegenden Erfindung ein effizientes Verfahren bereitgestellt werden, auf dessen Basis die erfindungsgemäße Aktivkohle erhalten werden kann.

Wie die Anmelderinnen nun in völlig überraschender Weise herausgefunden haben, kann die zuvor angeführte und der vorliegenden Erfindung zugrundeliegende Aufgabe in nicht erwarteter Weise dadurch gelöst werden, dass im Rahmen der vorliegenden Erfindung eine Aktivkohle in Form von diskreten Aktivkohlepartikeln mit einer speziellen Metallkomponente ausgerüstet bzw. ausgestattet wird, wobei die Metallkomponente mindestens eine metallhaltige, insbesondere Metallionen, vorzugsweise auf Basis einer Metallverbindung, enthaltende Ionische Flüssigkeit (IL) umfasst. Mit anderen Worten besteht die grundlegende Idee der vorliegenden Erfindung darin, die für die reaktiven bzw. katalytischen Eigenschaften der Aktivkohle nach der Erfindung maßgebliche Metallkomponente mit einer Ionischen Flüssigkeit (IL) zu versehen bzw. eine Ionische Flüssigkeit (IL) einzusetzen, in welche ein Metall, insbesondere in ionischer Form auf Basis einer in der Ionischen Flüssigkeit (IL) lösbaren und/oder dissoziierbaren Metallverbindung, wie ein Metallsalz, eingebracht ist, wobei die Aktivkohle nach der Erfindung in zweckgerichteter Weise mit einer derartigen Metallkomponente bzw. Ionischen Flüssigkeit (IL) ausgerüstet bzw. imprägniert ist.

Zur Lösung der zuvor geschilderten Aufgabe schlägt die vorliegende Erfindung somit - gemäß einem **ersten** Aspekt der vorliegenden Erfindung - die erfindungsgemäße Aktivkohle mit reaktiver bzw. katalytischer Ausrüstung, wobei die Aktivkohle in Form von diskreten Aktivkohlepartikeln in Kugel- bzw. Kornform vorliegt und wobei die Aktivkohle mit mindestens einer Metallkomponente unter Einsatz einer Ionischen Flüssigkeit (IL) ausgerüstet bzw. ausgestattet ist, gemäß Anspruch 1 vor. Weitere, insbesondere vorteilhafte Ausgestaltungen der erfindungsgemäßen Aktivkohle sind Gegenstand der diesbezüglichen Unteransprüche.

Weiterer Gegenstand der vorliegenden Erfindung sind - gemäß einem **zweiten** Aspekt der vorliegenden Erfindung - die erfindungsgemäßen Verfahren zur Herstellung der mit mindestens einer Metallkomponente nach Art der Erfindung ausgerüsteten bzw. ausgestatteten Aktivkohle gemäß den unabhängigen Verfahrensansprüchen. Weitere, insbesondere vorteilhafte Ausgestaltungen der erfindungsgemäßen Verfahren sind Gegenstand der diesbezüglichen Verfahrensunteransprüche.

Wiederum weiterer Gegenstand der vorliegenden Erfindung - gemäß einem **dritten** Aspekt der vorliegenden Erfindung - sind die erfindungsgemäßen Verwendungen, wie sie in den betreffenden Verwendungsansprüchen angeführt sind.

Darüber hinaus sind weiterer Gegenstand der vorliegenden Erfindung - gemäß einem **vierten** Aspekt der vorliegenden Erfindung - die erfindungsgemäßen Schutzmaterialien, insbesondere für den zivilen oder militärischen Bereich, insbesondere Schutzbekleidung, gemäß dem diesbezüglichen unabhängigen Anspruch.

Darüber hinaus sind weiterer Gegenstand der vorliegenden Erfindung - gemäß einem **fünften** Aspekt der vorliegenden Erfindung - Filter und Filtermaterialien, insbesondere zur Entfernung von Schad-, Geruchs- und Giftstoffen aller Art, gemäß dem betreffenden unabhängigen Anspruch. Weitere, insbesondere vorteilhafte Ausgestaltungen der erfindungsgemäßen Filter und Filtermaterialien sind Gegenstand der diesbezüglichen Unteransprüche.

Schließlich ist weiterer Gegenstand der vorliegenden Erfindung - gemäß einem **sechsten** Aspekt der vorliegenden Erfindung - das erfindungsgemäße Verfahren zur Reinigung bzw. Aufbereitung von Gasen gemäß dem betreffenden unabhängigen Anspruch. Weitere, insbesondere vorteilhafte Ausgestaltungen des erfindungsgemäßen Verfahrens gemäß diesem Aspekt der vorliegenden Erfindung sind Gegenstand des diesbezüglichen Verfahrensunteranspruchs.

Es versteht sich von selbst, dass bei der nachfolgenden Beschreibung der vorliegenden Erfindung solche Ausgestaltungen, Ausführungsformen, Vorteile, Beispiele oder dergleichen, welche nachfolgend - zu Zwecken der Vermeidung unnötiger Wiederholungen - nur zu einem einzelnen Erfindungsaspekt ausgeführt werden, selbstverständlich auch in Bezug auf die übrigen Erfindungsaspekte entsprechend gelten, ohne dass es einer ausdrücklichen Erwähnung bedarf.

Weiterhin versteht es sich von selbst, dass bei nachfolgenden Angaben von Werten, Zahlen und Bereichen die diesbezüglichen Werte-, Zahlen- und Bereichsangaben nicht beschränkend zu verstehen sind; es versteht sich für den Fachmann von selbst, dass einzelfallbedingt oder anwendungsbezogen von den angegebenen Bereichen bzw. Angaben abgewichen werden kann, ohne dass der Rahmen der vorliegenden Erfindung verlassen ist.

Zudem gilt, dass alle im Folgenden genannten Werte- bzw. Parameterangaben oder dergleichen grundsätzlich mit genormten bzw. standardisierten oder explizit angegebenen Bestimmungsverfahren oder aber andernfalls mit dem Fachmann auf diesem Gebiet an sich geläufigen Bestimmungs- bzw. Messmethoden ermittelt bzw. bestimmt werden können.

Im Übrigen gilt, dass bei allen nachstehend aufgeführten relativen bzw. prozentualen, insbesondere gewichtsbezogenen Mengenangaben, zu beachten ist, dass diese Angaben im Rahmen der vorliegenden Erfindung vom Fachmann derart auszuwählen bzw. zu kombinieren sind, dass in der Summe - gegebenenfalls unter Einbeziehung weiterer Komponenten bzw. Inhaltsstoffe, insbesondere wie nachfolgend definiert - stets 100 % bzw. 100 Gew.-% resultieren. Dies versteht sich für den Fachmann aber von selbst.

Dies vorausgeschickt, wird im Folgenden die vorliegende Erfindung näher beschrieben.

Gemäß einem **ersten** Aspekt der vorliegenden Erfindung betrifft die vorliegende Erfindung eine Aktivkohle mit reaktiver und/oder katalytischer Ausrüstung,
wobei die Aktivkohle in Form von diskreten Aktivkohlepartikeln in Kugel- und/oder Kornform vorliegt, wobei die Aktivkohle Teilchendurchmesser im Bereich von 0,01 bis 2 mm aufweist, bestimmt nach der Methode nach ASTM D2862-97/04, und wobei die Aktivkohle ein Gesamtporenvolumen nach Gurvich im Bereich von 0,4 bis 4 cm³/g aufweist, wobei 30 % bis 85 % des Gesamtporenvolumens nach Gurvich der Aktivkohle durch Poren mit Porendurchmessern im Bereich von 2 nm bis 50 nm gebildet sind;
wobei die Aktivkohle mit mindestens einer Metallkomponente ausgerüstet und/oder ausgestattet ist, wobei die Metallkomponente mindestens eine metallhaltige Ionische Flüssigkeit (IL) umfasst, wobei die Metallkomponente und/oder die Ionische Flüssigkeit (IL) mindestens ein Metall, ausgewählt aus der Gruppe von Cu, Ag, Au, Zn, Hg, Sn, Ce, Ti, Zr, V, Nb, Cr, Mo, W, Mn, Fe, Ru, Os, Co, Rh, Ir, Ni, Pd und Pt, aufweist;
wobei die Ionische Flüssigkeit (IL) eine Verbindung der allgemeinen Formel [Kat]ⁿ⁺[An]ⁿ⁻ ist, wobei "Kat" ein Kation bezeichnet und "An" ein Anion bezeichnet und "n" eine ganze Zahl gleich 1 oder 2 bezeichnet, und/oder wobei die Ionische Flüssigkeit (IL) eine Verbindung der allgemeinen Formel [Kat₁]ₓ^{y+}[An₁]_{y}^{x-} ist, wobei "Kat₁" ein Kation bezeichnet und "An₁" ein Anion bezeichnet und wobei "x" und "y", unabhängig voneinander, eine ganze Zahl im Bereich von 1 bis 4 bezeichnen, wobei das Kation [Kat]ⁿ⁺ der Ionischen Flüssigkeit (IL) ein Stickstoff enthaltendes Kation ist, wobei das Stickstoff enthaltende Kation ausgewählt ist aus der Gruppe von quarternären Ammoniumkationen, Imidazoliumkationen, Pyridiniumkationen, Pyrazoliumkationen und Triaziniumkationen, oder wobei das Kation [Kat]ⁿ⁺ der Ionischen Flüssigkeit (IL) ein Phosphor enthaltendes Kation in Form eines Phosphoniumkations ist und wobei das Anion [An]ⁿ⁻ der Ionischen Flüssigkeit (IL) ein organisches oder anorganisches Anion ist; und
wobei die Aktivkohle die metallhaltige Ionische Flüssigkeit (IL) in Mengen von 1 Vol.-% bis 70 Vol.-%, bezogen auf das Volumen der Aktivkohle, aufweist und/oder wobei die Menge an metallhaltiger Ionischer Flüssigkeit (IL) derart ausgelegt ist und/oder der Porenfüllgrad α der Aktivkohle derart bemessen ist, dass 20 % bis 95 % des Porenvolumens der Aktivkohle nicht mit der metallhaltigen Ionischen Flüssigkeit (IL) gefüllt sind.

Wie zuvor angeführt, besteht die grundlegende Idee der vorliegenden Erfindung somit darin, in gezielter Weise eine Ionische Flüssigkeit (IL), welche Metalle bzw. Metallionen, vorzugsweise mindestens eine Metallverbindung, enthält, für die Ausrüstung einer Aktivkohle mit einer Metallkomponente einzusetzen, um so eine Aktivkohle mit reaktiven und/oder katalytischen Eigenschaften bereitzustellen, wobei die erfindungsgemäße Aktivkohle mit der Metallkomponente insbesondere derart ausgerüstet ist, dass eine Beschichtung bzw. Benetzung bzw. Imprägnierung der Aktivkohle mit der metallhaltigen Ionischen Flüssigkeit (IL) vorliegt. In diesem Zusammenhang stehen vorzugsweise sowohl die äußere als auch die innere Oberflächenstruktur mitsamt den diesbezüglichen Poren, insbesondere Mikro-, Meso- und/oder Makroporen, der erfindungsgemäßen Aktivkohle zumindest teilweise und/oder abschnittsweise mit der metallhaltigen Ionischen Flüssigkeit (IL) und somit mit der Metallkomponente in Kontakt bzw. sind hiermit zumindest teilweise benetzt bzw. imprägniert. Dabei bildet die metallhaltige Ionische Flüssigkeit (IL) bzw. die Metallkomponente - ohne sich auf diese Theorie beschränken zu wollen - auf der Aktivkohleoberfläche sozusagen eine reaktive bzw. katalytische Schicht mit chemisorptiven und/oder physisorptiven Eigenschaften aus, welche die physisorptiven Eigenschaften der Aktivkohle ergänzt.

Auf Basis dieser der vorliegenden Erfindung zugrundeliegenden Konzeption wird in völlig überraschender Weise eine Aktivkohle nach der Erfindung bereitgestellt, welche über hervorragende Eigenschaften hinsichtlich der Sorption von unterschiedlichsten zu entfernenden Schadstoffen oder unterschiedlichsten störenden und mitunter toxischen Gasen, wie chemischen Gift- bzw. Kampfstoffen, verfügt.

Aufgrund der erfindungsgemäßen Konzeption, wonach die eingesetzte Metallkomponente eine metallhaltige, insbesondere Metallionen, vorzugsweise auf Basis einer Metallverbindung, enthaltende Ionische Flüssigkeit (IL) umfasst, wird erfindungsgemäß eine besonders homogene bzw. gleichmäßige Ausrüstung bzw. Imprägnierung der Aktivkohle - und zwar insbesondere über das gesamte Porenspektrum - erreicht, da die metallhaltige bzw. Metallionen enthaltende Ionische Flüssigkeit (IL) besonders gut in das Porensystem eindringen kann und dort eine gleichmäßige Benetzung der Porenoberfläche gewährleistet. Dabei ist es erfindungsgemäß völlig überraschend, dass das Porensystem der Aktivkohle nicht bzw. zumindest im Wesentlichen nicht nachteilig hinsichtlich der Adsorption, insbesondere Physisorption, von Schadstoffen beeinflusst wird. Mit anderen Worten verfügt die erfindungsgemäße Aktivkohle auch nach Ausrüstung mit der Metallkomponente über eine hohe, der Adsorption von Schadstoffen insbesondere mittels Physisorption zugängliche BET-Oberfläche, so dass die grundlegenden Eigenschaften der Aktivkohle als solche auch bei Ausrüstung mit der Metallkomponente erhalten bleiben, was so nicht vorhersehbar war.

Die Aktivkohle vereint folglich chemisorptive wie physisorptive Eigenschaften in einem einzigen Material und ist in der Lage, die Sorbate bzw. die zu sorbierende Substanz - im Unterschied zu nichtimprägnierter Aktivkohle - auch zuverlässig und irreversibel bzw. dauerhaft zu binden.

Zudem wird durch die erfindungsgemäß vorgesehene Ausrüstung bzw. Imprägnierung der Aktivkohle mit der Metallkomponente eine zu Verstopfungen des Porensystems führende Kristall- bzw. Kristallitbildung im Porensystem, wie sie im Stand der Technik - beispielsweise durch Auskristallisation von Metallsalzen - oftmals vorliegt, verhindert, da zum einen die eingesetzten Metalle bzw. Metallverbindungen in der Ionischen Flüssigkeit (IL) dauerhaft gelöst bzw. dissoziiert sind und zum anderen die Ionische Flüssigkeit (IL) aufgrund ihrer sehr speziellen physikochemischen Eigenschaften dauerhaft an der Oberfläche der äußeren und inneren Strukturen der Aktivkohle in flüssigem Zustand verbleibt, was Kristallisationsvorgängen entgegenwirkt. Im Gegensatz zu der im Stand der Technik üblichen Metallsalzimprägnierung wird im Rahmen der vorliegenden Erfindung dabei auch bei hochmikroporöser Aktivkohle das Auftreten von Verstopfungen im Hinblick auf die Porenstruktur der Aktivkohle verhindert, was die Leistungsfähigkeit der erfindungsgemäßen Aktivkohle noch weiter verbessert.

Auch durch die besonders homogene bzw. gleichmäßige Ausrüstung bzw. Imprägnierung der erfindungsgemäßen Aktivkohle mit der für die reaktive bzw. katalytische Ausrüstung maßgeblichen metallhaltigen, insbesondere Metallionen enthaltenden Ionischen Flüssigkeit (IL) nach Art einer benetzenden Flüssigkeitsschicht wird die Leistungsfähigkeit der erfindungsgemäßen Aktivkohle im Hinblick auf die Sorption bzw. den Abbau zu entfernender Substanzen nochmals gesteigert, insbesondere da die Aktivkohle nach der Erfindung gewissermaßen über einen großen Teil ihrer Oberfläche über kombinierte Eigenschaften der Physisorption und der Chemisorption verfügt, welche sich zudem über die Summe der Einzelmaßnahmen hinaus verstärken, was als Indiz für das Vorliegen eines synergistischen Effektes gewertet werden muss.

Denn, wie die seitens der Anmelderinnen durchgeführten Untersuchungen überraschend zeigen, ist der Einsatz von Metallverbindungen bzw. Metallsalzen im Rahmen von Ionischen Flüssigkeiten (IL) gegenüber dem herkömmlichen Einsatz von Metallsalzen in kristalliner Form bzw. in Form von Festkörpern deutlich effizienter, weil - ohne sich auf diese Theorie beschränken zu wollen - zum einen einem Verstopfen von Porensystemen in der Aktivkohle effizient entgegengewirkt wird, da das katalytische bzw. reaktive System in Form einer Flüssigkeit eingesetzt wird. Zum anderen führt die Verwendung von Ionischer Flüssigkeit (IL) gewissermaßen als Lösemittel bzw. flüssiges Trägermedium für die eingesetzten Metalle bzw. Metallverbindungen durch das Vorliegen optimierter Diffusionsvorgänge zu einer guten Verteilung der zu sorbierenden Substanzen in dem Aktivkohlesystem, was deren Sorption gleichermaßen verbessert.

Erfindungsgemäß ergänzen sich somit die für die reaktive bzw. katalytische Ausrüstung maßgebliche Metallkomponente auf Basis der Ionischen Flüssigkeit (IL) mit dem Metall bzw. der Metallverbindung und die damit ausgerüstete bzw. imprägnierte partikuläre Aktivkohle in besonderer Weise.

Im Rahmen der vorliegenden Erfindung wird im Ergebnis ein optimiertes Adsorptionssystem mit kombinierten und sich ergänzenden Eigenschaften von Physisorption und Chemisorption zur Verfügung gestellt.

Dabei ist es im Rahmen der vorliegenden Erfindung völlig überraschend, dass sich Aktivkohle als solche überhaupt in effektiver Weise mit einer Metallkomponente unter Verwendung einer Ionischen Flüssigkeit (IL) ausrüsten lässt, da Aktivkohle als solche grundsätzlich hydrophobe Eigenschaften aufweist, was einer effizienten Benetzung bzw. Imprägnierung grundsätzlich abträglich ist. Insbesondere ist es jedoch aufgrund der speziellen erfindungsgemäßen Verfahrensweise in völlig überraschender und nicht vorhersehbarer Weise gelungen, Aktivkohle als solche (auch ohne Vorbehandlung) mit der in Rede stehenden Metallkomponente unter Einsatz einer Ionischen Flüssigkeit (IL) auszustatten, was zu den zuvor angeführten positiven Eigenschaften hinsichtlich der Sorption von Schadstoffen führt. Diesbezüglich vorteilhaft ist dabei die Tatsache, dass Aktivkohle als solche - im Gegensatz zu herkömmlichen Trägermaterialien - allenfalls nur ein geringes Maß an polaren oder funktionellen Gruppen bzw. im Wesentlichen keine polaren oder funktionellen Gruppen aufweist, welche mit der Metallkomponente bzw. dem Metall und/oder der Ionischen Flüssigkeit (IL) in unerwünschter Weise in Wechselwirkung treten könnten. Im Gegensatz zu Aktivkohle, wie sie erfindungsgemäß eingesetzt wird, weisen herkömmliche Trägermaterialien, wie Aluminiumoxid, Siliciumdioxid oder andere mineralische Oxide, oftmals saure oder basische Gruppen auf, welche die Aktivität der eingesetzten Komponente herabsetzen können, was bei Aktivkohle nicht der Fall ist.

Zusammenfassend zeichnet sich die erfindungsgemäß ausgerüstete Aktivkohle somit durch hervorragende Adsorptionseigenschaften auf Basis einer Kombination von Physisorption und Chemisorption aus, wobei gleichermaßen die Tendenz zur Desorption von sorbierten Substanzen - im Unterschied zu herkömmlicher Aktivkohle - signifikant herabgesetzt ist. Insbesondere tritt eine bei herkömmlicher Aktivkohle z. B. bei Erschöpfung oder übermäßiger Beladung häufig vorkommende Freisetzung bzw. Resorption bereits sorbierter Substanzen bei der erfindungsgemäßen Aktivkohle nicht bzw. nicht in nennenswertem Maße auf. Aufgrund der erfindungsgemäßen Konzeption der Bereitstellung einer Aktivkohle, welche neben ihren inhärenten adsorptiven Eigenschaften gleichermaßen reaktive bzw. katalytische Eigenschaften aufweist, wird eine dauerhafte und im Allgemeinen irreversible Bindung bzw. ein effizienter Abbau sorbierter Substanzen gewährleistet, was gleichermaßen zu einer verringerten Desorption der in Rede stehenden Substanzen und zu einer Steigerung der Gesamtadsorptionskapazität führt.

Im Allgemeinen eignet sich die erfindungsgemäße Aktivkohle beispielsweise zur Gasadsorption und insbesondere zur Adsorption von Schwefel enthaltenden Gasen (wie Schwefeloxiden und/oder Schwefelwasserstoff), von Stickstoff enthaltenden Gasen (wie Stickoxiden und/oder Stickstoffwasserstoffen wie Ammoniak) sowie von halogenhaltigen Gasen (wie Chlorwasserstoffgas). Gleichermaßen eignet sich die erfindungsgemäße Aktivkohle auch zur Adsorption von Halogenen als solchen, insbesondere in Form von Gasen oder Dämpfen, beispielsweise von Ioddämpfen oder dergleichen. Auch von daher eignet sich die erfindungsgemäße Aktivkohle z. B. auch für die Aufreinigung bzw. Bereitstellung von aufgereinigter Luft für Reinräume oder dergleichen. Insbesondere weist die erfindungsgemäße Aktivkohle besonders gute Eigenschaften im Hinblick auf die Sorption, insbesondere Physisorption und/oder Chemisorption, von Schwefel- und Stickstoffoxiden, Halogenwasserstoffen, Cyangas, Cyanwasserstoff, Schwefelwasserstoff und/oder Ammoniak sowie Chlorgas auf.

Ein weiterer Vorteil der erfindungsgemäßen Aktivkohle ist zudem darin zu sehen, dass die Sorptionseigenschaften zumindest im Wesentlichen unabhängig von der Luftfeuchtigkeit sind, insbesondere im Hinblick auf die unter Einsatzbedingungen üblichen Luftfeuchtigkeiten.

Zudem weist die erfindungsgemäße Aktivkohle hervorragende Sorptionseigenschaften sowohl bei niedrigen als auch hohen Konzentrationen von zu sorbierenden (Schad-)Stoffen bzw. Gasen in aufzureinigenden Medien, wie Luft, auf, was die erfindungsgemäße Aktivkohle z. B. auch für die Aufrüstung von Luft für Reinraumbedingungen interessant macht.

Was die im Rahmen der vorliegenden Erfindung eingesetzte Ionische Flüssigkeit (IL) anbelangt, so handelt es sich hierbei um bei niedrigen Temperaturen schmelzende Salze, d. h. insbesondere um Salze, die auch bei Raumtemperatur (T = 20 °C) in flüssiger Form vorliegen. Insbesondere weist die erfindungsgemäß eingesetzte Ionische Flüssigkeit (IL) einen nichtmolekularen, ionischen Charakter auf, d. h. die Ionische Flüssigkeit (IL) liegt in ionischer bzw. dissoziierter Form vor. Im Allgemeinen weist die Ionische Flüssigkeit (IL), wie sie erfindungsgemäß eingesetzt wird, Schmelzpunkte im Bereich von 250 °C bis -90 °C, insbesondere im Bereich von 200 °C bis -100 °C, vorzugsweise im Bereich von 100 °C bis -90 °C (bei Atmosphärendruck, d. h. 1,013 bar), auf.

Die Ionische Flüssigkeit (IL) wird im Allgemeinen aus positiven Ionen (Kationen) und negativen Ionen (Anionen) gebildet, wobei die Ionische Flüssigkeit (IL) insgesamt ladungsneutral ist. Im Allgemeinen können sowohl die Anionen als auch die Kationen einer Ionischen Flüssigkeit (IL), unabhängig voneinander, organischer oder anorganischer Natur sein, so dass es sich bei der Ionischen Flüssigkeit (IL) im Allgemeinen um ein organisches oder anorganisches, bei niedrigen Temperaturen schmelzendes Salz handelt. In bevorzugter Weise sind die Kationen bzw. Anionen einer Ionischen Flüssigkeit (IL) einwertig, es können aber auch höhere bzw. unter Wahrung der Gesamtladungsneutralität unterschiedliche Wertigkeiten vorliegen, weshalb die Anzahl der Anionen nicht zwangsläufig gleich der Anzahl der Kationen ist. Gleichermaßen kann es vorgesehen sein, dass in Ionischen Flüssigkeiten (IL) Kombinationen sowohl unterschiedlicher Anionen als auch unterschiedlicher Kationen realisiert sind.

Durch die geeignete Wahl der zugrundeliegenden Kationen bzw. Anionen ist insbesondere eine gezielte Einstellung der Polarität und damit eine Abstimmung bzw. Einstellung der Löslichkeitseigenschaften der zugrundeliegenden Ionischen Flüssigkeit (IL) möglich. Dabei können sowohl wassermischbare ionische Flüssigkeiten als auch nicht mit Wasser mischbare ionische Flüssigkeiten verwendet bzw. eingestellt werden. Grundsätzlich kommt auch der Einsatz von solchen Ionischen Flüssigkeiten (IL) in Frage, die selbst mit organischen Lösemitteln zwei Phasen bilden, auch wenn dies erfindungsgemäß nicht bevorzugt ist. In erfindungsgemäß bevorzugter Weise handelt es sich bei der eingesetzten Ionischen Flüssigkeit (IL) um eine mit insbesondere polaren organischen Flüssigkeiten bzw. Lösemitteln mischbare bzw. hierin lösbare Verbindung.

Im Gegensatz zu herkömmlichen molekularen Flüssigkeiten sind Ionische Flüssigkeiten (IL) vollständig bzw. in ihrer Gesamtheit ionisch. Aufgrund der zuvor angeführten Eigenschaften liegen Ionische Flüssigkeiten (IL) somit bereits bei niedrigen Temperaturen, wie z. B. bei Raumtemperatur (T = 20 °C) und Atmosphärendruck, gewissermaßen als Schmelze und/oder in dissoziierter Form auf Basis der zugrundeliegenden Kationen und Anionen vor.

In diesem Zusammenhang weisen Ionische Flüssigkeiten (IL) besondere physikochemische Eigenschaften auf, wie z. B. eine elektrische Leitfähigkeit und spezifische Lösungs- und Mischungseigenschaften. Ionische Flüssigkeiten (IL) weisen im Allgemeinen einen äußerst geringen Dampfdruck und daher keine bzw. allenfalls eine vernachlässigbare geringe Tendenz zum Verdampfen auf. Dies ist auch aus verfahrenstechnischer Hinsicht von großem Vorteil, da auf diese Weise beispielsweise eine destillative Trennung eines Reaktionsgemisches als effektive Methode zur Produktabtrennung möglich ist, wobei die im Stand der Technik bekannten Probleme durch Azeotropbildung zwischen Lösungsmitteln und Produkten nicht auftreten. Insbesondere weisen Ionische Flüssigkeiten (IL) unterhalb ihrer Zersetzungstemperatur, welche oftmals oberhalb von 200 °C liegt, auch unter Hochvakuumbedingungen zumindest im Wesentlichen keine makroskopischen Verluste durch Verdampfen oder dergleichen auf. Zudem sind Ionische Flüssigkeiten (IL), wie sie erfindungsgemäß eingesetzt werden, im Allgemeinen nicht brennbar.

Durch die hohe Variationsbreite in der Struktur ihrer Kationen und/oder Anionen können die physikochemischen Eigenschaften von Ionischen Flüssigkeiten (IL) in einem weiten Bereich variiert bzw. eingestellt werden, so dass im Rahmen der vorliegenden Erfindung für den entsprechenden Anwendungszweck gewissermaßen maßgeschneiderte bzw. optimierte Ionische Flüssigkeiten (IL) eingesetzt werden können, um auf diese Weise eine besonders effektive Ausrüstung der erfindungsgemäßen Aktivkohle mit der Metallkomponente zu ermöglichen. So können beispielsweise die Polarität, die Viskosität, das Schmelzverhalten, insbesondere der Schmelzpunkt, oder dergleichen in gezielter Weise eingestellt bzw. vorgegeben werden.

Genauer gesagt handelt es sich bei einer Ionischen Flüssigkeit (IL) um eine solche Flüssigkeit, welche ausschließlich Ionen enthält. Somit handelt es sich bei einer Ionischen Flüssigkeit (IL) gewissermaßen um flüssige Salze in Form von Schmelzen, und zwar ohne dass das zugrundeliegende Salz in einem Lösemittel, wie Wasser, gelöst ist. Wie zuvor angeführt, versteht man unter einer Ionischen Flüssigkeit (IL) somit ein solches Salz, welches bei Temperaturen unterhalb von 250 °C, insbesondere unterhalb von 200 °C, vorzugsweise unterhalb von 100 °C, bei Atmosphärendruck flüssig ist bzw. im geschmolzenen Zustand vorliegt. Zusammenfassend ist abzuführen, dass sich Ionische Flüssigkeiten (IL) durch eine Reihe interessanter Eigenschaften auszeichnen. Wie zuvor angeführt, sind Ionische Flüssigkeiten (IL) thermisch stabil, nicht entzündlich und haben einen sehr niedrigen und quasi nicht messbaren Dampfdruck. Zudem verfügen Ionische Flüssigkeiten (IL) über sehr gute Lösungseigenschaften für zahlreiche Substanzen. Aufgrund ihres rein ionischen Aufbaus weisen Ionische Flüssigkeiten (IL) besondere elektrochemische Eigenschaften auf, wie z. B. eine elektrische Leitfähigkeit sowie eine hohe elektrochemische Stabilität und damit eine hohe Stabilität gegen Oxidation bzw. Reduktion. Insbesondere durch Variation von Kation und Anion, insbesondere im Hinblick auf die Verwendung spezieller organischer Kerne für Kation bzw. Anion, insbesondere für das Kation, bzw. Seitenketten bzw. Substitutenten, kann z. B. die Löslichkeit in Wasser oder in organischen Lösemitteln variiert werden, was gleichermaßen für den Schmelzpunkt und die Viskosität gilt.

Für weitere Informationen zu Ionischen Flüssigkeiten (IL) kann verwiesen werden auf die wissenschaftliche Publikation gemäß *Wasserscheid P.,* Keim W., Angew. Chem., 2000, 112, 3926-3945*.*

Im Allgemeinen ist die erfindungsgemäß eingesetzte Ionische Flüssigkeit (IL) eine Verbindung der allgemeinen Formel [Kat]ⁿ⁺[An]ⁿ⁻, wobei "Kat" ein Kation bezeichnet und "An" ein Anion bezeichnet und "n" eine ganze Zahl gleich 1 oder 2, insbesondere 1, bezeichnet. In erfindungsgemäß bevorzugter Weise weist die Ionische Flüssigkeit (IL) somit einwertige Kationen bzw. Anionen auf.

Im Rahmen der vorliegenden Erfindung kann es auch vorgesehen sein, dass die Ionische Flüssigkeit (IL) eine Verbindung der allgemeinen Formel [Kat₁]ₓ^{y+}[An₁]_{y}^{x-} ist, wobei "Kat₁" ein Kation bezeichnet und "An₁" ein Anion bezeichnet und wobei "x" und "y", unabhängig voneinander, eine ganze Zahl im Bereich von 1 bis 4, insbesondere im Bereich von 1 bis 3, vorzugsweise 1 oder 2, bevorzugt jeweils 1, bezeichnen.

Was die Ionische Flüssigkeit (IL) weiterhin anbelangt, so kann das Kation [Kat]ⁿ⁺ der Ionischen Flüssigkeit (IL) ein Stickstoff enthaltendes Kation sein. In diesem Zusammenhang kann es erfindungsgemäß vorgesehen sein, dass das Stickstoff enthaltende Kation ausgewählt ist aus der Gruppe von quarternären Ammoniumkationen, Imidazoliumkationen, Pyridiniumkationen, Pyrazoliumkationen und Triaziniumkationen, insbesondere Imidazoliumkationen. Die Bezeichnung der Heteroaromaten bezieht sich dabei nicht nur auf den oben bezeichneten Grundkörper bzw. den Kern als solchen, sondern umfasst auch substituierte Derivate der in Rede stehenden Grundkörper bzw. Kerne, wobei diesbezüglich insbesondere auch die hierzu nachfolgend noch angeführten Substituenten in Betracht kommen können.

Im Rahmen der vorliegenden Erfindung kann es vorgesehen sein, dass das Kation [Kat]ⁿ⁺ der Ionischen Flüssigkeit (IL) ein Phosphor enthaltendes Kation, insbesondere ein Phosphoniumkation, ist.

Erfindungsgemäß hat es sich als besonders vorteilhaft erwiesen, wenn das Kation [Kat]ⁿ⁺ der Ionischen Flüssigkeit (IL) ausgewählt ist aus der Gruppe von
- quarternären Ammoniumkationen der allgemeinen Formel (I):

   [NR¹R²R³R]⁺ Formel (I)
- Phosphoniumkationen der allgemeinen Formel (II):

   [PR¹R²R³R]⁺ Formel (II)
- Imidazoliumkationen der allgemeinen Formel (III): 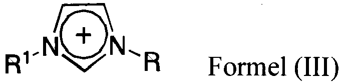 wobei in der Formel (III) der Imidazolkern gegebenenfalls mit mindestens einer Gruppe, ausgewählt aus (C₁-C₈)-Alkylgruppen, (C₁-C₈)-Alkoxygruppen, (C₁-C₈)-Aminoalkylgruppen, (C₅-C₁₂)-Arylgruppen und (C₅-C₁₂)-Aryl-(C₁-C₈)-Alkylgruppen, substituiert ist;
- Pyridiniumkationen der allgemeinen Formel (IV): 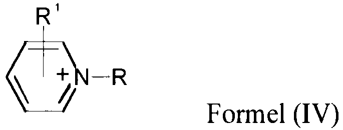 wobei in der Formel (IV) der Pyridinkern gegebenenfalls mit mindestens einer Gruppe, ausgewählt aus (C₁-C6)-Alkylgruppen, (C₁-C₆)-Alkoxygruppen, (C₁-C₆)-Aminoalkylgruppen, (C₅-C₁₂)-Arylgruppen oder (C₅-C₁₂)-Aryl-(C₁-C₆)-Alkylgruppen, substituiert ist;
- Pyrazoliumkationen der allgemeinen Formel (V): 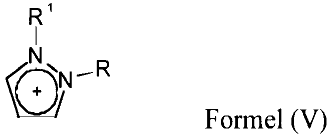 wobei in der Formel (V) der Pyrazolkern gegebenenfalls mit mindestens einer Gruppe, ausgewählt aus (C₁-C₆)-Alkylgruppen, (C₁-C₆)-Alkoxygruppen, (C₁-C₆)-Aminoalkylgruppen, (C₅-C₁₂)-Arylgruppen oder (C₅-C₁₂)-Aryl-(C₁-C₆)-Alkylgruppen, substituiert ist; und
- Triaziniumkationen der allgemeinen Formel (VI): 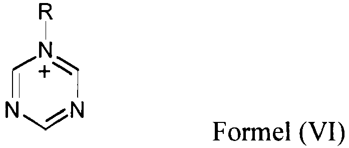 wobei in der Formel (VI) der Triazinkern gegebenenfalls mit mindestens einer Gruppe, ausgewählt aus (C₁-C₆)-Alkylgruppen, (C₁-C₆)-Alkoxygruppen, (C₁-C₆)-Aminoalkylgruppen, (C₅-C₁₂)-Arylgruppen und (C₅-C₁₂)-Aryl-(C₁-C₆)-Alkylgruppen, substituiert ist;
   wobei in den Formeln (I) bis (VI), unabhängig voneinander, die Reste R¹, R², R³, unabhängig voneinander, ausgewählt sind aus der Gruppe von
- Wasserstoff;
- linearen oder verzweigten, gesättigten oder ungesättigten, aliphatischen oder alicyclischen (C₁-C₂₀)-Alkylgruppen;
- Heteroarylgruppen oder (C₃-C₈)-Heteroaryl-(C₁-C₆)-Alkylgruppen, insbesondere mit jeweils mindestens einem Heteroatom, insbesondere ausgewählt aus der Gruppe von N, O und S, insbesondere wobei der Heteroarylrest gegebenenfalls mit mindestens einer Gruppe, insbesondere mindestens einer (C₁-C₆)-Alkylgruppe, und/oder mindestens einem Halogenatom, substituiert ist; und
- Arylgruppen oder (C₅-C₁₂)-Aryl-(C₁-C₆)-Alkylgruppen, insbesondere wobei die vorgenannten Gruppen jeweils gegebenenfalls mit mindestens einer (C₁-C₆)-Alkylgruppe und/oder mindestens einem Halogenatom substituiert sind; und
wobei in den Formeln (I) bis (VI), unabhängig voneinander, der Rest R ausgewählt ist aus
- linearen oder verzweigten, gesättigten oder ungesättigten, aliphatischen oder alicyclischen (C₁-C₂₀)-Alkylgruppen;
- (C₃-C₈)-Heteroaryl-(C₁-C₆)-Alkylgruppen, insbesondere mit jeweils mindestens einem Heteroatom, insbesondere ausgewählt aus der Gruppe von N, O und S, insbesondere wobei der Heteroarylrest gegebenenfalls mit mindestens einer Gruppe, insbesondere mindestens einer (C₁-C₆)-Alkylgruppe, und/oder mindestens einem Halogenatom, substituiert ist; und
- (C₅-C₁₂)-Aryl-(C₁-C₆)-Alkylgruppen, insbesondere wobei die vorgenannten Gruppen gegebenenfalls mit wenigstens einer (C₁-C₆)-Alkylgruppe und/oder einem Halogenenatom substituiert sind.

Gemäß einer erfindungsgemäß bevorzugten Ausführungsform ist das Kation [Kat]ⁿ⁺ der Ionischen Flüssigkeit (IL) ein Imidazoliumkation der allgemeinen Formel (III): 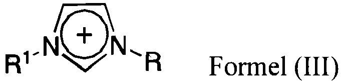 wobei in der Formel (III) der Imidazolkern gegebenenfalls mit mindestens einer Gruppe, ausgewählt aus (C₁-C₈)-Alkylgruppen, (C₁-C₈)-Alkoxygruppen, (C₁-C₈)-Aminoalkylgruppen, (C₅-C₁₂)-Arylgruppen und (C₅-C₁₂)-Aryl-(C₁-C₈)-Alkylgruppen, substituiert ist und wobei in der Formel (III) die Reste R und R¹, unabhängig voneinander, ausgewählt sind aus der Gruppe von linearen oder verzweigten, gesättigten oder ungesättigten, aliphatischen oder alicyclischen, insbesondere linearen (C₁-C₂₀)-Alkylgruppen, insbesondere wobei die Reste R und R¹ voneinander verschieden sind und/oder insbesondere wobei die Reste R und R¹ eine voneinander verschiedene Anzahl an Kohlenstoffatomen aufweisen und/oder
wobei in der Formel (III) der Rest R eine Methylgruppe ist und wobei in der Formel (III) der Rest R¹ eine insbesondere lineare (C₁-C₂₀)-Alkylgruppe, vorzugsweise eine insbesondere lineare (C₂-C₁₂)-Alkylgruppe, bevorzugt eine insbesondere lineare (C₂-C₈)-Alkylgruppe, ist oder
wobei in der Formel (III) der Rest R eine Methylgruppe ist und wobei in der Formel (III) der Rest R¹ eine Ethylgruppe, Butylgruppe oder Octylgruppe, insbesondere eine Ethylgruppe, ist.

Weiterhin werden im Rahmen der vorliegenden Erfindung besonders gute Ergebnisse erhalten, wenn das Kation [Kat]ⁿ⁺ der Ionischen Flüssigkeit (IL) ein 1-Ethyl-3-methylimidazoliumkation ([EMIM]⁺), ein 1-Butyl-3-methyl-imidazoliumkation ([BMIM]⁺) oder ein 1-Octyl-3-methylimidazoliumkation ([OMIM]⁺), insbesondere ein 1-Ethyl-3-methylimidazoliumkation ([EMIM]⁺), ist.

Was das Anion [An]ⁿ⁻ der erfindungsgemäß eingesetzten Ionischen Flüssigkeit (IL) anbelangt, so ist es erfindungsgemäß vorgesehen, dass das Anion [An]ⁿ⁻ der Ionischen Flüssigkeit (IL) ein organisches oder anorganisches Anion ist.

In diesem Zusammenhang kann das Anion [An]ⁿ⁻ der Ionischen Flüssigkeit (IL) ausgewählt sein aus der Gruppe von Chlorocuprat ([CuCl₃]⁻), Bromocuprat ([CuBr₃]⁻), Chlorostannat ([SnCl₃]⁻, [Sn₂Cl₅]⁻), Bromostannat ([SnBr₃]⁻), Chlorozinkat ([ZnCl₃]⁻), Bromozinkat ([ZnBr₃]⁻), Chloroferrat ([FeCl₃]⁻), Bromoferrat ([FeBr₃]⁻), Chlorocobaltat ([CoCl₃]⁻), Bromocobaltat ([CoBr₃]⁻), Chloronickelat ([NiCl₃]⁻), Bromonickelat ([NiBr₃]⁻), Tetrafluoroborat ([BF₄]⁻), Tetrachloroborat ([BCl₄]⁻), Hexafluorophosphat ([PF₆]⁻), Hexafluoroantimonat ([SbF₆]⁻), Hexafluoroarsenat ([AsF₆]⁻), Sulfat ([SO₄]²⁻), Carbonat ([CO₃]²⁻), Fluorosulfonat, [R'-COO]⁻, [R'-SO₃]⁻, [R'-SO₄]⁻, [R'₂PO_{4]}⁻, Tetrakis-(3,5-bis-(trifluormethyl)-phenyl)borat ([BARF]⁻) und Bissulfonylamid [(R'-SO₂)₂N]⁻, wobei R' ein linearer oder verzweigter, 1 bis 12 Kohlenstoffatome enthaltender aliphatischer oder alicyclischer Alkylrest oder ein (C₅-C₁₈)-Arylrest, ein (C₅-C₁₈)-Aryl-(C₁-C₆)-alkylrest oder ein (C₁-C₆)-Alkyl-(C₅-C₁₈)-arylrest ist, wobei der Rest gegebenenfalls mit Halogenatomen und/oder Sauerstoffatomen substituiert ist.

Gleichermaßen kann es erfindungsgemäß vorgesehen sein, dass das Anion [An]ⁿ⁻ der Ionischen Flüssigkeit (IL) ausgewählt ist aus der Gruppe von Dicyanamid ([N(CN)₂]⁻), Nitrat ([NO₃]⁻), Nitrit ([NO₂]⁻), anionischen Metallkomplexen, insbesondere [CuCl₄]²⁻, [PdCl₄]²⁻ oder [AuCl₄]⁻, Acetat ([CH₃COO]⁻), Trifluoracetat ([F₃CCOO]⁻), Tosylat ([C₇H₇SO₃]⁻), Nonafluorbutansulfonat ([C₄F₉SO₃⁻), Tris(pentafluorethyl)trifluorphosphat ([PF₃(C₂F₅)₃]⁻), Tricyanomethid ([C(CN)₃]⁻), Tetracyanoborat ([B(CN)₄]⁻, Thiocyanat ([SCN]⁻), Carboxylat ([R"-COO]⁻), Sulfonat ([R"-SO₃]⁻), Dialkylphosphat ([R"PO₄R''']⁻) oder Bissulfonylimiden [(R"-SO₂)₂N]⁻), wobei R" und R''', unabhängig voneinander, jeweils ein linearer, verzweigter, aliphatischer oder alicyclischer (C₅-C₁₈)-Alkylrest oder ein (C₅-C₁₈)-Arylrest, (C₅-C₁₈)-Aryl-(C₁-C₆)-alkylrest oder (C₁-C₆)-Alkyl-(C₅-C₁₈)-arylrest ist, insbesondere wobei der Rest gegebenenfalls durch Halogenatome oder Sauerstoffatome substituiert ist.

Besonders gute Ergebnisse hinsichtlich der sorptiven Eigenschaften der erfindungsgemäßen Aktivkohle werden zudem erreicht, wenn das Anion [An]ⁿ⁻ der Ionischen Flüssigkeit (IL) ein Halogenidanion, insbesondere Cl⁻, Br⁻, F⁻, I⁻, vorzugsweise Cl⁻, ist und/oder wenn das Anion [An]ⁿ⁻ der Ionischen Flüssigkeit (IL) ein Carbonsäureanion, insbesondere ein Acetatanion, ist.

In erfindungsgemäß bevorzugter Weise ist die Ionische Flüssigkeit (IL) ausgewählt aus der Gruppe von Verbindungen der Formeln (VII) bis (IX)

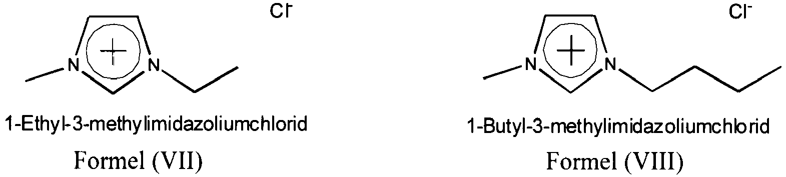

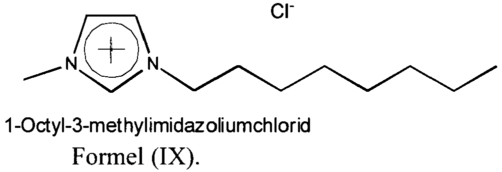

In diesem Zusammenhang hat es sich als besonders vorteilhaft erwiesen, wenn die Ionische Flüssigkeit (IL) eine Verbindung der Formel (VII) ist.

In diesem Zusammenhang haben die Anmelderinnen in völlig überraschender Weise herausgefunden, dass insbesondere unter Verwendung einer Ionischen Flüssigkeit (IL) mit einem Kation in Form eines 1-Ethyl-3-methylimidazoliumkations ([EMIM]⁺), eines 1-Butyl-3-methylimidazoliumkations ([BMIM]⁺) und/oder eines 1-Octyl-3-methylimidazoliumkations ([OMIM]⁺), insbesondere unter Verwendung eines entsprechenden Chloridanions, hervorragende Ergebnisse hinsichtlich der Ausrüstung der erfindungsgemäßen Aktivkohle mit katalytischen bzw. reaktiven Eigenschaften erhalten werden, und zwar in der Reihenfolge [EMIM]⁺, [BMIM]⁺ und [OMIM]⁺, wobei [EMIM]⁺ die besten Ergebnisse liefert, d. h. mit kleiner werdender Kettenlänge des Substituten werden bessere Ergebnisse hinsichtlich der Ausrüstung mit der Metallkomponente erreicht. Ohne sich auf diese Theorie beschränken zu wollen, weisen die oben genannten Kationen, insbesondere unter Verwendung eines korrespondierenden Chloridanions, eine besonders gute Kompatibilität zu der auszurüstenden Aktivkohle auf, so dass eine besonders effektive Imprägnierung des Porensystems der Aktivkohle gewährleistet ist. Hierbei spielen insbesondere die Größe, Ladungsdichte und räumliche Struktur der in Rede stehenden Kationen eine Rolle. Noch weiterführend verbesserte Ergebnisse werden, wie zuvor angeführt, unter Verwendung von [EMIM]⁺ erreicht, welches sozusagen eine weiter optimierte Porengängigkeit aufweist. Zudem ist es bei kleinerer Kationengröße möglich, größere Anteile, insbesondere größere molare Massenanteile des Metalls bzw. der Metallverbindung in der Metallkomponente bzw. der metallhaltigen Ionischen Flüssigkeit (IL) zu realisieren, was den katalytischen bzw. reaktiven Eigenschaften zuträglich ist.

Im Allgemeinen ist es im Rahmen der vorliegenden Erfindung auch möglich, dass die Metallkomponente eine Mischung voneinander verschiedener Ionischer Flüssigkeiten (IL) enthält.

Erfindungsgemäß ist es weiterhin bevorzugt, wenn die Metallkomponente mindestens ein Metall, insbesondere in Form einer Metallverbindung, in mindestens einer Ionischen Flüssigkeit (IL), insbesondere in der Ionischen Flüssigkeit (IL), gelöst und/oder dissoziiert, aufweist. Mit anderen Worten ist es erfindungsgemäß bevorzugt, dass die Ionische Flüssigkeit (IL) gewissermaßen das Trägermedium bzw. das Lösemittel für die Metallverbindung der Metallkomponente darstellt. Dabei liegt, wie zuvor angeführt, die Metallverbindung vorzugsweise zumindest im Wesentlichen vollständig gelöst bzw. dissoziiert in der Ionischen Flüssigkeit (IL) vor, so dass die Metallkomponente insgesamt insbesondere eine kristall-, kristallit- und/oder zumindest im Wesentlichen partikelfreie Flüssigkeit, insbesondere Lösung bzw. Schmelze, darstellt.

Erfindungsgemäß ist es vorgesehen, dass die Metallkomponente und/oder die Ionische Flüssigkeit (IL) mindestens ein Metall, ausgewählt aus der Gruppe von Cu, Ag, Au, Zn, Hg, Sn, Ce, Ti, Zr, V, Nb, Cr, Mo, W, Mn, Fe, Ru, Os, Co, Rh, Ir, Ni, Pd und Pt, insbesondere Zn, Ag, Sn, Ni und Cu, aufweist.

Im Allgemeinen sollte die Metallkomponente und/oder die Ionische Flüssigkeit (IL) mindestens eine in der Ionischen Flüssigkeit (IL) lösbare oder dissoziierbare Metallverbindung, vorzugsweise auf Basis mindestens eines zuvor definierten Metalls, aufweisen. Gleichermaßen sollte die Metallkomponente und/oder die Ionische Flüssigkeit mindestens eine anorganische oder organische Metallverbindung, vorzugsweise auf Basis mindestens eines zuvor definierten Metalls, insbesondere ein Metallsalz oder Metalloxid, vorzugsweise ein Metallsalz, aufweisen.

Der Begriff "lösbar" bzw. "dissoziierbar", wie er in diesem Zusammenhang im Rahmen der vorliegenden Erfindung verwendet wird, ist dabei insbesondere derart zu verstehen, dass bei den gewählten Konzentrationen bzw. Mengen die Metallverbindung zumindest im Wesentlichen vollständig in der Ionischen Flüssigkeit (IL) bzw. Metallkomponente gelöst bzw. dissoziiert vorliegt, so dass diesbezüglich zumindest im Wesentlichen keine Feststoffpartikel bzw. Kristalle und/oder Kristallite in der Metallkomponente vorliegen.

Im Rahmen der vorliegenden Erfindung kann es insbesondere vorgesehen sein, dass die Metallkomponente und/oder die Ionische Flüssigkeit (IL) ein organisches oder anorganisches Metallsalz aufweist, vorzugsweise auf Basis mindestens eines zuvor definierten Metalls. Dabei kann das Metallsalz ausgewählt sein aus der Gruppe von Halogenidsalzen, Sulfaten, Sulfiden, Sulfiten, Nitraten, Nitriten, Phosphaten, Phosphiden, Phosphiten, Carbamaten, Alkohalaten und Carbonsäuresalzen, insbesondere Halogenidsalzen und Carbonsäuresalzen.

Insbesondere kann die Metallkomponente und/oder die Ionische Flüssigkeit (IL) ein Metallhalogenid, vorzugsweise auf Basis mindestens eines zuvor definierten Metalls, insbesondere ein Fluorid, Chlorid, Bromid oder Iodid, vorzugsweise Chlorid, oder ein Carbonsäuresalz eines Metalls, insbesondere Acetat, aufweisen.

Gemäß einer erfindungsgemäß besonders bevorzugten Ausführungsform kann die Metallkomponente und/oder die Ionische Flüssigkeit (IL) eine Metallverbindung, ausgewählt aus der Gruppe von Nickelchlorid, Kupferchlorid, Zinkacetat und Zinnacetat, aufweisen. Beispielsweise hat sich der Einsatz von Kupferverbindungen bzw. Kupfersalzen, insbesondere in Form von Kupferchlorid, beispielsweise für die Sorption von stickstoffhaltigen Gasen, insbesondere Ammoniak (NH₃), als vorteilhaft erwiesen, wobei - ohne sich auf diese Theorie beschränken zu wollen - Ammoniak insbesondere im Sinne einer irreversiblen Gasbindung sorbiert wird. Diesbezüglich entsteht im Rahmen der Chemisorption insbesondere ein Kupfertetraminkomplex ([Cu(NH₃)₄]²⁺), wobei ein Teil des sorbierten Ammoniaks auch über Physisorption gebunden wird. Auch hieraus resultiert eine nur geringe Desorption der sorbierten Verbindungen.

Insbesondere liegt die Ionische Flüssigkeit (IL) zusammen mit dem Metall und/oder der Metallverbindung als Schmelze vor. Gleichermaßen sollten, wie zuvor angeführt, das Metall und/oder die Metallverbindung in der Ionischen Flüssigkeit (IL) zumindest im Wesentlichen kristall- und/oder kristallitfrei vorliegen. Gleichermaßen sollten das Metall und/oder die Metallverbindung in der Ionischen Flüssigkeit (IL) zumindest im Wesentlichen vollständig gelöst, insbesondere zumindest im Wesentlichen vollständig dissoziiert, vorliegen.

Was die Menge an Metall in der Ionischen Flüssigkeit (IL) anbelangt, so kann diese in weiten Bereichen variieren. Erfindungsgemäß ist es jedoch bevorzugt, wenn die Ionische Flüssigkeit (IL) das Metall, insbesondere die Metallverbindung, in Mengen von 0,001 Gew.-% bis 80 Gew.-%, insbesondere 0,01 Gew.-% bis 60 Gew.-%, vorzugsweise 0,1 Gew.-% bis 50 Gew.-%, bezogen auf die Ionische Flüssigkeit (IL) und berechnet als Metall, enthält.

Zudem werden besonders gute Ergebnisse erhalten, wenn die Metallkomponente bzw. die metallhaltige Ionische Flüssigkeit (IL) das Metall, insbesondere in Form der Metallverbindung, in einem molaren Massenanteil im Bereich von 1 % bis 90 %, insbesondere im Bereich von 5 % bis 70 %, vorzugsweise im Bereich von 10 % bis 60 %, bevorzugt im Bereich von 10 % bis 55 %, bezogen auf die Metallkomponente bzw. die metallhaltige Ionische Flüssigkeit (IL) und berechnet als Metall, enthält.

Auch dem Verhältnis von Ionischer Flüssigkeit (IL) einerseits zu dem eingesetzten Metall andererseits kommt hinsichtlich der katalytischen bzw. reaktiven Eigenschaften eine Bedeutung zu. So werden erfindungsgemäß besonders gute Ergebnisse erreicht, wenn das molare Verhältnis von Ionischer Flüssigkeit (IL) zu Metall "[Ionische Flüssigkeit (IL): Metall]" im Bereich von [10 : 0,1] bis [0,1 : 10], insbesondere im Bereich von [1 : 0,5] bis [1 : 3], vorzugsweise im Bereich von [1 : 0,6] bis [1 2], bevorzugt im Bereich von [1 : 1] bis [1 : 1,6], liegt.

Was die oben angeführten Werte hinsichtlich der Menge und des molaren Massenanteils des Metalls bzw. der Metallverbindung bzw. dem molaren Verhältnis von Ionischer Flüssigkeit (IL) zu Metall anbelangt, so sind die entsprechenden Obergrenzen auch im Hinblick auf das Löslichkeitsverhalten des Metalls bzw. der Metallverbindung entsprechend auszuwählen bzw. einzustellen, insbesondere insofern, als in der resultierenden Lösung bzw. Schmelze zumindest im Wesentlichen keine Festkörper bzw. Kristalle bzw. Kristallite des Metalls bzw. der Metallverbindung vorliegen. Dies liegt im üblichen Können des Fachmanns.

Um die Benetzung bzw. Imprägnierung der Aktivkohle mit der Metallkomponente weiterführend zu optimieren, kann es erfindungsgemäß vorgesehen sein, dass das Gemisch, insbesondere die Lösung und/oder Schmelze, der Ionischen Flüssigkeit (IL) und des Metalls, insbesondere der Metallverbindung, bei einer Temperatur T = 20 °C und Atmosphärendruck eine Dichte von 1 g/cm³ bis 2,5 g/cm³, insbesondere 1,2 g/cm³ bis 2 g/cm³, vorzugsweise 1,3 g/cm³ bis 1,9 g/cm³, aufweist. Die Dichte kann insbesondere mit einem Heliumpyknometer bei einer Temperatur von T = 20 °C und Atmosphärendruck bestimmt werden.

Im Rahmen der vorliegenden Erfindung ist es insbesondere vorgesehen, dass die Aktivkohle mit der metallhaltigen Ionischen Flüssigkeit (IL) zumindest teilweise in Kontakt gebracht ist und/oder benetzt und/oder bedeckt, insbesondere imprägniert, ist. Gleichermaßen kann es erfindungsgemäß vorgesehen sein, dass die Oberfläche der Aktivkohle und/oder das Porensystem der Aktivkohle, insbesondere die Mikroporen, Mesoporen und/oder Makroporen, vorzugsweise die Oberfläche der Aktivkohle und das Porensystem der Aktivkohle, zumindest teilweise bzw. in einem definierten Bedeckungs- bzw. Füllgrad mit der metallhaltigen Ionischen Flüssigkeit (IL) in Kontakt gebracht sind und/oder benetzt und/oder bedeckt, insbesondere imprägniert, sind. Durch die Ausrüstung der Aktivkohle mit der Metallkomponente hinsichtlich sowohl der äußeren als auch der inneren Strukturen wird im Ergebnis eine besonders gute katalytische Aktivität bzw. Reaktivität der erfindungsgemäßen Aktivkohle ermöglicht.

In diesem Zusammenhang ist es im Rahmen der vorliegenden Erfindung vorteilhaft, wenn die Aktivkohle die metallhaltige Ionische Flüssigkeit (IL) in Mengen von 1 Vol.-% bis 70 Vol.-%, insbesondere 2 Vol.-% bis 60 Vol.-%, vorzugsweise 3 Vol.-% bis 50 Vol.-%, bevorzugt 5 Vol.-% bis 40 Vol.-%, bezogen auf das Volumen der Aktivkohle, aufweist. Gleichermaßen kann es erfindungsgemäß vorgesehen sein, dass die Aktivkohle die metallhaltige Ionische Flüssigkeit (IL) in Mengen von mindestens 1 Vol.-%, insbesondere mindestens 2 Vol.-%, vorzugsweise mindestens 3 Vol.-%, bevorzugt mindestens 5 Vol.-%, bezogen auf das Volumen der Aktivkohle, aufweist. Neben der zuvor angeführten Untergrenze kommt auch der Obergrenze hinsichtlich der einzusetzenden Mengen an Ionischer Flüssigkeit (IL) eine große Bedeutung zu. So kann es erfindungsgemäß vorgesehen sein, dass die Aktivkohle die metallhaltige Ionische Flüssigkeit (IL) in Mengen von höchstens 70 Vol.-%, insbesondere höchstens 60 Vol.-%, vorzugsweise höchstens 50 Vol.-%, bevorzugt höchstens 40 Vol.-%, bezogen auf das Volumen der Aktivkohle, aufweist.

Hinsichtlich der sorptiven Eigenschaften, insbesondere auf Basis der Kombination von Physisorption und Chemisorption, ist auch der Porenfüllgrad α der Aktivkohle mit der metallhaltigen Ionischen Flüssigkeit (IL) von großer Bedeutung. So ist es erfindungsgemäß bevorzugt, dass die Aktivkohle in Bezug auf die metallhaltige Ionische Flüssigkeit (IL) einen Porenfüllgrad α von 0,05 bis 0,8, vorzugsweise von 0,1 bis 0,6, bevorzugt von 0,15 bis 0,5, aufweist. In diesem Zusammenhang sollte die Aktivkohle in Bezug auf die metallhaltige Ionische Flüssigkeit (IL) einen Porenfüllgrad α von höchstens 0,8, vorzugsweise höchstens 0,6, bevorzugt höchstens 0,5, aufweisen. Gleichermaßen sollte die Aktivkohle nach der Erfindung in Bezug auf die metallhaltige Ionische Flüssigkeit (IL) einen Porenfüllgrad α von mindestens 0,01, insbesondere mindestens 0,05, vorzugsweise mindestens 0,1, bevorzugt mindestens 0,15, aufweisen.

Der Porenfüllgrad α wird dabei gemäß der Formel [α = V_{IL} / (V_{Pore} · m_{Träger})] berechnet. In der vorgenannten Formel bezeichnet "V_{IL}" das Volumen der einzusetzenden Ionischen Flüssigkeit (IL), "m_{Träger}" die Masse der einzusetzenden Aktivkohle und "V_{Pore}" das spezifische (massebezogene) Porenvolumen der Aktivkohle. Mit anderen Worten stellt der Porenfüllgrad α ein Maß für das Inkontaktbringen bzw. Benetzen bzw. Bedecken, insbesondere Imprägnieren, der Aktivkohle mit der Metallkomponente auf Basis der metallhaltigen bzw. Metallionen enthaltenden Ionischen Flüssigkeit (IL) dar, wobei die angeführten Werte relativ zum Gesamtporenvolumen zu verstehen sind. Ein Porenfüllgrad α von 0,2 bedeutet somit, dass 20 % des Porenvolumens mit der Metallkomponente befüllt sind, wobei es sich diesbezüglich - ohne sich hierauf beschränken zu wollen - insbesondere um eine Benetzung der Wandung der jeweiligen Poren mit einer entsprechenden Schicht der Metallkomponente mit der Ionischen Flüssigkeit (IL) und dem Metall bzw. den Metallionen handeln kann. Im Allgemeinen liegt dabei die Schichtdicke der Metallkomponente im Bereich weniger nm. Auf Basis der gezielten Einstellung des Porenfüllgrades α wird gewährleistet, dass ein bestimmter Teil des Porensystems frei vorliegt - d. h. nicht mit der Metallkomponente versehen ist - und somit insbesondere physisorptive Eigenschaften aufweist.

Insbesondere sollte im Rahmen der vorliegenden Erfindung der Porenfüllgrad α derart bemessen sein und/oder die Menge an metallhaltiger Ionischer Flüssigkeit (IL) derart ausgelegt sein, dass 20 % bis 95 %, insbesondere 30 % bis 90 %, vorzugsweise 40 % bis 80 %, des (inneren) Porenvolumens der Aktivkohle nicht mit der metallhaltigen Ionischen Flüssigkeit (IL) gefüllt sind. Mit anderen Worten sollten nach Ausrüstung der Aktivkohle mit der metallhaltigen Ionischen Flüssigkeit (IL) 20 % bis 95 %, insbesondere 30 % bis 90 %, vorzugsweise 40 % bis 80 %, des (inneren) Porenvolumens der Aktivkohle für sorptive, insbesondere physisorptive Prozesse frei zugänglich sein. Auf diese Weise wird gewährleistet, dass neben der Ausrüstung mit der metallhaltigen Ionischen Flüssigkeit (IL) auch noch eine ausreichende Sorptionskapazität durch die Aktivkohle als solche, insbesondere auf Basis einer Physisorption, bereitgestellt wird.

Aufgrund der erfindungsgemäßen Konzeption mit der speziellen Ausrüstung eines Trägersystems mit einer reaktiven bzw. katalytisch aktiven Komponente in Form einer Flüssigkeit kann die erfindungsgemäße Aktivkohle auch als so genanntes SILP-System (*Supported Ionic Liquid Phase*) ausgebildet sein bzw. bezeichnet werden.

Was die im Rahmen der vorliegenden Erfindung zur Ausrüstung mit der Metallkomponente einzusetzenden Aktivkohle anbelangt, so kann diesbezüglich eine Vielzahl unterschiedlicher Aktivkohlen, beispielsweise mit unterschiedlicher Porenstruktur im Hinblick auf die Verteilung von Mikro-, Meso- und Makroporen, eingesetzt werden. Insbesondere können kommerziell erhältliche bzw. handelsübliche Aktivkohlen eingesetzt werden. Im Rahmen der vorliegenden Erfindung zum Einsatz kommende Aktivkohlen werden beispielsweise von der Blücher GmbH, Erkrath, Deutschland oder der AdsorTech GmbH, Premnitz, Deutschland, vertrieben.

Was die erfindungsgemäß eingesetzte Aktivkohle weiterhin anbelangt, so kommt zu diesem Zweck insbesondere eine kornförmige, insbesondere kugelförmige Aktivkohle zum Einsatz.

Die eingesetzte Aktivkohle, insbesondere Kornkohle oder Kugelkohle, ist nach bekannten Verfahren des Standes der Technik erhältlich: Üblicherweise werden zu diesem Zweck korn- bzw. kugelförmig sulfonierte organische Polymere, insbesondere auf Basis von divinylbenzolvernetztem Polystyrol, carbonisiert und anschließend zu der betreffenden Aktivkohle aktiviert. Für weitergehende diesbezügliche Einzelheiten kann beispielsweise auf die Druckschriften DE 43 28 219 A1, DE 43 04 026 A1, DE 196 00 237 A1 sowie EP 1 918 022 A1 bzw. die parallele, zu derselben Patentfamilie gehörende US 7,737,038 B2 verwiesen werden. Gleichermaßen kann auch Aktivkohle auf Basis anderer Ausgangsmaterialien, wie Pech oder dergleichen, zum Einsatz kommen. Dies ist dem Fachmann als solches bekannt.

Die nachfolgend aufgeführten Parameterangaben bezüglich der eingesetzten Aktivkohle werden mit genormten oder explizit angegebenen Bestimmungsverfahren oder mit dem Fachmann an sich geläufigen Bestimmungsmethoden bestimmt. Insbesondere die Parameterangaben betreffend die Charakterisierung der Porosität, der Porengrößenverteilung und anderer Adsorptionseigenschaften ergeben sich im Allgemeinen jeweils aus den betreffenden Stickstoffsorptionsisothermen der betreffenden Aktivkohle bzw. der vermessenen Produkte.

Im Rahmen der vorliegenden Erfindung wird eine Aktivkohle eingesetzt, welche Teilchendurchmesser im Bereich von 0,01 bis 2 mm, insbesondere 0,01 bis 1 mm, bevorzugt 0,05 bis 0,8 mm, vorzugsweise 0,1 bis 0,7 mm, besonders bevorzugt 0,15 bis 0,6 mm, aufweist. Dabei sollten, bezogen auf die Aktivkohle, mindestens 80 Gew.-%, insbesondere mindestens 90 Gew.-%, vorzugsweise mindestens 95 Gew.-% der eingesetzten Aktivkohle Teilchendurchmesser in den vorgenannten Bereichen aufweisen.

Weiterhin ist es erfindungsgemäß vorteilhaft, wenn die Aktivkohle mittlere Partikelgrößen (D50), insbesondere mittlere Teilchendurchmesser (D50), im Bereich von 0,01 bis 1 mm, insbesondere 0,05 bis 0,8 mm, bevorzugt 0,1 bis 0,6 mm, vorzugsweise 0,15 bis 0,5 mm, besonders bevorzugt 0,2 bis 0,4 mm, aufweist.

Die entsprechenden Teilchengrößen bzw. -durchmesser werden auf Basis der Methode nach ASTM D2862-97/04 bestimmt.

Die Aktivkohle nach der Erfindung weist ein Gesamtporenvolumen nach Gurvich im Bereich von 0,4 bis 4 cm³/g, insbesondere 0,5 bis 3,5 cm³/g, vorzugsweise 0,6 bis 3 cm³/g, besonders bevorzugt 0,7 bis 2,5 cm³/g, auf. In diesem Zusammenhang ist es erfindungsgemäß vorgesehen, dass 30 % bis 85 %, insbesondere 30 % bis 80 %, vorzugsweise 40 % bis 75 %, des Gesamtporenvolumens nach Gurvich der Aktivkohle durch Poren mit Porendurchmessern im Bereich von 2 nm bis 50 nm, insbesondere durch Mesoporen, gebildet sind.

Erfindungsgemäß ergeben sich unter Verwendung von Aktivkohle mit hoher Mikro- und Mesoporosität, insbesondere mit hoher Mesoporosität, besonders gute Ergebnisse hinsichtlich der Sorption von zu sorbierenden Gasen, wie insbesondere Schwefelwasserstoff und Ammoniak.

Was die Bestimmung des Gesamtporenvolumens nach Gurvich anbelangt, so handelt es sich um eine dem Fachmann auf diesem Gebiet an sich bekannte Mess-/Bestimmungsmethode. Zu weitergehenden Einzelheiten bezüglich der Bestimmung des Gesamtporenvolumens nach Gurvich kann beispielsweise verwiesen werden auf L. Gurvich (1915), J. Phys. Chem. Soc. Russ. 47, 805, sowie auf S. Lowell et al., Characterization of Porous Solids and Powders: Surface Area Pore Size and Density, Kluwer Academic Publishers, Article Technology Series, Seiten 111 ff.

Im Rahmen der vorliegenden Erfindung ist es gleichermaßen vorteilhaft, wenn die Aktivkohle einen mittleren Porendurchmesser im Bereich von 1 bis 60 nm, insbesondere 1 bis 55 nm, bevorzugt 1,5 bis 50 nm, besonders bevorzugt 2 bis 45 nm, aufweist. Die Bestimmung des mittleren Porendurchmessers erfolgt auf Basis der jeweiligen Stickstoffsorptionsisothermen.

Um die Sorptionseigenschaften der erfindungsgemäßen Aktivkohle zu erhalten, sollte die eingesetzte Aktivkohle eine ausreichend große BET-Oberfläche besitzen. Insbesondere sollte die Aktivkohle eine spezifische BET-Oberfläche im Bereich von 500 m²/g bis 3.500 m²/g, insbesondere 600 bis 3.000 m²/g, vorzugsweise 700 bis 2.750 m²/g, besonders bevorzugt 800 bis 2.500 m²/g, aufweisen.

Die Bestimmung der spezifischen Oberfläche gemäß BET ist dem Fachmann grundsätzlich als solche bekannt, so dass diesbezüglich keine weitergehenden Einzelheiten ausgeführt zu werden brauchen. Alle BET-Oberflächenangaben beziehen sich auf die Bestimmung gemäß ASTM D6556-04. Im Rahmen der vorliegenden Erfindung wird zur Bestimmung der BET-Oberfläche - im Allgemeinen und sofern nachfolgend nicht ausdrücklich abweichend angegeben - die so genannte MultiPoint-BET-Bestimmungsmethode (MP-BET) in einem Partialdruckbereich p/p₀ von 0,05 bis 0,1 angewendet.

In Bezug auf weitergehende Einzelheiten zu der Bestimmung der BET-Oberfläche bzw. zu der BET-Methode kann auf die vorgenannte ASTM D6556-04 sowie auf Römpp Chemielexikon, 10. Auflage, Georg Thieme Verlag, Stuttgart/New York, Stichwort: "BET-Methode", einschließlich der dort referierten Literatur, und auf Winnacker-Küchler (3. Auflage), Band 7, Seiten 93 ff. sowie auf Z. Anal. Chem. 238, Seiten 187 bis 193 (1968), verwiesen werden.

Des Weiteren ist es von Vorteil, wenn die Aktivkohle eine durch Mikroporen gebildete Oberfläche von 400 bis 2.500 m²/g, insbesondere 500 bis 2.300 m²/g, vorzugsweise 600 bis 2.100 m²/g, besonders bevorzugt 700 bis 1.900 m²/g, aufweist.

Die erfindungsgemäß eingesetzte Aktivkohle sollte zudem eine Dichte von 1,1 bis 3,5 g/ml, insbesondere von 1,5 bis 3 g/ml, vorzugsweise von 1,75 bis 2,75 g/ml, bevorzugt von 2 bis 2,5 g/ml, aufweisen.

Gleichermaßen sollte die Aktivkohle eine Schüttdichte von 0,1 bis 1,5 g/ml, insbesondere von 0,15 bis 1 g/ml, vorzugsweise von 0,2 bis 0,8 g/ml, bevorzugt von 0,3 bis 0,6 g/ml, aufweisen.

Zudem ist es von Vorteil, wenn die Aktivkohle eine ausreichende mechanische Belastbarkeit aufweist. Insbesondere weist die Aktivkohle eine Druck- und/oder Berstfestigkeit (Gewichtsbelastbarkeit) pro Aktivkohlekorn, insbesondere pro Aktivkohlekügelchen, von mindestens 10 Newton, insbesondere mindestens 15 Newton, vorzugsweise mindestens 20 Newton, auf. Zudem ist es vorteilhaft, wenn die Aktivkohle eine Druck- und/oder Berstfestigkeit (Gewichtsbelastbarkeit) pro Aktivkohlekorn, insbesondere pro Aktivkohlekügelchen, im Bereich von 10 bis 50 Newton, insbesondere 12 bis 45 Newton, vorzugsweise 15 bis 40 Newton, aufweist.

Gleichermaßen kann es im Rahmen der vorliegenden Erfindung auch vorgesehen sein, dass die Aktivkohle an ihrer Oberfläche modifiziert ist. In diesem Zusammenhang kann die Aktivkohle an ihrer Oberfläche mit hydrophilen Gruppen modifiziert sein. Hierdurch kann die Imprägnierung mit der Metallkomponente weiterführend verbessert werden.

Was die erfindungsgemäße Aktivkohle weiterhin anbelangt, so kann die Aktivkohle selbsttragend sein und/oder in Form einer insbesondere losen Schüttung vorliegen.

Alternativ ist es aber auch möglich, dass die Aktivkohle auf einem Trägermaterial aufgebracht ist.

In diesem Zusammenhang kann das Trägermaterial gasdurchlässig, insbesondere luftdurchlässig ausgebildet sein.

Was in diesem Zusammenhang das Trägermaterial als solches anbelangt, so sollte dieses eine Gasdurchlässigkeit, insbesondere Luftdurchlässigkeit, von mindestens 10 l•m⁻²•s⁻¹, insbesondere mindestens 30 l•m⁻²•s⁻¹, vorzugsweise mindestens 50 l•m⁻²•s⁻¹, besonders bevorzugt mindestens 100 l•m⁻²•s⁻¹, ganz besonders bevorzugt mindestens 500 l•m⁻²•s⁻¹, und/oder eine Gasdurchlässigkeit, insbesondere Luftdurchlässigkeit, von bis zu 10.000 l•m⁻²•s⁻¹, insbesondere bis zu 20.000 l•m⁻²•s⁻¹, bei einem Strömungswiderstand von 127 Pa aufweisen.

Gemäß einer Ausführungsform der vorliegenden Erfindung kann das erfindungsgemäß eingesetzte Trägermaterial eine dreidimensionale Struktur aufweisen. Insbesondere kann das erfindungsgemäß eingesetzte Trägermaterial bei dieser Ausführungsform als vorzugsweise offenporiger Schaumstoff, besonders bevorzugt Polyurethanschaumstoff, ausgebildet sein.

Gemäß einer alternativen Ausführungsform dagegen kann das erfindungsgemäß eingesetzte Trägermaterial eine zweidimensionale und/oder flächige Struktur aufweisen. Insbesondere kann bei dieser Ausführungsform das erfindungsgemäß eingesetzte Trägermaterial als vorzugsweise textiles Flächengebilde ausgebildet sein. Beispielsweise kann das Trägermaterial als ein textiles Flächengebilde, vorzugsweise ein luftdurchlässiges Textilmaterial, bevorzugt ein Gewebe, Gewirke, Gestricke, Gelege oder Textilverbundstoff, insbesondere Vlies (Nonwoven), ausgebildet sein.

Gleichermaßen kann das Trägermaterial ein Flächengewicht von 5 bis 1.000 g/m², insbesondere 10 bis 500 g/m², bevorzugt 25 bis 450 g/m², aufweisen. Zudem kann bei dieser Ausführungsform das Trägermaterial ein natürliche Fasern und/oder synthetische Fasern (Chemiefasern) enthaltendes oder hieraus bestehendes textiles Flächengebilde sein. In diesem Zusammenhang können die natürlichen Fasern aus der Gruppe von Wollfasern und Baumwollfasern (CO) ausgewählt sein. Zudem können die synthetischen Fasern ausgewählt sein aus der Gruppe von Polyestern (PES); Polyolefinen, insbesondere Polyethylen (PE) und/oder Polypropylen (PP); Polyvinylchloriden (CLF); Polyvinylidenchloriden (CLF); Acetaten (CA); Triacetaten (CTA); Polyacryl (PAN); Polyamiden (PA), insbesondere aromatischen, vorzugsweise flammfesten Polyamiden; Polyvinylalkoholen (PVAL); Polyurethanen; Polyvinylestern; (Meth-)Acrylaten; Polymilchsäuren (PLA); Aktivkohle; sowie deren Mischungen.

Üblicherweise ist die Aktivkohle nach der Erfindung an bzw. auf dem Trägermaterial fixiert. Dies kann beispielsweise mittels Verklebung (z. B. mittels eines Klebstoffs) oder infolge von Eigenklebrigkeit oder Eigenadhäsion insbesondere des Trägermaterials realisiert werden.

Die erfindungsgemäße Aktivkohle ist mit einer Vielzahl von Vorteilen verbunden, wie sie bereits zuvor angeführt sind. Aufgrund der herausragenden Sorptionseigenschaften der erfindungsgemäßen Aktivkohle ist ein breites Einsatz- bzw. Verwendungsspektrum möglich, wie es nachfolgend noch im Detail angeführt ist.

Weiterer Gegenstand der vorliegenden Erfindung - gemäß einem **zweiten** Aspekt der vorliegenden Erfindung - ist das erfindungsgemäße Verfahren zur Herstellung einer Aktivkohle mit reaktiver und/oder katalytischer Aktivität, wie sie zuvor definiert worden ist, wobei die Aktivkohle mit mindestens einer Metallkomponente ausgerüstet und/oder ausgestattet wird, wobei die Metallkomponente mindestens eine metallhaltige Ionische Flüssigkeit (IL) umfasst, wobei die Metallkomponente mindestens ein Metall, ausgewählt aus der Gruppe von Cu, Ag, Au, Zn, Hg, Sn, Ce, Ti, Zr, V, Nb, Cr, Mo, W, Mn, Fe, Ru, Os, Co, Rh, Ir, Ni, Pd und Pt, aufweist, und wobei eine Vielzahl von diskreten Aktivkohlepartikeln in Kugel- und/oder Kornform mit der gegebenenfalls verdünnten metallhaltigen Ionischen Flüssigkeit (IL) in Kontakt gebracht, insbesondere benetzt und/oder beschichtet und/oder imprägniert wird, insbesondere wobei nachfolgend gegebenenfalls zur Verdünnung eingesetztes Lösemittel und/oder gegebenenfalls nicht von der Aktivkohle aufgenommene und/oder überschüssige metallhaltige Ionische Flüssigkeit (IL) entfernt und/oder abgetrennt wird;
wobei die Aktivkohle Teilchendurchmesser im Bereich von 0,01 bis 2 mm aufweist, bestimmt nach der Methode nach ASTM D2862-97/04, und wobei die Aktivkohle ein Gesamtporenvolumen nach Gurvich im Bereich von 0,4 bis 4 cm³/g aufweist, wobei 30 % bis 85 % des Gesamtporenvolumens nach Gurvich der Aktivkohle durch Poren mit Porendurchmessern im Bereich von 2 nm bis 50 nm gebildet werden;
wobei die Ionische Flüssigkeit (IL) eine Verbindung der allgemeinen Formel [Kat]ⁿ⁺[An]ⁿ⁻ ist, wobei "Kat" ein Kation bezeichnet und "An" ein Anion bezeichnet und "n" eine ganze Zahl gleich 1 oder 2 bezeichnet, und/oder wobei die Ionische Flüssigkeit (IL) eine Verbindung der allgemeinen Formel [Kat₁]ₓ^{y+}[An₁]_{y}^{x-} ist, wobei "Kat₁" ein Kation bezeichnet und "An₁" ein Anion bezeichnet und wobei "x" und "y", unabhängig voneinander, eine ganze Zahl im Bereich von 1 bis 4 bezeichnen, wobei das Kation [Kat]ⁿ⁺ der Ionischen Flüssigkeit (IL) ein Stickstoff enthaltendes Kation ist, wobei das Stickstoff enthaltende Kation ausgewählt wird aus der Gruppe von quarternären Ammoniumkationen, Imidazoliumkationen, Pyridiniumkationen, Pyrazoliumkationen und Triaziniumkationen, oder wobei das Kation [Kat]ⁿ⁺ der Ionischen Flüssigkeit (IL) ein Phosphor enthaltendes Kation in Form eines Phosphoniumkations ist und wobei das Anion [An]ⁿ⁻ der Ionischen Flüssigkeit (IL) ein organisches oder anorganisches Anion ist; und
wobei die Aktivkohle die metallhaltige Ionische Flüssigkeit (IL) in Mengen von 1 Vol.-% bis 70 Vol.-%, bezogen auf das Volumen der Aktivkohle, aufweist und/oder wobei die Menge an metallhaltiger Ionischer Flüssigkeit (IL) derart ausgelegt wird und/oder der Porenfüllgrad α der Aktivkohle derart bemessen wird, dass 20 % bis 95 % des Porenvolumens der Aktivkohle nicht mit der metallhaltigen Ionischen Flüssigkeit (IL) gefällt werden.

Gleichermaßen betrifft die vorliegende Erfindung gemäß diesem erfindungsgemäßen Aspekt ein Verfahren zur Herstellung einer Aktivkohle mit reaktiver und/oder katalytischer Aktivität, wie sie zuvor definiert worden ist, wobei das Verfahren die folgenden Schritte in der nachstehend spezifizierten Abfolge (a) bis (c) umfasst:
(a) Herstellung und/oder Bereitstellung mindestens einer Metallkomponente auf Basis einer metallhaltigen Ionischen Flüssigkeit (IL), insbesondere in Form einer Lösung und/oder Schmelze, wobei die Metallkomponente mindestens ein Metall, ausgewählt aus der Gruppe von Cu, Ag, Au, Zn, Hg, Sn, Ce, Ti, Zr, V, Nb, Cr, Mo, W, Mn, Fe, Ru, Os, Co, Rh, Ir, Ni, Pd und Pt, aufweist; wobei das mindestens eine Metall, insbesondere in Form von Metallionen, vorzugsweise auf Basis einer Metallverbindung, mit einer Ionischen Flüssigkeit (IL) in Kontakt gebracht, insbesondere in einer Ionischen Flüssigkeit (IL) gelöst wird;
(b) Inkontaktbringen, insbesondere Benetzen und/oder Beschichten und/oder Imprägnieren, der Aktivkohle, insbesondere einer Vielzahl von diskreten Aktivkohlepartikeln, vorzugsweise in Kugel- und/oder Kornform, mit der in Schritt (a) erhaltenen Metallkomponente auf Basis der metallhaltigen Ionischen Flüssigkeit (IL); und
(c) gegebenenfalls Entfernung und/oder Abtrennung von nicht von der Aktivkohle aufgenommener und/oder überschüssiger metallhaltiger Ionischer Flüssigkeit (IL), gegebenenfalls gefolgt von einer Entfernung und/oder Abtrennung des Verdünnungs- und/oder Lösemittels insbesondere in Schritt (c);
wobei die Aktivkohle Teilchendurchmesser im Bereich von 0,01 bis 2 mm aufweist, bestimmt nach der Methode nach ASTM D2862-97/04, und wobei die Aktivkohle ein Gesamtporenvolumen nach Gurvich im Bereich von 0,4 bis 4 cm³/g aufweist, wobei 30 % bis 85 % des Gesamtporenvolumens nach Gurvich der Aktivkohle durch Poren mit Porendurchmessern im Bereich von 2 nm bis 50 nm gebildet werden;
wobei die Ionische Flüssigkeit (IL) eine Verbindung der allgemeinen Formel [Kat]ⁿ⁺[An]ⁿ⁻ ist, wobei "Kat" ein Kation bezeichnet und "An" ein Anion bezeichnet und "n" eine ganze Zahl gleich 1 oder 2 bezeichnet, und/oder wobei die Ionische Flüssigkeit (IL) eine Verbindung der allgemeinen Formel [Kat₁]ₓ^{y+}[An₁]_{y}^{x-} ist, wobei "Kat₁" ein Kation bezeichnet und "An₁" ein Anion bezeichnet und wobei "x" und "y", unabhängig voneinander, eine ganze Zahl im Bereich von 1 bis 4 bezeichnen, wobei das Kation [Kat]ⁿ⁺ der Ionischen Flüssigkeit (IL) ein Stickstoff enthaltendes Kation ist, wobei das Stickstoff enthaltende Kation ausgewählt wird aus der Gruppe von quarternären Ammoniumkationen, Imidazoliumkationen, Pyridiniumkationen, Pyrazoliumkationen und Triaziniumkationen, oder wobei das Kation [Kat]ⁿ⁺ der Ionischen Flüssigkeit (IL) ein Phosphor enthaltendes Kation in Form eines Phosphoniumkations ist und wobei das Anion [An]ⁿ⁻ der Ionischen Flüssigkeit (IL) ein organisches oder anorganisches Anion ist; und
wobei die Aktivkohle die metallhaltige Ionische Flüssigkeit (IL) in Mengen von 1 Vol.-% bis 70 Vol.-%, bezogen auf das Volumen der Aktivkohle, aufweist und/oder wobei die Menge an metallhaltiger Ionischer Flüssigkeit (IL) derart ausgelegt wird und/oder der Porenfüllgrad α der Aktivkohle derart bemessen wird, dass 20 % bis 95 % des Porenvolumens der Aktivkohle nicht mit der metallhaltigen Ionischen Flüssigkeit (IL) gefüllt werden.

Auf Basis des erfindungsgemäßen Verfahrens wird eine effektive Benetzung bzw. Beschichtung und/oder Imprägnierung der Aktivkohle erreicht. Durch das Inkontaktbringen der Aktivkohle mit der Metallkomponente, welche die Ionische Flüssigkeit (IL) enthält, wird dabei gewährleistet, dass die Metallkomponente mit der Ionischen Flüssigkeit (IL) gewissermaßen nicht nur die oberflächlichen Strukturen der Aktivkohle benetzt, sondern auch in das innere Porensystem der Aktivkohle eindringt und dort zu einer definierten Beschichtung bzw. Benetzung bzw. Imprägnierung der Oberflächen der porösen Strukturen, insbesondere von Mikro-, Meso- und/oder Makroporen, führt. Aufgrund der speziellen physikochemischen Eigenschaften der Ionischen Flüssigkeit (IL), insbesondere im Hinblick auf den äußerst niedrigen Dampfdruck, verbleibt die Ionische Flüssigkeit (IL) mit dem Metall bzw. den Metallionen dauerhaft, d. h. insbesondere für den Anwendungszeitraum der erfindungsgemäßen Aktivkohle, in flüssiger Form an und in dem Aktivkohlesystem, so dass sich gewissermaßen ein dauerhafter katalytisch aktiver bzw. reaktiver Flüssigkeitsfilm auf den äußeren und inneren Oberflächen der Aktivkohle ausbildet, und dies ohne die physisorptiven Eigenschaften der Aktivkohle negativ zu beeinträchtigen.

Im Rahmen des erfindungsgemäßen Verfahrens kann es vorgesehen sein, in Schritt (a) derart zu verfahren, dass die Ionische Flüssigkeit (IL) das Metall, insbesondere die Metallverbindung, in Mengen von 0,001 Gew.-% bis 80 Gew.-%, insbesondere 0,01 Gew.-% bis 60 Gew.-%, vorzugsweise 0,1 Gew.-% bis 50 Gew.-%, bezogen auf die Ionische Flüssigkeit (IL) und berechnet als Metall, enthält. In diesem Zusammenhang ist es erfindungsgemäß von Vorteil, wenn in Schritt (a) das molare Verhältnis von Ionischer Flüssigkeit (IL) zu Metall "[Ionische Flüssigkeit (IL): Metall]" im Bereich von [10 : 0,1] bis [0,1 : 10], insbesondere im Bereich von [1 : 0,5] bis [1 : 3], vorzugsweise [1 : 0,6] bis [1 : 2], bevorzugt [1 : 1] bis [1 : 1,6], eingestellt wird.

Was Verfahrensschritt (a) weiterhin anbelangt, so kann diesbezüglich unter Inertgasatmosphäre und/oder unter Eintrag von Scherkräften, insbesondere unter Rühren oder dergleichen, verfahren werden. Insbesondere kann Verfahrensschritt (a) bei Raumtemperatur (T = 20 °C) durchgeführt werden.

Gemäß einer erfindungsgemäßen Ausführungsform kann es zudem vorgesehen sein, dass in Schritt (a) und/oder zwischen Schritt (a) und (b) und/oder zwischen Schritt (b) und (c), vorzugsweise zwischen Schritt (a) und (b), gegebenenfalls ein Verdünnen der metallhaltigen, insbesondere Metallionen enthaltenden Ionischen Flüssigkeit (IL), mit einem Verdünnungs- und/oder Lösemittel erfolgt, gegebenenfalls mit einer nachfolgenden Entfernung und/oder Abtrennung des Verdünnungs- und/oder Lösemittels insbesondere in Schritt (c).

Durch die gegebenenfalls vorgesehene Verdünnung kann die Viskosität der Ionischen Flüssigkeit (IL) gezielt eingestellt werden, um auf diese Weise das Eindringen der Ionischen Flüssigkeit (IL) mit dem Metall bzw. den Metallionen und somit der Metallkomponente in die Porenstruktur der Aktivkohle zu erleichtern bzw. zu erhöhen. Gleichermaßen kann durch die gezielte Auswahl des Verdünnungs- bzw. Lösemittels die Polarität der Ionischen Flüssigkeit (IL) bzw. der resultierenden Mischung mit dem Lösemittel eingestellt werden, um auf diese Weise die Benetzung der Oberfläche der Aktivkohle zu steuern bzw. zu verbessern.

In diesem Zusammenhang kann ein polares und/oder hydrophiles anorganisches oder organisches, vorzugsweise organisches Verdünnungs- und/oder Lösemittel eingesetzt werden. Gleichermaßen kann ein Verdünnungs- und/oder Lösemittel mit einem Siedepunkt (bei Atmosphärendruck) von höchstens 250 °C, insbesondere höchstens 200 °C, vorzugsweise höchstens 150 °C, bevorzugt höchstens 100 °C, eingesetzt werden. Weiterhin kann es erfindungsgemäß vorgesehen sein, dass als Verdünnungs- und/oder Lösemittel ein einwertiger Alkohol, insbesondere Methanol, Ethanol, Butanol und/oder Propanol, vorzugsweise Ethanol, eingesetzt wird. Alternativ kann es im Rahmen der erfindungsgemäßen Verfahrensführung jedoch auch vorgesehen sein, dass das Verdünnungs- und/oder Lösemittel ausgewählt wird aus der Gruppe von Wasser, Chlorkohlenwasserstoffen, insbesondere Dichlormethan, Aldehyden, Ketonen, insbesondere Aceton, und deren Mischungen. Erfindungsgemäß ist es gleichermaßen möglich, dass Mischungen der in Rede stehenden Lösemittel eingesetzt werden. Die diesbezügliche Auswahl der Verdünnungs- bzw. Lösemittel und das Einstellen der Mischungsverhältnisse liegen im üblichen Können des Fachmanns, so dass es diesbezüglich keiner weiteren Ausführungen bedarf.

Im Rahmen der erfindungsgemäßen Verfahrensführung kann zudem das Verdünnungs- und/oder Lösemittel, bezogen auf 1 Volumenteil Ionische Flüssigkeit (IL), in Mengen von 0,1 Volumenteilen bis 20 Volumenteilen, insbesondere 0,2 Volumenteilen bis 15 Volumenteilen, vorzugsweise 0,3 Volumenteilen bis 10 Volumenteilen, bevorzugt 0,5 Volumenteilen bis 10 Volumenteilen, eingesetzt werden.

Was weiterhin Schritt (b) des erfindungsgemäßen Verfahrens anbelangt, so kann in diesem Schritt eine Suspension der Aktivkohle in der metallhaltigen, insbesondere Metallionen enthaltenden Ionischen Flüssigkeit (IL) hergestellt werden. Gleichermaßen kann in Schritt (b) das Inkontaktbringen, insbesondere Benetzen und/oder Beschichten und/oder Imprägnieren, der Aktivkohle in einer Suspension der Aktivkohle in der Ionischen Flüssigkeit (IL) durchgeführt werden.

Erfindungsgemäß kann zudem in Schritt (b) ein Benetzen und/oder Beschichten und/oder Imprägnieren sowohl der äußeren als auch der inneren Oberflächen, insbesondere der Mikro-, Meso- und/oder Makroporen, der Aktivkohle erfolgen.

Im Rahmen der erfindungsgemäßen Verfahrensführung kann es gleichermaßen vorgesehen sein, dass in Schritt (b) das Volumen der einzusetzenden Ionischen Flüssigkeit (V_{IL}) und/oder die Masse der einzusetzenden Aktivkohle (m_{Träger}) und/oder das spezifische (massebezogene) Porenvolumen der Aktivkohle (V_{Pore}) in Abhängigkeit von dem einzustellenden Porenfüllgrad α, insbesondere gemäß der Formel [α = V_{IL} / (V_{Pore} · m_{Träger})], ausgewählt und/oder eingestellt wird bzw. werden. In diesem Zusammenhang ist es erfindungsgemäß vorteilhaft, wenn ein Porenfüllgrad α im Bereich von 0,05 bis 0,8, vorzugsweise von 0,1 bis 0,6, bevorzugt von 0,15 bis 0,5, resultiert.

Was Schritt (b) des erfindungsgemäßen Verfahrens weiterhin anbelangt, so ist es erfindungsgemäß vorteilhaft, wenn in Schritt (b) unter Energieeintrag verfahren wird. Diesbezüglich ist es besonders vorteilhaft, wenn der Energieeintrag mittels Ultraschalleintrag oder dergleichen erfolgt. Der Energieeintrag, insbesondere mittels Ultraschall, führt insbesondere zu einem verbesserten Eindringen der Metallkomponente mit der ionischen Flüssigkeit in das innere Porensystem der Aktivkohle, wobei durch die Stärke bzw. Dauer des Energieeintrags gleichermaßen der Benetzungsgrad bzw. das Porenfüllvolumen α eingestellt bzw. gesteuert werden kann. Weiterhin ist es erfindungsgemäß vorteilhaft, wenn der Energieeintrag, insbesondere der Ultraschalleintrag, gepulst erfolgt, beispielsweise in einem Intervall von t = 0,5 s.

Was weiterhin Schritt (c) des erfindungsgemäßen Verfahrens anbelangt, so kann diesbezüglich unter Erwärmen, insbesondere auf Temperaturen im Bereich von 25 °C bis 90 °C, insbesondere im Bereich von 30 °C bis 75 °C, vorzugsweise im Bereich von 35 °C bis 65 °C, verfahren werden. Gleichermaßen kann in Schritt (c) unter verringertem Druck, insbesondere im Vakuum, verfahren werden.

Beispielsweise kann in Schritt (c) bei einem Druck von P im Bereich von 50 bis 300 mbar, insbesondere 100 bis 200 mbar, verfahren werden. Diesbezüglich kann beispielsweise in einem Rotationsverdampfer oder dergleichen verfahren werden. Weiterhin kann in Schritt (c) des erfindungsgemäßen Verfahrens eine Endtrocknung, insbesondere im Hochvakuum, insbesondere für eine Zeitdauer von 5 bis 20 h, vorzugsweise bei Temperaturen im Bereich von T = 40 °C bis 150 °C, insbesondere 45 °C bis 100 °C, erfolgen. Diesbezüglich kann beispielsweise unter Hochvakuumbedingungen im Ölbad verfahren werden.

Auf Basis des zuvor geschilderten Verfahrens wird somit die erfindungsgemäße Aktivkohle mit den zuvor geschilderten Vorteilen und Eigenschaften erhalten.

Die vorliegende Erfindung betrifft somit auch die Aktivkohle nach der Erfindung, welche mittels des zuvor beschriebenen Verfahrens erhältlich ist.

Wie zuvor angeführt, weist die erfindungsgemäße Aktivkohle ein breites Anwendungsspektrum auf.

Weiterer Gegenstand der vorliegenden Erfindung - gemäß einem **dritten** Aspekt der vorliegenden Erfindung sind somit die erfindungsgemäßen Verwendungen der Aktivkohle nach der Erfindung.

So kann die erfindungsgemäße Aktivkohle zur Herstellung von Schutzmaterialien aller Art, insbesondere von Schutzbekleidung, insbesondere für den zivilen oder militärischen Bereich, wie Schutzanzügen, Schutzhandschuhen, Schutzschuhwerk, Schutzsocken, Kopfschutzbekleidung und dergleichen, und von Schutzabdeckungen aller Art, vorzugsweise alle vorgenannten Schutzmaterialien für den ABC-Einsatz, verwendet werden.

Weiterhin eignet sich die erfindungsgemäße Aktivkohle zur Herstellung von Filtern und Filtermaterialien aller Art, insbesondere zur Entfernung von Schad-, Geruchs- und Giftstoffen aller Art, insbesondere aus Luft- und/oder Gasströmen, wie ABC-Schutzmaskenfiltern, Geruchsfiltern, Flächenfiltern, Luftfiltern, insbesondere Filtern für die Raumluftreinigung, adsorptionsfähigen Trägerstrukturen und Filtern für den medizinischen Bereich. Dabei weist die erfindungsgemäße Aktivkohle ausgezeichnete Sorptionseigenschaften auf, insbesondere in Bezug auf schwefelhaltige bzw. stickstoffhaltige Gase, wie Schwefelwasserstoffe, insbesondere Schwefelwasserstoff (H₂S), sowie gegenüber Ammoniak (NH₃). Gleichermaßen weist die erfindungsgemäße Aktivkohle hervorragende Sorptionseigenschaften insbesondere gegenüber Halogengasen bzw. -dämpfen, wie Chlorgas und/oder Ioddämpfen, auf. Auch gegenüber Halogenwasserstoffen, wie Chlorwasserstoff (HCl), weist die erfindungsgemäße Aktivkohle hervorragende Sorptionseigenschaften auf.

Insbesondere eignet sich die erfindungsgemäße Aktivkohle auch zur Verwendung als Sorptionsspeicher für Gase oder Flüssigkeiten. Zudem kann die erfindungsgemäße Aktivkohle als Katalysator oder Katalysatorträger Verwendung finden. Für die vorgenannten Anwendungen ist die hohe spezifische Oberfläche und die ausgezeichnete Reaktivität bzw. katalytische Aktivität der erfindungsgemäßen Aktivkohle von entscheidender Bedeutung.

Weiterhin findet die erfindungsgemäße Aktivkohle Verwendung für die chemische Katalyse, insbesondere zur Katalyse chemischer Prozesse und Reaktionen, insbesondere Oligomerisations- und Polymerisationsreaktionen, vorzugsweise von Olefinen, wie Ethylen, Propylen, Butylen oder dergleichen, Hydrierungsreaktionen, Oxidationsreaktionen etc. Auch hierbei kommt die hohe Porosität der erfindungsgemäßen Aktivkohle in Kombination mit den ausgezeichneten reaktiven bzw. katalytischen Eigenschaften positiv zum Tragen. Weiterhin ist vorteilhaft, dass die Katalyse auf unpolaren sauerstofffreien Trägern erfolgt, was eine Optimierung des Katalysevorgangs darstellt. Insbesondere kann die erfindungsgemäße Aktivkohle als Katalysator bzw. CoKatalysator oder als Träger für weitere Katalysatoren eingesetzt werden.

Eine weitere Anwendungsmöglichkeit der erfindungsgemäßen Aktivkohle liegt in der Verwendung in oder als Gassensoren oder in Brennstoffzellen.

Darüber hinaus liegt eine weitere Anwendungsmöglichkeit der erfindungsgemäßen Aktivkohle in der Verwendung für sorptive, insbesondere adsorptive Anwendungen, insbesondere als vorzugsweise reaktives und/oder katalytisches Adsorbens.

Darüber hinaus eignet sich die erfindungsgemäße Aktivkohle zur Verwendung für die Gasreinigung und/oder die Gasaufbereitung.

Eine weitere Verwendung der erfindungsgemäßen Aktivkohle ist im Rahmen der Entfernung von Schadstoffen, insbesondere gasförmigen Schadstoffen oder von umweltschädlichen, gesundheitsschädlichen oder toxischen Substanzen oder Gasen zu sehen.

Schließlich eignet sich die erfindungsgemäße Aktivkohle auch für die Verwendung zur Aufbereitung und/oder Bereitstellung von Reinraumatmosphären, insbesondere für die Elektroindustrie, insbesondere für die Halbleiter- oder Chipherstellung. Diesbezüglich sind auch die hervorragenden Eigenschaften der erfindungsgemäßen Aktivkohle im Hinblick auf die Sorption von Halogengasen bzw. -dämpfen von entscheidender Bedeutung. Insbesondere weist die erfindungsgemäße Aktivkohle eine hohe Sorptionsleistung in Bezug auf Ioddämpfe auf, was für die in Rede stehende Anwendung von großer Wichtigkeit ist.

Darüber hinaus betrifft die vorliegende Erfindung - gemäß einem **vierten** Aspekt der vorliegenden Erfindung - Schutzmaterialien, insbesondere für den zivilen oder militärischen Bereich, in Form von Schutzbekleidung, wie Schutzanzüge, Schutzhandschuhe, Schutzschuhwerk, Schutzsocken, Kopfschutzbekleidung und dergleichen, sowie Schutzabdeckungen, vorzugsweise alle vorgenannten Schutzmaterialien für den ABC-Einsatz, welche unter Verwendung einer zuvor definierten Aktivkohle nach der Erfindung hergestellt sind und/oder welche eine zuvor definierte Aktivkohle nach der Erfindung aufweisen.

Darüber hinaus sind weiterer Gegenstand der vorliegenden Erfindung - gemäß einem **fünften** Aspekt der vorliegenden Erfindung - Filter und Filtermaterialien, insbesondere zur Entfernung von Schad-, Geruchs- und Giftstoffen aller Art, insbesondere aus Luft- und/oder Gasströmen, wie ABC-Schutzmaskenfilter, Geruchsfilter, Flächenfilter, Luftfilter, insbesondere Filter für die Raumluftreinigung, adsorptionsfähige Trägerstrukturen und Filter für den medizinischen Bereich, hergestellt unter Verwendung einer zuvor definierten Aktivkohle nach der Erfindung und/oder aufweisend eine zuvor definierte Aktivkohle.

Die erfindungsgemäßen Filter und Filtermaterialien können dabei einen variablen Aufbau aufweisen:

So kann es erfindungsgemäß vorgesehen sein, dass die Aktivkohle selbsttragend ist bzw. in Form einer insbesondere losen Schüttung vorliegt.

Alternativ kann es erfindungsgemäß jedoch auch vorgesehen sein, dass die Aktivkohle auf einem Trägermaterial aufgebracht ist.

In diesem Zusammenhang kann es erfindungsgemäß vorgesehen sein, dass das Trägermaterial gasdurchlässig, insbesondere luftdurchlässig, ausgebildet ist.

In diesem Fall kann es erfindungsgemäß vorgesehen sein, dass das Trägermaterial eine Gasdurchlässigkeit, insbesondere Luftdurchlässigkeit, von mindestens 10 l•m⁻²•s⁻¹, insbesondere mindestens 30 l•m⁻²•s⁻¹ vorzugsweise mindestens 50 l•m⁻²•s⁻¹, besonders bevorzugt mindestens 100 l•m⁻²•s⁻¹, ganz besonders bevorzugt mindestens 500 l•m⁻²•s⁻¹, und/oder eine Gasdurchlässigkeit, insbesondere Luftdurchlässigkeit, von bis zu 10.000 l•m⁻²•s⁻¹, insbesondere bis zu 20.000 l•m⁻²•s⁻¹, bei einem Strömungswiderstand von 127 Pa aufweist.

Zudem kann es in diesem Zusammenhang gleichermaßen im Rahmen der vorliegenden Erfindung vorgesehen sein, dass das Trägermaterial eine dreidimensionale Struktur aufweist. In diesem Zusammenhang kann das Trägermaterial als vorzugsweise offenporiger Schaumstoff, besonders bevorzugt Polyurethanschaumstoff, ausgebildet sein.

Alternativ kann es jedoch auch vorgesehen sein, dass das Trägermaterial eine zweidimensionale und/oder flächige Struktur aufweist. Diesbezüglich kann das Trägermaterial als vorzugsweise textiles Flächengebilde ausgebildet sein.

Im Falle der zweidimensionalen Ausgestaltung des Trägermaterials kann es erfindungsgemäß vorgesehen sein, dass das Trägermaterial als ein textiles Flächengebilde, vorzugsweise ein luftdurchlässiges Textilmaterial, bevorzugt ein Gewebe, Gewirke, Gestricke, Gelege oder Textilverbundstoff, insbesondere Vlies (Nonwoven), ausgebildet ist. Insbesondere kann das Trägermaterial ein Flächengewicht von 5 bis 1.000 g/m², insbesondere 10 bis 500 g/m², bevorzugt 25 bis 450 g/m², aufweisen.

Insbesondere kann im Falle einer zweidimensionalen Ausbildung des Trägermaterials das Trägermaterial ein natürliche Fasern und/oder synthetische Fasern (Chemiefasern) enthaltendes oder hieraus bestehendes textiles Flächengebilde sein. In diesem Zusammenhang können die natürlichen Fasern aus der Gruppe von Wollfasern und Baumwollfasern (CO) ausgewählt sein. Gleichermaßen können die synthetischen Fasern ausgewählt sein aus der Gruppe von Polyestern (PES); Polyolefinen, insbesondere Polyethylen (PE) und/oder Polypropylen (PP); Polyvinylchloriden (CLF); Polyvinylidenchloriden (CLF); Acetaten (CA); Triacetaten (CTA); Polyacryl (PAN); Polyamiden (PA), insbesondere aromatischen, vorzugsweise flammfesten Polyamiden; Polyvinylalkoholen (PVAL); Polyurethanen; Polyvinylestern; (Meth-)Acrylaten; Polymilchsäuren (PLA); Aktivkohle; sowie deren Mischungen.

Im Falle der Verwendung eines Trägermaterials ist es erfindungsgemäß bevorzugt, wenn die Aktivkohle an und/oder auf dem Trägermaterial fixiert ist, vorzugsweise mittels Verklebung, insbesondere mittels eines Klebstoffs oder infolge von Eigenklebrigkeit oder von Eigenadhäsion.

Schließlich betrifft die vorliegende Erfindung - gemäß einem **sechsten** Aspekt der vorliegenden Erfindung - das erfindungsgemäße Verfahren zur Reinigung und/oder Aufbereitung von Gasen, insbesondere zur Entfernung von unerwünschten, insbesondere umweltschädlichen, gesundheitsschädlichen oder toxischen Substanzen oder Gasen aus Gasströmen, dadurch gekennzeichnet, dass der zu reinigende und/oder aufzubereitende Gasstrom mit einer wie zuvor beschriebenen Aktivkohle in Kontakt gebracht wird.

In diesem Zusammenhang kommt das erfindungsgemäße Verfahren insbesondere zur Aufbereitung und oder Bereitstellung von Reinraumatmosphären, insbesondere für die Elektroindustrie, insbesondere für die Halbleiter- oder Chipherstellung, zum Einsatz.

Im Rahmen der vorliegenden Erfindung ist es im Ergebnis erstmals gelungen, eine leistungsfähige Aktivkohle mit einer hervorragenden sorptiven Leistungsfähigkeit auf Basis einer gezielten Kombination von chemisorptiven und physisorptiven Eigenschaften bereitzustellen, welche in gezielter Weise mit einer eine Ionische Flüssigkeit (IL) aufweisenden Metallkomponente ausgerüstet ist. Gleichermaßen wird im Rahmen der vorliegenden Erfindung erstmals ein effizientes Verfahren für die Herstellung solcher Materialien bereitgestellt. Derartige Materialien, welche alle vorgenannten Eigenschaften ineinander vereinigen, sind nach dem Stand der Technik bislang noch nicht hergestellt bzw. beschrieben worden.

Erfindungsgemäß wird eine leistungsfähige Aktivkohle mit reaktiven und katalytischen Eigenschaften bereitgestellt, welche zudem preiswert in ihrer Herstellung ist und ein breitbandiges Adsorptionsspektrum aufweist. Insbesondere kommt ein Einsatz in Einzelfiltern oder Kombinationsfiltern, insbesondere auf Basis von ABEK-Filtern und/oder im Rahmen des ABC-Schutzes in Betracht. Gleichermaßen kann eine Verwendung in Form loser Schüttungen bzw. Mischschüttungen realisiert werden.

Im Rahmen der vorliegenden Erfindung ist es gleichermaßen möglich, dass die erfindungsgemäße Aktivkohle mit der reaktiven bzw. katalytischen Ausrüstung mit mindestens einem weiteren, zusätzlichen Sorptionsmittel bzw. Adsorbens, insbesondere auf Aktivkohlebasis, kombiniert wird, d. h. also die erfindungsgemäße Aktivkohle kann gemeinsam mit einem weiteren Sorptionsmittel bzw. Adsorbens, insbesondere auf Aktivkohlebasis, eingesetzt werden, beispielsweise im Rahmen der Bereitstellung von Sorptionsfiltermaterialien und dergleichen. So kann beispielsweise die erfindungsgemäße Aktivkohle mit einer so genannten und dem Fachmann wohlbekannten ABEK-Aktivkohle kombiniert werden, insbesondere um auf dieser Basis das Sorptionsspektrum zu ergänzen bzw. zu erweitern.

Die reaktive bzw. katalytische Ausrüstung der Aktivkohle mit metallhaltigen, insbesondere Metallionen enthaltenden Ionischen Flüssigkeiten (IL) ermöglicht einen Abbau bzw. eine Neutralisierung chemischer und/oder biologischer Gifte und/oder Schadstoffe sowie unerwünschter bzw. schädlicher oder toxischer Gase. Darüber hinaus kann hierdurch die Ausrüstung der Aktivkohle derart eingestellt werden, dass die resultierende erfindungsgemäße Aktivkohle zudem über eine biostatische und/oder biozide Wirkung, insbesondere eine bakteriostatische oder bakterizide und/oder virustatische oder viruzide und/oder eine fungistatische oder fungizide Wirkung, verfügt.

Im Folgenden wird die vorliegende Erfindung anhand von bevorzugte Ausführungsbeispiele darstellenden Zeichnungen bzw. Figurendarstellungen näher erläutert. Im Zusammenhang mit der Erläuterung dieser bevorzugten Ausführungsbeispiele der vorliegenden Erfindung, welche jedoch in Bezug auf die vorliegende Erfindung keinesfalls beschränkend sind, werden auch weitergehende Vorteile, Eigenschaften, Aspekte und Merkmale der vorliegenden Erfindung beschrieben.

In den Figurendarstellungen zeigt:

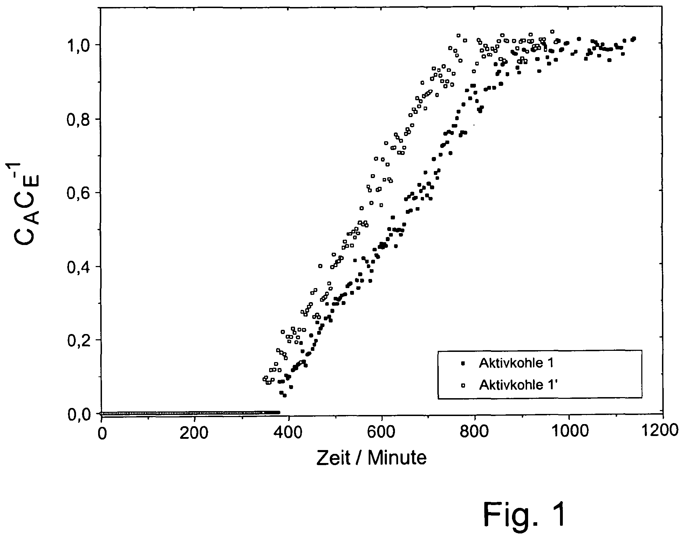

- Fig. 1: eine grafische Darstellung der Durchbruchkurven von Ammoniak (NH₃) auf Basis von Schüttungen einer erfindungsgemäßen Aktivkohle (Aktivkohle 1), welche eine Metallkomponente mit einer metallhaltigen Ionischen Flüssigkeit (IL) aufweist, im Vergleich zu einer nichterfindungsgemäßen Aktivkohle (Aktivkohle 1') mit herkömmlicher Metallsalzimprägnierung;

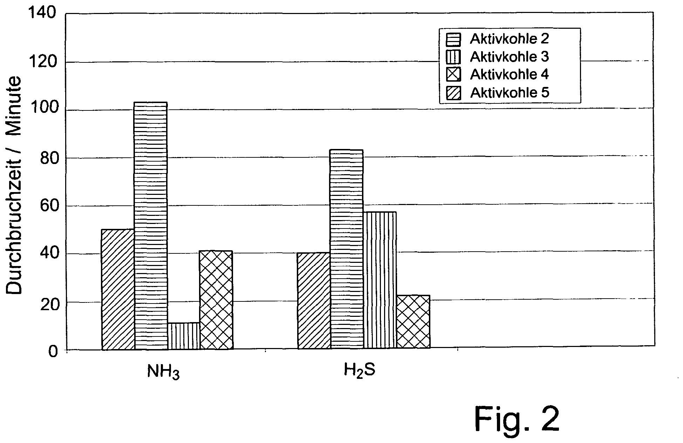

- Fig. 2: grafische Darstellungen mit einem Vergleich der Durchbruchzeiten unter ABEK-Bedingungen für die Gase Ammoniak (NH₃) und Schwefelwasserstoff (H₂S), wobei die erfindungsgemäße Aktivkohle auf Basis einer Metallkomponente mit einer metallhaltigen Ionischen Flüssigkeit (IL) durch die Aktivkohle 2 dargestellt ist; die Aktivkohlen 3 bis 5 stellen nichterfindungsgemäße Aktivkohlen dar;

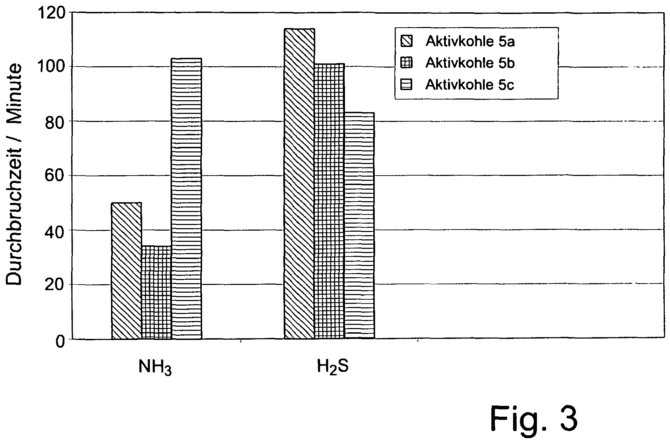

- Fig. 3: grafische Darstellungen mit einem Vergleich der Durchbruchzeiten unter ABEK-Bedingungen für drei erfindungsgemäße Aktivkohlen (Aktivkohlen 5a, 5b und 5c) mit unterschiedlicher Zusammensetzung der Metallkomponente unter Verwendung unterschiedlicher Ionischer Flüssigkeiten (IL), Metallsalze und molarer Verhältnisse zwischen ionischer Flüssigkeit (IL) einerseits und Metallsalz andererseits;

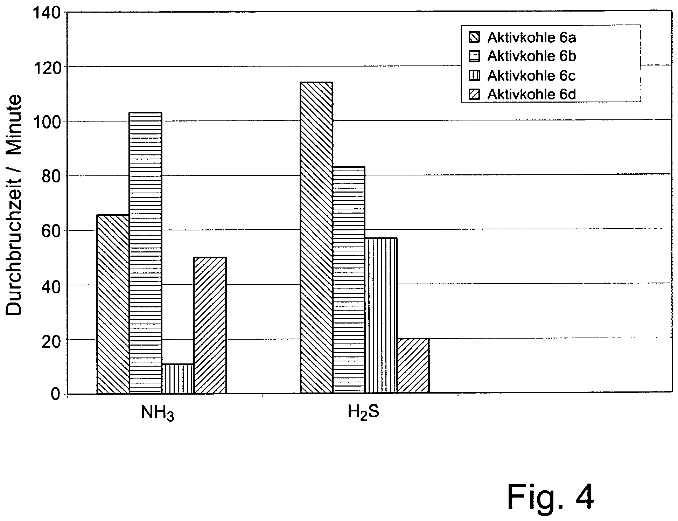

- Fig. 4: grafische Darstellungen und Vergleich der Durchbruchzeiten von erfindungsgemäßen Aktivkohlen (Aktivkohle 6a und Aktivkohle 6b) im Vergleich zu nichterfindungsgemäßen Aktivkohlen (Aktivkohle 6c und Aktivkohle 6d).

Fig. 1 zeigt eine schematische Darstellung und einen Vergleich der Durchbruchkurven von Ammoniak (NH₃) einer erfindungsgemäßen Aktivkohle (Aktivkohle 1) im Vergleich zu einer nichterfindungsgemäßen Aktivkohle (Aktivkohle 1'). Die in Rede stehenden Aktivkohlen wurden jeweils als Schüttungen eingesetzt. Bei der erfindungsgemäßen Aktivkohle wurde eine Metallkomponente eingesetzt, welche als Ionische Flüssigkeit (IL) 1-Ethyl-3-methylimidazoliumchlorid und als Metallverbindung CuCl₂ enthielt. Das molare Verhältnis von Ionischer Flüssigkeit (IL) zur Metallverbindung betrug dabei [1 : 1,3] bei einem Porenfüllgrad α = 0,2. Als Metallkomponente wurde somit in Bezug auf die erfindungsgemäße Aktivkohle [EMIM]Cl-CuCl₂ (1 : 1,3) mit α = 0,2 eingesetzt. Als Aktivkohle wurde eine handelsübliche, von der Blücher GmbH vertriebene Aktivkohle mit hoher Mikro- und Mesoporosität eingesetzt. Als nichterfindungsgemäße Aktivkohle wurde eine Aktivkohle mit identischer Porosität eingesetzt, welche eine herkömmliche CuCl₂-Salzimprägnierung aufwies. Fig. 1 zeigt dabei die deutlich größeren Durchbruchzeiten, die für NH₃ im Falle der erfindungsgemäßen Aktivkohle 1 erhalten werden. Die erfindungsgemäße Aktivkohle zeigt somit eine signifikant verbesserte Leistungsfähigkeit gegenüber Aktivkohlen mit herkömmlicher Imprägnierung auf. Die Durchbruchkurven wurden bei folgenden Parametern bzw. Einstellungen aufgenommen: Gasfeuchte rF = 25 %; Cu-Beladung = 0,001567 mol/g; T_{Adsorber} = 30 °C; P_{Adsorber} = 1,21 bar; h_{Schüttung} = 2 cm; Stickstoff-Volumenstrom = 325,61 ml_{N}/min; NH₃-Volumenstrom = 0,33 ml_{N}/min; NH₃-Detektionsgrenze c = 39 ppm_{V}. Die Ordinate stellt den Quotienten aus Eingangskonzentration und Ausgangskonzentration von Ammoniak dar.

Die Figurendarstellung gemäß Fig. 2 zeigt einen schematischen Vergleich der Durchbruchzeiten der Gase Ammoniak (NH₃) und Schwefelwasserstoff (H₂S) unter ABEK-Bedingungen einer erfindungsgemäßen Aktivkohle (Aktivkohle 2) im Vergleich zu nichterfindungsgemäßen Aktivkohlen (Aktivkohlen 3 bis 5). Bei der erfindungsgemäßen Aktivkohle handelt es sich um eine von der Blücher GmbH vertriebene Aktivkohle mit hoher Mikro- und Mesoporosität, welche mit einer Metallkomponente auf Basis von [EMIM]Cl-CuCl₂ ausgerüstet wurde. Aktivkohle 3 stellt eine Vergleichsaktivkohle mit herkömmlicher Militärimprägnierung, Aktivkohle 4 eine herkömmliche Aktivkohle mit ABEK-Imprägnierung und Aktivkohle 5 eine herkömmliche Aktivkohle mit ABEK-Imprägnierung dar. Das Balkendiagramm veranschaulicht, dass sowohl für Ammoniak (NH₃) als auch für Schwefelwasserstoff (H₂S) in Bezug auf die erfindungsgemäße Aktivkohle deutlich größere Durchbruchzeiten resultieren. Die erfindungsgemäße Aktivkohle verfügt somit über sehr gute Sorptionsleistungen insbesondere in Bezug auf NH₃ und H₂S.

Die entsprechenden Werte wurden bei folgenden Parametern bzw. Einstellungen ermittelt: a) Durchbruchmessungen für NH₃: Gasfeuchte rF = 85 ± 5 %; T_{Adsorber} = 30 °C; h_{Schüttung} = 2 cm; Probenmenge: ca. 2 g; NH₃-Detektionsgrenze c = 39 ppm_{V}; C_{NH3} = 1.000 ppm NH₃ (N₂); b) Durchbruchmessungen für H₂S: Gasfeuchte rF = 70 %; T_{Adsorber} 20 °C; h_{Schüllung} 2 cm; d_{Schuttung} = 50 mm; C_{H2S} = 1.000 ppm H₂S; H₂S-Strömungsgeschwindigkeit = 0,1 m/s; H₂S-Durchbruch = 10 ppm. Die zuvor angeführten Parameter wurden auch in den Ausführungsbeispielen bzw. Versuchen gemäß den Fig. 3 und Fig. 4 eingestellt.

Die Figurendarstellung gemäß Fig. 3 wiederum zeigt einen Vergleich der Durchbruchzeiten von drei verschiedenen erfindungsgemäßen Aktivkohlen in Bezug auf die Sorption von Ammoniak (NH₃) und Schwefelwasserstoff (H₂S). Bei der erfindungsgemäßen Aktivkohle 5a handelt es sich um eine von der Blücher GmbH vertriebene Aktivkohle mit hoher Mikro- und Mesoporosität, welche mit einer Metallkomponente auf Basis von 1-Ethyl-3-methyl-imidazoliumacetat als Ionische Flüssigkeit (IL) und Zinkacetat als Metallverbindung bzw. Metallsalz ausgerüstet wurde. Die vorgenannten Komponenten wurden in einem molaren Verhältnis von [1:1] eingesetzt. Der Porenfüllgrad α betrug dabei 0,2 ([EMIM]Ac-ZnAc₂ (1 : 1 molar) mit α = 0,2). Bei der erfindungsgemäßen Aktivkohle 5b handelte es sich gleichermaßen um eine von der Blücher GmbH vertriebene Aktivkohle mit hoher Mikro- und Mesoporosität, welche als Metallkomponente gleichermaßen 1-Ethyl-3-methyl-imidazoliumacetat enthielt. Der Porenfüllgrad α betrug gleichermaßen 0,2. Als Metallverbindung bzw. Metallsalz wurde Zinnacetat in einem molaren Verhältnis von [1 : 1] eingesetzt ([EMIM]Ac-SnAc₂ (1 : 1 molar) mit α = 0,2). In Bezug auf Aktivkohle 5 wurde gleichermaßen eine von der Blücher GmbH vertriebene Aktivkohle mit hoher Mikro- und Mesoporosität eingesetzt. Die Metallkomponente basierte dabei auf 1-Ethyl-3-methylimidazoliumchlorid als Ionische Flüssigkeit (IL) und Kupferchlorid (CuCl₂) als Metallverbindung bzw. Metallsalz. Das molare Verhältnis betrug dabei [1 : 1,3]. Auch in Bezug auf Aktivkohle 5c wurde der Porenfüllgrad α auf 0,2 eingestellt ([EMIM]Cl-CuCl₂ (1 : 1,3) mit α = 0,2). Sämtliche erfindungsgemäße Aktivkohlen zeigen deutlich über die standardisierten Anforderungen hinausgehende Sorptionsleistungen sowohl in Bezug auf Ammoniak (NH₃) als auch in Bezug auf Schwefelwasserstoff (H₂S). In Bezug auf NH₃ werden besonders gute Ergebnisse unter Einsatz von Aktivkohle 5c erreicht, während hinsichtlich der Sorption von H₂S die erfindungsgemäße Aktivkohle 5a die besten Ergebnisse liefert. Insgesamt ist das Sorptionsverhalten sämtlicher erfindungsgemäßer Aktivkohlen als hervorragend einzustufen.

Schließlich zeigt die Figurendarstellung gemäß Fig. 4 eine grafische Darstellung mit einem Vergleich der Durchbruchzeiten gegenüber Ammoniak (NH₃) bzw. Schwefelwasserstoff (H₂S) von erfindungsgemäßen Aktivkohlen 6a und 6b im Vergleich zu nichterfindungsgemäßen Aktivkohlen 6c und 6d. Bei der erfindungsgemäßen Aktivkohle 6a kam in Bezug auf die Metallkomponente als Ionische Flüssigkeit (IL) 1-Ethyl-3-methylimidazoliumacetat und als Metallverbindung bzw. Metallsalz Zinkacetat zur Verwendung ([EMIM]Ac-ZnAc₂). Bei der erfindungsgemäßen Aktivkohle 6b wurde hinsichtlich der Metallkomponente als Ionische Flüssigkeit 1-Ethyl-3-methylimidazoliumchlo-rid und als Metallverbindung bzw. Metallsalz Kupferchlorid (CuCl₂) eingesetzt ([EMIM]Cl-CuCl₂). Bei der nichterfindungsgemäßen Aktivkohle 6c handelte es sich um eine Aktivkohle mit Militärimprägnierung, und bei der nichterfindungsgemäßen Aktivkohle 6d handelte es sich um eine ABEK-Aktivkohle. Fig. 4 veranschaulicht, dass sowohl die erfindungsgemäße Aktivkohle 6a als auch die erfindungsgemäße Aktivkohle 6b gegenüber den Aktivkohlen des Standes der Technik deutlich bessere Sorptionseigenschaften sowohl in Bezug auf Ammoniak (NH₃) als auch in Bezug auf Schwefelwasserstoff (H₂S) aufweisen, was sich in signifikant größeren Durchbruchzeiten äußert.

Die angeführten Untersuchungen belegen im Ergebnis die hervorragenden sorptiven Eigenschaften der erfindungsgemäßen Aktivkohle insbesondere auch im Hinblick auf eine große Bandbreite der zu sorbierenden Substanzen bzw. Schadgase.

Die voranstehend erläuterten Figurendarstellungen werden auch im Rahmen der erfindungsgemäßen Ausführungsbeispiele nochmals weiterführend erläutert.

Weitere Ausgestaltungen, Abwandlungen, Variationen, Modifikationen, Besonderheiten und Vorteile der vorliegenden Erfindung sind für den Fachmann beim Lesen der Beschreibung ohne Weiteres erkennbar und realisierbar, ohne dass er dabei den Rahmen der vorliegenden Erfindung verlässt.

Die vorliegende Erfindung wird anhand der nachfolgenden Ausführungsbeispiele veranschaulicht, welche die vorliegende Erfindung jedoch keinesfalls beschränken sollen.

### AUSFÜHRUNGSBEISPIELE:

### 1. Herstellung der erfindungsgemäß ausgerüsteten Aktivkohle

### a) Herstellung der Metallkomponente auf Basis einer Ionischen Flüssigkeit (IL) und einer Metallverbindung

### Synthese der Chlorometallat/Ionische Flüssigkeit (IL)-Schmelzen

Sämtliche Synthesen der Metallkomponente (= Chlorometallat/Ionische Flüssigkeit (IL)) erfolgten unter Inertgasatmosphäre.

Für die Herstellung der verwendeten Metallkomponenten, insbesondere auf Basis von Chlorometallat/Ionische Flüssigkeit (IL)-Schmelzen, wurden zunächst die einzuwiegenden Massen der jeweiligen Ionischen Flüssigkeit (IL) und von Kupfer(II)-chlorid (CuCl₂) berechnet.

Dann wurde die entsprechende Menge Ionischer Flüssigkeit (IL) in einen trockenen Schlenkkolben eingebracht.

Die Strukturformeln der in diesem Zusammenhang eingesetzten Ionischen Flüssigkeiten (IL), nämlich 1-Ethyl-3-methylimidazoliumchlorid ([EMIM]Cl), 1-Butyl-3-methylimidazoliumchlorid ([BMIM]Cl) und 1-Octyl-3-methyl-imidazoliumchlorid ([OMIM]Cl), sind in der nachfolgenden Abbildung gezeigt.

Anschließend wurde derjenige molare Anteil von CuCl₂ eingewogen, welcher zur Herstellung des jeweiligen molaren Verhältnisses von Ionischer Flüssigkeit (IL) zu CuCl₂ berechnet wurde.

Die Schmelze wurde dann in einem Schlenkkolben für 24 h unter Inertgasatmosphäre bei T = 100 °C im Ölbad und einer Rührerdrehzahl von 300 min⁻¹ gerührt.

Danach erfolgte die Trocknung unter Hochvakuum über Nacht.

Die nachfolgende Abbildung zeigt die im Rahmen der Ausführungsbeispiele verwendeten Ionischen Flüssigkeiten zur Herstellung der Chlorometallat/Ionische Flüssigkeit (IL)-Schmelzen:

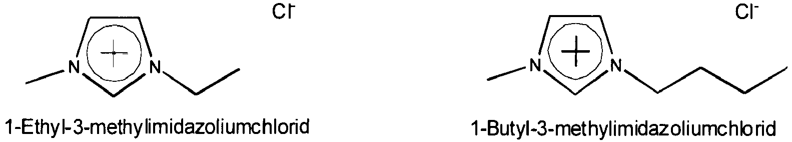

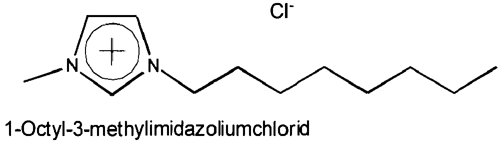

Die nachfolgende Tabelle 1 zeigt die Auflistung der synthetisierten Schmelzen und deren molare Stoffmengenzusammensetzungen.

**Tabelle 1: Synthetisierte Chlorometallat/Ionische Flüssigkeit (IL)-Schmelzen**

| Ionische Flüssigkeit (IL) | molares Verhältnis [Ionische Flüssigkeit (IL) : CuCl₂] |
|---|---|
| [EMIM]Cl | [1:1]; [1:1,3] |
| [BMIM]Cl | [1:1] |
| [OMIM]Cl | [1:1]; [1:1,3]; [1:1,6] |

Zur Berechnung der einzusetzenden Volumina der Ionischen Flüssigkeit (IL) für die anschließende Herstellung der erfindungsgemäß ausgerüsteten Aktivkohle wurden die Dichten der hergestellten Schmelzen in einem Heliumpyknometer (Pycnomatic ATC der Fa. Thermo Scientific) vermessen.

Die Dichten der Schmelzen sind in der nachfolgend angeführten Tabelle 2 aufgelistet.

**Tabelle 2: Ergebnisse der Dichtemessungen im Heliumpyknometer bei T = 20 °C**

| Schmelze | Dichte / g cm⁻³ |
|---|---|
| [EMIM]Cl - CuCl₂ [1:1] | 1,8137 |
| [EMIM]Cl - CuCl₂ [1:1,3] | 1,8090 |
| [BMIM]Cl- CuCl₂ [1:1] | 1,5846 |
| [OMIM]Cl - CuCl₂ [1:1] | 1,3050 |
| [OMIM]Cl- CuCl₂ [1:1,3] | 1,5085 |
| [OMIM]Cl - CuCl₂ [1:1,6] | 1,6607 |

### b) Ausrüstung der Aktivkohle mit der Metallkomponente auf Basis einer Ionischen Flüssigkeit (IL) und einer Metallverbindung

### Präparation der erfindungsgemäß ausgerüsteten Aktivkohle / Herstellung unter Ultraschalleintrag:

Als Trägermaterial wurde für die Herstellung der erfindungsgemäßen Aktivkohle eine mikro-/mesoporöse Aktivkohle oder eine mesoporöse Aktivkohle verwendet. Die erfindungsgemäß eingesetzten Aktivkohlen sind unter der Artikelbezeichnung 101408 (mikro-/mesoporöse Aktivkohle) bzw. 101412 (mesoporöse Aktivkohle) von der Fa. Blücher GmbH, Erkrath (Deutschland) erhältlich.

Die Imprägnierung der Aktivkohleadsorbentien mit den Chlorometallat/Ionische Flüssigkeit (IL)-Schmelzen erfolgte unter Ultraschalleintrag. Durch den instationären bzw. diskontinuierlichen Energieeintrag der Ultraschallsonotrode konnte eine verbesserte Verteilung der Metallkomponente in die feinen Porenstrukturen des Aktivkohleträgers gewährleistet werden.

Zur Herstellung der erfindungsgemäßen Aktivkohle wurde dabei zunächst die entsprechende Menge an Metallkomponente berechnet, die zur Einstellung eines bestimmten Porenfüllgrades α auf einer definierten Menge des Aktivkohleadsorbens erforderlich ist. Der Porenfüllgrad α wurde dabei gemäß der Formel [α = V_{IL} / (V_{Pore} · m_{Träger})] berechnet. In der vorgenannten Formel bezeichnet "V_{IL}" das Volumen der eingesetzten Ionischen Flüssigkeit (IL), "m_{Trager}" die Masse der einzusetzenden Aktivkohle und "V_{Pore}" das spezifische (massebezogene) Porenvolumen der Aktivkohle.

Die jeweilige Metallkomponente auf Basis der Chlorometallat/Ionische Flüssigkeit (IL)-Schmelze wurde zunächst in einen trockenen Schlenkkolben eingewogen und in Ethanol (absolut) gelöst bzw. verdünnt. Der Lösungsvorgang erfolgte durch Rühren auf einem Magnetrührer bei einer Rührgeschwindigkeit von v_{Rührer} = 200 min⁻¹ unter Inertgasatmosphäre. Die Dauer dieses Vorgangs lag zwischen t = 10 min und mehreren Stunden und war abhängig von der zu lösenden Metallkomponente. Daraufhin wurde die zuvor berechnete Menge an Aktivkohleadsorbens in die Lösung gegeben. Das Gemisch wurde weitere 15 Minuten gerührt und anschließend für 2 h in ein Wasserbad mit eingetauchter Ultraschallsonotrode eingesetzt.

In diesem Zusammenhang wurde zur ultraschallunterstützten Herstellung der erfindungsgemäßen Aktivkohle eine Apparatur eingesetzt, welche ein Wasserbad, einen Syntheseschlenkkolben und eine Ultraschallsonotrode (UP200S (200 W, 24 kHz) der Fa. Hielscher) aufwies. In das Wasserbad wurden der mit dem Syntheseansatz befüllte Schlenkkolben und die Ultraschallsonotrode eingetaucht. Von der Ultraschallsonotrode wurden in einem Intervall von t = 0,5 s Ultraschallstöße mit einer Einstellung von 50 % Amplitude ausgesendet.

Nach der Imprägnierung des Aktivkohleträgers erfolgte die Abtrennung des Lösungsmittels Ethanol in einem Rotationsverdampfer bei T = 40 °C und p = 175 mbar, und die anschließende Endtrocknung erfolgte unter Hochvakuum im Ölbad bei T = 60 °C über Nacht.

### 2. Herstellung nichterfindungsgemäßer Aktivkohle auf Basis einer herkömmlichen CuCl₂-Salzausrüstung

Neben den erfindungsgemäß ausgerüsteten Aktivkohlen wurden auch Imprägnierungen der Aktivkohleträger mit reinem CuCl₂-Salz hergestellt. Die Präparation wurde analog zu der soeben beschriebenen Herstellung der erfindungsgemäßen Aktivkohle durchgeführt. Der einzuwiegende Anteil von CuCl₂ wurde auf den äquivalenten Kupfer-Metallanteil des hierzu herangezogenen Systems AK (mikro/meso) + [EMIM]Cl-CuCl₂ (1:1,3) α = 0,2 pro Gramm AK bezogen (AK = Aktivkohle) (entsprechend 0,001567 mol g⁻¹ Cu auf Aktivkohleträger).

In den nachfolgend angeführten Tabellen 8 und 9 sind sämtliche mit Ultraschallunterstützung hergestellten erfindungsgemäßen Aktivkohlen und CuCl₂-imprägnierten Aktivkohleadsorbentien (Vergleich) zusammengefasst.

### 3. Anlagenaufbau und Messung von Durchbruchkurven in der Anlage zur kontinuierlichen Adsorption von Schadgasen

Zunächst wurden die Durchbruchkurven von Ammoniak mit erfindungsgemäßen Aktivkohlesystemen in einer Anlage zur kontinuierlichen Ammoniakadsorption mit variabel befeuchtbarem Trägergasstrom vermessen. Die eingestellten Betriebsparameter der Anlage geben möglichst realitätsnah die Umgebungsbedingungen für einen möglichen Einsatz der erfindungsgemäßen Aktivkohle in Atemschutzmasken wieder.

Die Betriebsparameter sowie der Anlagenaufbau und die Versuchsdurchführung für die kontinuierliche Gasadsorption werden im Folgenden näher betrachtet:

### a) Aufbau der Anlage zur kontinuierlichen Ammoniakadsorption

Die Anlage zur kontinuierlichen Ammoniakadsorption mit einem variabel befeuchtbaren Gasstrom, insbesondere der Anlagenaufbau für die irreversible Ammoniakadsorption aus einem variabel befeuchtbaren Stickstoffstrom, wies Massendurchflussmesser bzw. Massendurchflusskontrolleinrichtungen (*Mass Flow Controller* bzw. MFC) jeweils (1) für NH₃ und (2) für N₂; (3) eine Gassättigungseinheit; (4) ein Thermostat; (5) eine Feuchtemesseinheit (rHI-TI-1 bzw. HND-FF31 der Fa. Huber); (6) einen Bypass und (7) Adsorber auf.

Mittels der *Mass Flow Controller* (MFCs) (1) und (2) konnte eine definierte Konzentration von 1000 ppm_{V} Ammoniak (NH₃) in einem Stickstoffträgergasstrom eingestellt werden. Das Gasgemisch wurde durch variable Ventilstellungen wahlweise trocken oder befeuchtet durch die Anlage geleitet. Zur Befeuchtung des Gasgemisches wurde der Stickstoffstrom in die Sättigungseinheit (3) geleitet. Der Gassättiger beruht auf dem Prinzip einer herkömmlichen Gaswaschflasche, ist jedoch doppelwandig ausgeführt. Dies ermöglicht die Temperierung der inneren Wassersäule, durch die der Stickstoff strömt, mittels eines Thermostat- bzw. Kryostatkreislaufs. Zur Einstellung geringer Gasfeuchten wurden niedrige Wassertemperaturen benötigt. Diese wurden durch den Einsatz eines Thermo-/Kryostaten (Ecoline Staredition RE 106 der Fa. Lauda) erreicht. Je nach eingestellter Temperatur wird ein gewisser Anteil des bidestillierten Wassers in die Gasphase überführt und vom Stickstoffstrom mitgeführt. Auf diese Weise erfolgte die Einstellung der gewünschten relativen Feuchte des Gasstroms, die in einem Reservoir (5) mit dem Feuchtigkeitssensor bzw. der Feuchtemesseinheit detektiert wurde. Nach der Zumischung des Ammoniaks konnte das Gasgemisch variabel durch die Bypassschaltung (6) am Adsorber (7) vorbeigeführt oder bei Versuchsbeginn durch den Adsorber (7) geleitet werden. Daraufhin wurde der Gasstrom in die nachgeschaltete Analytik geleitet. Diese ist im Abschnitt Analytik näher beschrieben.

Die eingestellten Betriebsparameter für die kontinuierliche Gasadsorption blieben zur Simulierung der Umgebungsbedingungen in Atemschutzmasken stets gleich. Zur besseren Übersicht sind diese in der nachfolgenden Tabelle 3 aufgelistet.

**Tabelle 3: Betriebsparameter der Anlage zur kontinuierlichen Gasadsorption von Ammoniak**

| | |
|---|---|
| Volumenstrom N₂ / ml_{N} min⁻¹ | 325,61 |
| Volumenstrom NH₃ / ml_{N} min⁻¹ | 0,33 |
| Anströmgeschwindigkeit Schüttung / cm s⁻¹ | 2 |
| Schütthöhe / cm | 2 |
| Durchmesser Schüttung / cm | 1,8 |
| Anlagendruck / bar | 1,21 |

Die Temperatur bei der Versuchsdurchführung betrug im Allgemeinen 30 °C, wobei zu der Durchführung der Reversibilitätsversuche eine Erhöhung auf T = 85 °C erfolgte.

Im Zuge der Optimierung der erfindungsgemäßen Aktivkohle insbesondere für die Ammoniakadsorption wurde die relative Gasfeuchte von rF = 0 % bis rF = 85 % variiert. Die Berechnung der relativen Feuchten bei Adsorberbedingungen (p = 1,21 bar; T = 30 °C) wurden mittels der Clausius-Clapeyron-Gleichung durchgeführt. Die Temperatur im Inneren des Sättigers wurde mittels Temperatursensor gemessen.

Die eingestellten Temperaturen am Thermo-/Kryostaten, die für die Einstellung der relativen Gasfeuchte benötigt wurden, sind in der sich anschließenden Tabelle 4 dargestellt.

**Tabelle 4: Einstellung der Temperatur am Thermostat / Kryostat bezüglich der Variation der relativen Feuchte**

| Temperatur Thermostat / Kryostat / °C | Relative Feuchte / % |
|---|---|
| 13,0 | 25 |
| 21,9 | 50 |
| 27,5 | 70 |
| 33,0 | 85 |

### b) Versuchsdurchführung zur Messung der kontinuierlichen Ammoniakadsorption

Zunächst wurde die Anlage über den Bypass mit trockenem N₂-Gasstrom gespült. Währenddessen erfolgte die Befüllung des Adsorbers mit der zu vermessenden Schüttung der Aktivkohle. Damit die Adsorberschicht als Packung vorliegt, wurde die Schüttung der Aktivkohle zwischen zwei dünnen Glaswolleschichten auf die Metallfritte im Reaktor aufgebracht. Daraufhin wurde die Schüttung durch Einstellung von an vorgegebenen Positionen der eingesetzten Apparatur befindlichen Ventilen mit dem trockenen Stickstoffstrom gespült, bis keine Lösungsmittelreste mehr detektierbar waren.

Danach erfolgte die erneute Umschaltung der Ventile auf Bypassstellung zur Einstellung stationärer Versuchsbedingungen. Dabei wurde bei feuchter Vermessung das Trägergas Stickstoff mit einem Volumenstrom von 325,61 ml_{N} min⁻¹ durch die Sättigereinheit geleitet und, wie bereits beschrieben, befeuchtet. Weiterhin wurde der MFC zur Dosierung von NH₃ auf einen Volumenstrom von 0,33 ml_{N} min⁻¹ eingestellt. Nach der Vermischung beider Gaskomponenten betrug die Ammoniakkonzentration in der Bypassströmung 1000 ppm_{V}.

Sobald die stationären Betriebsbedingungen eingestellt waren, wurde das Gasgemisch durch Umstellen der Ventile mit einer Anströmgeschwindigkeit der Schüttung von v = 2 cm s⁻¹ durch den Adsorber geleitet. Nach der Detektion der Durchbruchkurve wurde der Ammoniakgasstrom abgeschaltet. Zudem wurde die Schüttung der Aktivkohle mit einem trockenen Stickstoffstrom gespült. Nach der Spülung des Adsorbers wurde wieder auf Bypass geschaltet und dieser mit trockenem Stickstoff gespült. Anschließend konnte der Adsorber entleert und neu befüllt werden.

### c) Reversibilitätsversuche

Bei der Durchführung von Reversibilitätsversuchen wurde nach Erreichen der Sättigungskonzentration die Ammoniakzufuhr beendet und die Adsorbertemperatur erhöht. Zur Überprüfung der reversiblen Ammoniakadsorption in der Schüttung wurde der Adsorber auf einen Istwert von etwa T_{Adsorber} = 85 °C aufgeheizt. Der Reversibilitätsversuch endete, sobald im aus der Schüttung strömenden Gasstrom kein Ammoniak mehr detektierbar war. Die weiteren Schritte zur Spülung des Reaktors und des Bypasses erfolgten wie bereits beschrieben.

### Analytik

### Dichtemessungen:

Die Dichtemessungen der Metallkomponente (metallhaltige Ionische Flüssigkeit (IL)) bei T = 20 °C wurden unter Heliumatmosphäre im Pyknometer Pycnomatic ATC der Fa. Thermo Scientific durchgeführt.

### Online Ammoniak - Detektion:

Zur Ermittlung der Durchbruchkurven von Ammoniak wurde die kontinuierliche Messung der aus dem Adsorber austretenden Gaskomponenten mit einem Gaschromatographen (CP-3800 der Fa. Varian) vorgenommen. Die Trennung der Gaskomponenten erfolgte in einer Kapillarsäule (Typ WCOT Fused silica (60 m x 0,32mm) CP-Volamine der Fa. Varian). Die Nachweisgrenze der Ammoniakkonzentration betrug 39 ppm_{V}.

### Thermogravimetrische - Analysen:

Die thermogravimetrischen Messungen wurden mit dem Gerät Setsys-1750 CS Evolution der Fa. Setaram Instrumentation KEP Technologies durchgeführt. Die Proben wurden über den Temperaturbereich von T = 30 °C bis T = 950 °C aufgeheizt. Weiterhin wurden Langzeitversuche mit Aktivkohlen für t = 10 h bei T = 100 °C beziehungsweise 200 °C durchgeführt. Die Zersetzungstemperaturen der eingesetzten Metallkomponenten lagen dabei bei über 200 °C. Auch zeigten sie sehr hohe thermische Langzeitstabilitäten bei den vermessenen Temperaturen.

### Sorptionsmessungen:

Die Bestimmung der BET-Oberflächen und Porenvolumina der Aktivkohlen wurde in der Anlage Quadrasorb SI (*Automated Surface Area & Pore Size Analyzer*) der Fa. Quantachrome Instruments realisiert.

### Spezifikationen der verwendeten Aktivkohleadsorbentien, Chemikalien und Geräte:

**Tabelle 5: Spezifikationen der verwendeten Aktivkohleadsorbentien der Fa. Blücher**

| Messgröße | meso | meso / mikro |
|---|---|---|
| ρ / gml⁻¹ | 2,30797 | 2,22126 |
| ρ_{Schüttung} / g ml⁻¹ | 0,411 | 0,412 |
| S_{BET} / m² g⁻¹ | 1698,51 | 2004,96 |
| V_{P} / cm³ g⁻¹ | 1,1429 | 1,071 |
| Sₘᵢₖᵣₒ /m² g⁻¹ | 1508 | 1757 |
| V_{P, mikro} / cm³ g⁻¹ | 0,6816 | 0,7702 |
| Dd_{P} / Å | 27,5 | 24,7 |

**Tabelle 6: Spezifikationen der verwendeten Chemikalien**

| Bezeichnung | Reinheit | Hersteller | Artikelnummer |
|---|---|---|---|
| Ammoniak | 3.8 | Linde | - |
| [BMIM]Cl | > 98% | Aldrich - Chemistry | 94128 |
| [EMIM]Cl | zur Synthese | Merck | 4.90054.0100 |
| [OMIM]Cl | zur Synthese | Merck | 4.90056.1000 |
| Ethanol absolut | > 99,9 % | Sigma - Aldrich | 34963 |
| Kupfer(II)-chlorid | > 98% | Merck | 8.18247.0500 |

**Tabelle 7: Spezifikationen wichtiger Anlagenkomponenten**

| Bezeichnung | Typ | Hersteller | Spezifikation |
|---|---|---|---|
| MFC - NH₃ | F-200CV-002-RGD-11-E | Bronckhorst | 0,02 - 1 ml_{N} min⁻¹ |
| MFC - N₂ | F-201CV-500RGD-33-V | Bronckhorst | 8-400 ml_{N} min⁻¹ |
| GC-Säule NH₃ | WCOT Fused Silica; Coating CP - Volamine | Varian | CP7448 60 m × 0,32 mm |
| Feuchtigkeitssensor | HND-FF31 | Kobold | 0,0 - 100,0 % rF, 40,0 - 100,0 °C |
| Thermo-/Kryostat | Ecoline Staredition RE106 | Lauda | - |

### d) Experimentelle Ergebnisse / Durchbruchkurven

1. Zunächst wurden Durchbruchkurven von NH₃ in Schüttungen erfindungsgemäßer Aktivkohle ([EMIM]Cl-CuCl₂ (1:1,3) α = 0,2 auf Aktivkohleadsorbentien (mikro/meso) bei variierender relativer Gasfeuchte aufgenommen (mit T_{Adsorber} = 30 °C, p_{Adsorber} = 1,21 bar, h_{Schuttung} = 2 cm, Volumenstrom (N₂) = 325,61 ml_{N} min⁻¹, Volumenstrom (NH₃) = 0,33 ml_{N} min⁻¹, Detektionsgrenze c_{NH3} = 39 ppm_{V}).
   Die Variation der relativen Gasfeuchte für das Aktivkohlesystem mit [EMIM]Cl-CuCl₂ (1:1,3) α = 0,2 auf Aktivkohleadsorbentien mit hoher Mikro- und Mesoporosität mit relativen Feuchten von rF = 25 %, 50 % und 70 % zeigte eine signifikante Verbesserung der Durchbruchzeiten. Die gemessenen Durchbruchzeiten liegen rund 30 % über denen mit relativen Gasfeuchten von rF = 0 % und 85 %. Die Durchbruchzeiten in dem Feuchtigkeitsbereich zwischen rF = 25 % bis rF = 70 % sind relativ ähnlich. Da dies die üblichen Luftfeuchten bei dem gängigen Einsatz von Atemschutzmasken sind, kann von einer sehr guten Stabilität der erfindungsgemäßen Aktivkohle gesprochen werden.
2. Weiterhin wurden Durchbruchkurven von NH₃ in Schüttungen erfindungsgemäßer Aktivkohlen ([OMIM]Cl-CuCl₂ (1:1,3) auf unterschiedlich porösen Aktivkohleadsorbentien bei variierenden Porenfüllgraden α ermittelt (mit T_{Adsorber} = 30 °C, p_{Adsorber} = 1,21 bar, rF = 85 %, h_{Schüt-tung} = 2 cm, Volumenstrom (N₂) = 325,61 ml_{N} min⁻¹, Volumenstrom (NH₃) = 0,33 ml_{N} min⁻¹, Detektionsgrenze c_{NH3} = 39 ppm_{V}).
   Den resultierenden Durchbruchkurven konnte entnommen werden, dass für hohe Beladungen mit der Metallkomponente bzw. Porenfüllgrade von α = 0,4 mesoporöse Aktivkohleadsorbentien besser als Trägermaterial geeignet sind als mikro-/mesoporöse Aktivkohleträger. Bei gleichem Porenfüllgrad von α = 0,4 ist für den mesoporösen Aktivkohleträger eine um rund 26 % höhere Durchbruchzeit von rund 370 min feststellbar. Bei niedrigeren Porenfüllgraden von α = 0,2 ist kein gravierender Unterschied bezüglich der Durchbruchzeiten zwischen den in Rede stehenden Typen von Aktivkohleadsorbentien zu erkennen.
3. Darüber hinaus wurden Reversibilitätsversuche mit adsorbierten bzw. desorbierten NH₃-Massenströmen bei der Vermessung des erfindungsgemäßen Aktivkohlesystems ([EMIM]Cl-CuCl₂ (1:1,3) α = 0,2 auf Aktivkohleadsorbentien (mikro/meso)) durchgeführt (mit folgenden Parametern: 1.) Adsorption: T_{Adsorber} = 30 °C, p_{Adsorber} = 1,21 bar, rF = 50 %, h_{Schüttung} = 2 cm, Volumenstrom (N₂) = 325,61 ml_{N} min⁻¹, Volumenstrom (NH₃) = 0,33 ml_{N} min⁻¹, Detektionsgrenze c_{NH3} = 39 ppm_{V}; 2.) Desorption: T_{Adsorber} = 85 °C, p_{Adsorber} = 1,23 bar, rF = 50 %, h_{Schüttung} = 2 cm, Volumenstrom (N₂) = 325,61 ml_{N} min⁻¹, Detektionsgrenze c_{NH3} = 39 ppm_{V}).
   Die Reversibilitätstests wurden zur Überprüfung der irreversiblen Gasadsorption des Ammoniaks in der Schüttung vorgenommen. Dabei wurden die adsorbierte Menge des Ammoniaks in der Schüttung während des Adsorptionsversuchs sowie die desorbierte Menge des Ammoniaks aus der Schüttung während des Reversibilitätsversuchs gegen die Zeit aufgetragen. Durch die Integration der beiden Kurven konnten die während der Adsorption von der Schüttung aufgenommenen, sowie die während des Reversibilitätsversuchs desorbierten Ammoniakmengen berechnet werden.
   Die Gesamtmenge an adsorbiertem NH₃ betrug bei dem erfindungsgemäßen Aktivkohlesystem ([EMIM]Cl-CuCl₂ (1:1,3) α = 0,2 auf Aktivkohleadsorbentien (mikro/meso)) 225 mg NH₃. Davon desorbierten 128 mg NH₃ während des Reversibilitätsversuchs wieder. Es wurden damit rund 43 % des NH₃-Gases während des Adsorptionsversuches irreversibel in dem Material gebunden, was einen hervorragenden Wert darstellt.
   Die irreversible bzw. chemisorptive Bindung des Ammoniaks erfolgt - ohne sich auf diese Theorie festlegen zu wollen - aufgrund einer Komplexbildungsreaktion. Bei dem entstehenden Komplex handelt es sich um einen Kupfer(II)tetraaminkomplex, der durch die Bindung des Ammoniaks an der in der Metallkomponente enthaltenen Cu-Spezies gebildet wird.
4. Vergleich der erfindungsgemäßen Aktivkohle mit Aktivkohle auf Basis einer herkömmlichen CuCl₂-Ausrüstung:
   Figur 1 zeigt einen Vergleich der Durchbruchkurven von NH₃ in Schüttungen erfindungsgemäßer Aktivkohle ([EMIM]Cl-CuCl₂ (1:1,3) α = 0,2 auf Aktivkohleadsorbentien (mikro/meso)) mit herkömmlichen CuCl₂-Salzimprägnierungen auf Aktivkohleadsorbentien (mikro/meso) (mit folgenden Parametern: Gasfeuchte rF = 25 %; Cu-Beladung: 0,001567 mol g⁻¹; T_{Adsorber} = 30 °C, p_{Adsorber} = 1,21 bar, h_{Schüttung} = 2 cm, Volumenstrom (N₂) = 325,61 ml_{N} min⁻¹, Volumenstrom (NH₃) = 0,33 ml_{N} min⁻¹, Detektionsgrenze C_{NH3} = 39 ppm_{V}).

   Der Vergleich der Cu-basierten Aktivkohle nach der Erfindung mit den herkömmlichen Ausrüstungen der Aktivkohleadsorbentien mit reinem CuCl₂-Salz zeigt, wie in Figur 1 dargestellt, bei einer relativen Gasfeuchte von rF = 25 % für das erfindungsgemäße System eine deutliche Verlängerung der Durchbruchzeiten gegenüber der reinen MetallsalzImprägnierung.
   Auch im Rahmen weiterer Messungen bei einer relativen Gasfeuchte von rF = 85 % wurden für die erfindungsgemäßen Systeme bessere Durchbruchzeiten ermittelt.
   Die Ergebnisse zeigen insgesamt die erheblich verbesserte Leistungsfähigkeit der erfindungsgemäßen Aktivkohle gegenüber herkömmlichen Kupfermetallsalzimprägnierungen, und dies unabhängig von der vorherrschenden Luftfeuchtigkeit.

Die zugrunde liegenden Versuche zeigen im Ergebnis und zusammenfassend die hervorragenden adsorptiven Eigenschaften der erfindungsgemäßen Aktivkohlen auf Basis der Kombination von Chemisorption und Physisorption, einhergehend mit sehr guten Durchbruchzeiten und verbessertem Desorptionsverhalten.

### 4. Weitere Ausführungen zur Beladung von Kupfer auf Aktivkohleadsorbentien

**Tabelle 8: Hergestellte erfindungsgemäße Aktivkohlesysteme und herkömmliche CuCl₂-Salzimprägnierung auf mikro-/mesoporösen Aktivkohleadsorbentien mit Ultraschallbehandlung**

| Aktivkohleträger (mikro-/mesoporös) | | |
|---|---|---|
| AK-Imprägnierung | Porenfüllgrad α (ml IL / ml Pore) | n Cu (mol) / m AK (g) |
| [EMIM]Cl-CuCl₂ (1:1) | 0,2 | 0,001382 |
| [EMIM]Cl-CuCl₂ (1:1) | 0,4 | 0,002764 |
| [EMIM]Cl-CuCl₂ (1:1,3) | 0,2 | 0,001567 |
| [EMIM]Cl-CuCl₂ (1:1,3) | 0,4 | 0,003135 |
| [BMIM]Cl-CuCl₂ (1:1) | 0,4 | 0,002196 |
| [OMIM]Cl-CuCl₂ (1:1) | 0,4 | 0,001531 |
| [OMIM]Cl-CuCl₂ (1:1,3) | 0,2 | 0,001036 |
| [OMIM]Cl-CuC₁₂ (1:1,3) | 0,4 | 0,002072 |
| [OMIM]Cl-CuCl₂ (1:1,6) | 0,4 | 0,002553 |
| CuCl₂ | - | 0,001567 |

**Tabelle 9: Hergestellte erfindungsgemäße Aktivkohlesysteme und herkömmliche CuCl₂-Salzimprägnierung auf mesoporösen Aktivkohleadsorbentien mit Ultraschallbehandlung**

| Aktivkohleträger (mesoporös) | | |
|---|---|---|
| AK-Imprägnierung | Porenfüllgrad α (ml IL / ml Pore) | n Cu (mol) / m AK (g) |
| [OMIM]Cl-CuCl₂ (1:1,3) | 0,2 | 0,001103 |
| [OMIM]Cl-CuCl₂ (1:1,3) | 0,4 | 0,002211 |

### 5. Weitere Beispiele zur Beladung von unterschiedlichen Basisträgermaterialien mit metallhaltiger Ionischer Flüssigkeit (IL) und verschiedene Vergleiche

Unterschiedliche poröse partikuläre Trägermaterialien
(1) auf Basis der erfindungsgemäß eingesetzten mikro- und mesoporösen Aktivkohle (Erfindung),
(2) auf Basis von Siliciumdioxid (Vergleich),
(3) auf Basis von Zeolith (Vergleich),
(4) auf Basis von Aluminiumoxid (Vergleich) und
(5) auf Basis von Ionenaustauschern (Vergleich)
wurden jeweils mit metallhaltiger Ionischer Flüssigkeit (IL) vom Typ [EMIM]Cl-CuCl₂ (1:1,3) (siehe oben) jeweils bei gleichem Porenfüllgrad behandelt bzw. imprägniert.

Nachfolgend wurden die auf diese Weise hergestellten Adsorbentien in an sich bekannter Weise an einem gasdurchlässigen dreidimensionalen Träger in Form eines offenporigen retikulierten Polyurethanschaums fixiert. Dieser mit Adsorbentien beladene Träger diente bei den nachfolgenden Durchbruchversuchen als Filtermaterial (jeweils zylindrische Versuchsprobekörper mit Durchmessern von 10 cm und Höhen von 30 cm).

Weitere Vergleichsfiltermaterialien wurden hergestellt mit Adsorbentien
(6) auf Basis einer mikro- und mesoporösen Aktivkohle mit ABEK-Imprägnierung (Vergleich) und
(7) auf Basis einer mikro- und mesoporösen Aktivkohle ohne jedwede Imprägnierung (Vergleich).

Unter den vorgenannten Versuchsbedingungen wurden jeweils Durchbruchzeiten für unterschiedlich Schadstoffgase (NH₃, H₂S und Cl₂) unter den obenstehend beschriebenen Bedingungen bestimmt. Die Werte sind in der nachfolgenden Tabelle 10 wiedergegeben.

**Tabelle 10: Durchbruchzeiten im Vergleich von Filtermaterialien mit verschiedenen Adsorbentien**

| Adsorbens | Mittelwert Durchbruchzeit/ min für NH₃ | Mittelwert Durchbruchzeit/ min für H₂S | Mittelwert Durchbruchzeit/ min für Cl₂ |
|---|---|---|---|
| (1) Aktivkohle, IL-imprägniert (Erfindung) | 522 | 489 | 493 |
| (2) Siliciumdioxid (Vergleich) | 89 | 72 | 55 |
| (3) Zeolith (Vergleich) | 243 | 212 | 198 |
| (4) Aluminiumoxid (Vergleich) | 134 | 121 | 112 |
| (5) Ionenaustauscher (Vergleich) | 232 | 197 | 209 |
| (6) Aktivkohle, ABEK-imprägniert (Vergleich) | 467 | 398 | 389 |
| (7) Aktivkohle, nicht imprägniert (Vergleich) | 228 | 189 | 276 |

Die Ergebnisse zeigen, dass mit den erfindungsgemäß ausgerüsteten Adsorbentien bzw. Filtermaterialien die besten Werte in Bezug auf alle Gase erhalten werden. Die erfindungsgemäß ausgerüsteten Adsorbentien bzw. Filtermaterialien sind trotz identischer Imprägnierung anderen Adsorbentien auf Basis andersartiger Basis- bzw. Trägermaterialien (Siliciumdioxid (2), Zeolith (3), Aluminiumoxid (4) und Ionenaustauscherharz (5)) in der Adsorptionsleistung signifikant überlegen, und dies für unterschiedliche Gase. Die Leistungsfähigkeit der erfindungsgemäß ausgerüsteten Adsorbentien bzw. Filtermaterialien übersteigt sogar das Adsorptionsvermögen von identischer Basisaktivkohle aber mit ABEK-Imprägnierung (6) sowie von identischer Basisaktivkohle ohne jedwede Imprägnierung (7).

### 6. Gasaufbereitung für Reinraumbedingungen

Für die Gasaufbereitung unter Reinraumbedingungen kommen im Stand der Technik oftmals iodidimprägnierte Aktivkohlen zum Einsatz. Eine solche iodidimprägnierte Aktivkohle (nachfolgend: "AK_{Iodid}") wurde im Rahmen des vorliegenden Versuchs gegenüber einer erfindungsgemäß eingesetzten mikro- und mesoporöse Aktivkohle mit Imprägnierung auf Basis einer metallhaltigen Ionischen Flüssigkeit (IL) mit ternärer Metallausrüstung Zn/Sn/Cu vom Typ [EMIM]Ac-ZnAc₂ / [EMIM]Ac-SnAc₂ / [EMIM]Cl-CuCl₂ mit "Ac" = Acetat (nachfolgend: "AK_{IL-Zn/Sn/Cu}"). Als weiterer Vergleich diente eine mikro- und mesoporöse Aktivkohle mit herkömmlicher Metallsalzimprägnierung auf Basis einer ternären Metallausrüstung Zn/Sn/Cu vom Typ ZnAc₂ / SnAc₂ / CuCl₂ mit "Ac" = Acetat und somit ohne Ionische Flüssigkeit (IL) (nachfolgend: "AK_{Zn/Sn/Cu}").

Nachfolgend wurden die verschiedenen Adsorbentien in an sich bekannter Weise an einem gasdurchlässigen dreidimensionalen Träger in Form eines offenporigen retikulierten Polyurethanschaums fixiert. Dieser mit Adsorbentien beladene Träger diente bei den nachfolgenden Versuchen als Filtermaterial (jeweils zylindrische Versuchsprobekörper mit Durchmessern von 10 cm und Höhen von 30 cm).

Unter den vorgenannten Versuchsbedingungen wurde jeweils das Adsorptionsverhalten für unterschiedlich Schadstoffgase (SO₂, NOₓ und H₂S, jeweils 1.000 ppm Eingangskonzentration) unter den obenstehend beschriebenen Bedingungen bestimmt.

Bei dem erfindungsgemäßen Filtermaterial "AK_{IL-Zn/Sn/Cu}" konnten die Konzentration aller Schadgase unter die Nachweisgrenze abgesenkt werden. Auch nach 5-stündiger Testdauer trat keine Veränderung dieses Zustands ein. In einem nachfolgenden Desorptionsversuch nach 5-stündiger Betriebsdauer wurden keinerlei Freisetzung von Schadgasen beobachtet.

Bei dem Vergleichsfiltermaterial "AK_{Iodid}" konnten dagegen die Konzentration nur der Schwefel- und Stickoxide unter die Nachweisgrenze abgesenkt werden, während der Schwefelwasserstoff nicht in ausreichendem Maße adsorbiert wurde. Bereits nach 3-stündiger Testdauer konnte die Freisetzung von Iod beobachtet werden. In einem nachfolgenden Desorptionsversuch nach 5-stündiger Betriebsdauer wurden signifikante Mengen der Schadgase sowie Iod freigesetzt.

Bei dem Vergleichsfiltermaterial "AK_{Zn/Sn/Cu}" konnten zunächst die Konzentration aller Schadgase unter die Nachweisgrenze abgesenkt werden; jedoch konnte nach 3,5-stündiger Testdauer zunächst der Schwefelwasserstoffgehalt, dann aber auch der Gehalt an Schwefel- und Stickoxiden nicht mehr unter die Nachweisgrenze abgesenkt werden. In einem nachfolgenden Desorptionsversuch nach 5-stündiger Betriebsdauer wurden geringe, jedoch nachweisbare Mengen der Schadgase freigesetzt.

Die Ergebnisse zeigen, dass mit den erfindungsgemäß ausgerüsteten Adsorbentien bzw. Filtermaterialien die besten Werte in Bezug auf alle Gase erhalten werden; nur hiermit wird eine dauerhafte bzw. irreversible und ausreichende Sorption über die gesamte Versuchsdauer gewährleistet - und dies ohne die Freisetzung von Iod und ohne Desorption der Schadgase.

### 7. Einsatz in Luftfiltern

Eine erfindungsgemäß eingesetzte mikro- und mesoporöse Aktivkohle wurde mit metallhaltiger Ionischer Flüssigkeit (IL) vom Typ [EMIM]Cl-CuCl₂ (1:1,3) (siehe oben) behandelt bzw. imprägniert. Nachfolgend wurden die auf diese Weise ausgerüsteten Adsorbentien in an sich bekannter Weise an einem gasdurchlässigen dreidimensionalen Träger in Form eines offenporigen retikulierten Polyurethanschaums fixiert, welcher dann in eine Luftreinigungsvorrichtung integriert bzw. eingebaut wurde. In entsprechender Weise wurde zur Bereitstellung von Vergleichsmaterialien eine herkömmliche Aktivkohle an einem gasdurchlässigen Träger, wie zuvor beschrieben, fixiert, welcher dann ebenso in einer entsprechenden Luftreinigungsvorrichtung integriert bzw. eingebaut wurde. Die jeweils mit Adsorbentien beladenen Träger dienten also bei den nachfolgenden Versuchen als Filtermaterial.
a) Die Luftreinigungsvorrichtungen wurden jeweils in einen mit polychlorierten Biphenylen (PCB) kontaminierten Raum (PCB-Konzentration: 10.000 ng/m³) eingebracht und in Betrieb gesetzt. Bereits nach 1-stündigem Betrieb konnte bei der Luftreinigungsvorrichtung mit dem erfindungsgemäßen Filtermaterial die PCB-Raumluftkonzentration auf einen Wert von weniger als 300 ng/m³ abgesenkt werden und blieb während der Betriebsdauer bei diesem Wert. Im nachfolgenden Desorptionsversuch wurden keine signifikanten PCB-Mengen festgestellt. Bei der Luftreinigungsvorrichtung mit dem Vergleichsmaterial konnte nach 1-stündigem Betrieb die PCB-Raumluftkonzentration auf einen Wert von etwa 1.200 ng/m³ abgesenkt werden; im nachfolgenden Desorptionsversuch betrug die Reversibilität der Adsorption mehr als 95 % (d. h. mehr als 95 % des zuvor adsorbierten PCB wurde wieder freigesetzt).
b) Zudem wurden die jeweiligen Luftreinigungsvorrichtungen im Rahmen eines H₂S-Durchströmungstests untersucht. Hierzu betrug die Betthöhe des eingesetzten Trägers (offenporiger retikulierter Polyurethanschaum) mit den darauf fixierten Adsorbentien jeweils 40 mm. Die Konzentration von H₂S im Luftstrom betrug 10 ppm, und die Strömungsgeschwindigkeit wurde auf 0,73 m/s eingestellt. Die Effizienz wies über mehr als 1.200 min einen Wert von 80 % auf. Bei dem herkömmlichen Material lag die Effizienz bei weniger als 10 %.

### 8. Katalyse chemischer Reaktionen

Erfindungsgemäß eingesetzte Aktivkohlen mit Ausrüstung bzw. Imprägnierung auf Basis metallhaltiger Ionischer Flüssigkeit (IL) unterschiedlicher Typen mit variierenden Metallverbindungen wurden im Rahmen der Katalyse verschiedener chemischer Reaktionen (d. h. Hydrierungsreaktionen, Oxidationsreaktionen sowie Oligomerisations- und Polymerisationsreaktionen) getestet und lieferten dort ausgezeichnete Ergebnisse.

### a) Präparation einer erfindungsgemäß ausgerüsteten Aktivkohle zu Zwecken der Verwendung in der katalytischen Hydrierung von Ethen

Als Trägermaterial wurde für die Herstellung der erfindungsgemäß eingesetzten Aktivkohle eine mikro-/mesoporöse Aktivkohle oder eine mesoporöse Aktivkohle verwendet, wie sie bereits jeweils gemäß Beispiel 1 b) angeführt sind.

Es wurde zunächst ein Lösung der Komplexverbindung RhCl(PPh₃)₃ in der ionischen Flüssigkeit in Form von 1-Ethyl-3-metyhlimidazolium-bis(trifluoromethylsulfonyl)imid hergestellt. Dazu wurden 200 mg RhCl(PPh₃)₃ in 30 ml der Ionischen Flüssigkeit unter Rühren bei 50 °C gelöst. Die so erhaltene ionische Katalysatorlösung wurde zur Imprägnierung der jeweiligen Aktivkohleadsorbentien eingesetzt, wobei hierzu unter Ultraschalleintrag verfahren wurde. Durch den instationären bzw. diskontinuierlichen Energieeintrag der Ultraschallsonotrode konnte eine verbesserte Verteilung der ionischen Katalysatorlösung in die feine Porenstruktur des Aktivkohleträgers gewährleistet werden.

Zur Herstellung der erfindungsgemäßen, katalytisch aktiven Aktivkohle wurde zunächst die entsprechende Menge an ionischer Katalysatorlösung berechnet, die zur Einstellung eines bestimmten Porenfüllgrades α auf einer definierten Menge des Aktivkohleadsorbens erforderlich ist. Der Porenfüllgard α wurde gemäß der Formel [α = V_{IL} / (V_{Pore} · m_{Träger})] berechnet, wobei in der Formel "V_{IL}" das Volumen der einzusetzenden Ionischen Flüssigkeit, "m_{Träger}" die Masse der einzusetzenden Aktivkohle und "V_{Pore}" das spezifische Porenvolumen der Aktivkohle bezeichnen. Für den Versuch wurde ein Porenfüllgrad α von 0,2 verwendet.

Die ionische Katalysatorlösung wurde in einem Schlenkkolben eingewogen und in Ethanol unter Rühren bei Raumtemperatur gelöst. Daraufhin wurde die zuvor berechnete Menge an Aktivkohleadsorbens in die Lösung gegeben. Das Gemisch wurde weitere 15 Minuten gerührt und anschließend für 2 Stunden in ein Wasserbad mit eingetauchter Ultraschallsonotrode eingesetzt.

Nach der so durchgeführten Imprägnierung des Aktivkohleträgers erfolgte die Abtrennung des Lösungsmittels Ethanol in einem Rotationsverdampfer bei T = 40 °C und p = 175 mbar, und die sich anschließende Endtrocknung erfolgte unter Hochvakuum im Ölbad bei T = 60 °C über Nacht.

Das so erhaltene, erfindungsgemäß imprägnierte, katalytische Aktivkohleadsorbens wurde anschließend in einem Reaktionsrohr bei T = 80 °C mit einem gasförmigem Gemisch von Ethen und Wasserstoff kontaktiert. Der Gesamtdruck der Gasmischung betrug 10 bar, und die Verweilzeit im Reaktor betrug 60 Sekunden. Unter diesen Reaktionsbedingungen wurde ein Reaktionsumsatz von 20 % des eingesetzten Ethens im ausströmenden Gas für die erfindungsgemäß ausgerüstete mikro-/mesoporöse Aktivkohle und von 22 % für die erfindungsgemäß ausgerüstete mesoporöse Aktivkohle beobachtet. Das einzige Produkt der katalytischen Hydrierung durch das jeweilige erfindungsgemäß imprägnierte, katalytische Aktivkohleadsorbens war Ethan.

### b) Vergleichsbeispiel: Präparation einer nichterfindungsgemäß ausgerüsteten Aktivkohle - Ausrüstung der Aktivkohle mit dem physisorbierten Komplex RhCl(PPh₃)₃ ohne Einsatz einer ionischen Flüssigkeit und Test des Materials in der katalytischen Hydrierung von Ethen

Als Trägermaterial wurde für die Herstellung der nichterfindungsgemäßen Aktivkohle eine mikro/mesoporöse Aktivkohle oder eine mesoporöse Aktivkohle verwendet, wie sie bereits jeweils gemäß Beispiel 1 b) angeführt sind.

Es wurde zunächst ein Lösung der Komplexverbindung RhCl(PPh₃)₃ in Ethanol hergestellt. Dazu wurden 200 mg RhCl(PPh₃)₃ in 30 ml Ethanol unter Rühren bei 50 °C gelöst. Die so erhaltene Katalysatorlösung wurde zur Imprägnierung der Aktivkohleadsorbentien eingesetzt, wobei hierzu unter Ultraschalleintrag verfahren wurde. Zur Herstellung der jeweiligen nichterfindungsgemäßen Vergleichsproben wurde die gleiche Menge der Komplexverbindung RhCl(PPh₃)₃ und die gleiche Menge an Aktivkohleadsorbens wie unter Beispiel (a) eingesetzt. Die ethanolische Lösung der Komplexverbindung wurde mit der abgewogenen Menge an Aktivkohleadsorbens vermischt. Das Gemisch wurde weitere 15 Minuten gerührt und anschließend für 2 Stunden in ein Wasserbad mit eingetauchter Ultraschallsonotrode eingesetzt. Nach der so durchgeführten Imprägnierung des Aktivkohleträgers erfolgte die Abtrennung des Lösungsmittels Ethanol in einem Rotationsverdampfer bei T = 40 °C und p = 175 mbar und die anschließende Endtrocknung erfolgte unter Hochvakuum im Ölbad bei T = 60 °C über Nacht.

Das so erhaltene, nichterfindungsgemäß imprägnierte Aktivkohleadsorbens wurde anschließend in einem Reaktionsrohr bei 80 °C mit einem gasförmigem Gemisch von Ethen und Wasserstoff kontaktiert. Der Gesamtdruck der Gasmischung betrug 10 bar, und die Verweilzeit im Reaktor betrug 60 Sekunden. Unter diesen Reaktionsbedingungen wurde ein Reaktionsumsatz von weniger als 1,0 % des eingesetzten Ethens im ausströmenden Gas sowohl für die nichterfindungsgemäße mikro/mesoporöse Aktivkohle als auch für die nichterfindungsgemäße mesoporöse Aktivkohle beobachtet. Das einzige detektierbare Reaktionsprodukt war Ethan.

### c) Präparation einer erfindungsgemäß ausgerüsteten Aktivkohle zur katalytischen Umsetzung von Methanol, CO und Sauerstoff zu Dimethylcarbonat und Vergleich der erfindungsgemäß ausgerüsteten Aktivkohle mit identischen katalytischen Komponenten auf anderen Trägermaterialien

Dieses Beispiel umfasst einen Vergleich der erfingsgemäß ausgerüsteten Aktivkohle mit anderen Trägermaterialien, die ebenfalls mit einer katalytisch aktiven, metallhaltigen Ionischen Flüssigkeit beschichtet wurden. Als Vergleichsanwendung wurde die katalytischen Umsetzung von Methanol, CO und Sauerstoff zu Dimethylcarbonat gewählt. Dimethylcarboant findet als Methylierungsreagenz, Kraftstoffadditiv oder Lösungsmittel technische Verwendung, und die Herstellung der Verbindung aus Methanol, CO und Sauerstoff ist technisch hochinteressant.

Für die Herstellung des erfindungsgemäßen Materials und sämtlicher Vergleichsmaterialien wurde die katalytisch aktive, metallhaltige Ionische Flüssigkeit [Cu(C₁₂IM)₂][CuBr₂] hergestellt und in Ethanol gelöst. Für die Lösung wurden 0,5 g der ionischen Flüssigkeit und 30 ml Ethanol verwendet.

Als Trägermaterial für die Herstellung der erfindungsgemäß eingesetzten Aktivkohle wurde erneut eine mikro/mesoporöse Aktivkohle oder eine mesoporöse Aktivkohle verwendet, wie sie bereits jeweils gemäß Beispiel 1 b) angeführt sind.

Zur Herstellung der erfindungsgemäßen katalytisch aktiven Aktivkohle und der Vergleichsproben unter Verwendung eines Silikaträgers (Vergleichsprobe 1), eines Magnesiumoxidträgers (Vergleichsprobe 2) und eines Polymerträgers (PMMA/PS, Vergleichsprobe 3) wurde zunächst die entsprechende Menge an ionischer Katalysatorlösung berechnet, die zur Einstellung des Porenfüllgrades α auf einer definierten Menge des Aktivkohleadsorbens erforderlich ist. Der Porenfüllgard α wurde gemäß der Formel [α = V_{IL} / (V_{Pore} · m_{Träger})] berechnet, wobei in der Formel "V_{IL}" das Volumen der einzusetzenden Ionischen Flüssigkeit, "m_{Träger}" die Masse der einzusetzenden Aktivkohle und "V_{Pore}" das spezifische Porenvolumen der Aktivkohle bezeichnen.

Für sämtliche Versuche gemäß Beispiel (c) wurde ein Porenfüllgrad α von 0,2 verwendet.

Die ethanolische Lösung der ionischen Katalysatorlösung wurde in einem Schlenkkolben eingewogen, und die zuvor berechnete Menge des jeweiligen Trägermaterials wurde in die Lösung gegeben. Das Gemisch wurde weitere 15 Minuten gerührt und anschließend für 2 Stunden in ein Wasserbad mit eingetauchter Ultraschallsonotrode eingesetzt.

Nach der so durchgeführten Imprägnierung des Trägermaterials erfolgte in sämtlichen Fällen die Abtrennung des Lösungsmittels Ethanol in einem Rotationsverdampfer bei T = 40 °C und p = 175 mbar, und die anschließende Endtrocknung erfolgte unter Hochvakuum im Ölbad bei T = 60 °C über Nacht.

Das so erhaltene erfindungsgemäß imprägnierte katalytische Aktivkohleadsorbens und die drei Vergleichsproben wurden anschließend in einem Reaktionsrohr zur kontinuierlichen Umsetzung von Methanol, CO und Sauerstoff zu Dimethylcarbonat eingesetzt. In sämtlichen Versuchen gemäß Beispiel (c) wurden dabei die folgenden, identischen Reaktionsbedingungen und Verhältnisse verwendet: Reaktionstemperatur 110°C; Verweilzeit im durchströmten Rohrreaktor 180 s, p_{Luft} 2,35 bar (p_{Stickstoff} = 1,88 bar, p_{Sauerstoff} = 0,47 bar); p_{CO} = 5,03 bar, p_{Methanol} = 0,27 bar.

Unter diesen Reaktionsbedingungen wurde mit dem jeweiligen erfindungsgemäß imprägnierten katalytischen Aktivkohleadsorbens und den drei Vergleichsproben nach 3-stündigem Betrieb des Reaktors ein stationärer Betrieb des Reaktors erreicht, der mindestens für 20 Stunden aufrecht erhalten werden konnte.

Im stationären Betrieb wurden folgende Ausbeuten des gewünschten Produktes Dimethylcarbonat realisiert:

| Katalysatorsystem/Trägermaterial | Ausbeute Dimethylcarbonat im stationären Reaktorbetrieb unter den genannten Bedingungen |
|---|---|
| erfindungsgemäß imprägniertes, katalytisches Aktivkohleadsorbens auf Basis mikro-/mesoporöser Aktivkohle | 23 % |
| erfindungsgemäß imprägniertes, katalytisches Aktivkohleadsorbens auf Basis mesoporöser Aktivkohle | 25 % |
| Vergleichsprobe 1: Silika als Träger | 0,2 % |
| Vergleichsprobe 2: Magnesiumoxid als Träger | 1,1 % |
| Vergleichsprobe 3: Polymer (PMMA/PS) als Träger | 2,9 % |

Die Versuche zeigen, dass das erfindungsgemäß imprägnierte katalytische Aktivkohleadsorbens anderen imprägnierten Trägermaterialien hinsichtlich Aktivität und katalytischer Effizienz weit überlegen ist.

## Patentansprüche

1. Aktivkohle mit reaktiver und/oder katalytischer Ausrüstung,
wobei die Aktivkohle in Form von diskreten Aktivkohlepartikeln in Kugel- und/oder Kornform vorliegt, wobei die Aktivkohle Teilchendurchmesser im Bereich von 0,01 bis 2 mm aufweist, bestimmt nach der Methode nach ASTM D2862-97/04, und wobei die Aktivkohle ein Gesamtporenvolumen nach Gurvich im Bereich von 0,4 bis 4 cm³/g aufweist, wobei 30 % bis 85 % des Gesamtporenvolumens nach Gurvich der Aktivkohle durch Poren mit Porendurchmessern im Bereich von 2 nm bis 50 nm gebildet sind;
wobei die Aktivkohle mit mindestens einer Metallkomponente ausgerüstet und/oder ausgestattet ist, wobei die Metallkomponente mindestens eine metallhaltige Ionische Flüssigkeit (IL) umfasst, wobei die Metallkomponente und/oder die Ionische Flüssigkeit (IL) mindestens ein Metall, ausgewählt aus der Gruppe von Cu, Ag, Au, Zn, Hg, Sn, Ce, Ti, Zr, V, Nb, Cr, Mo, W, Mn, Fe, Ru, Os, Co, Rh, Ir, Ni, Pd und Pt, aufweist;
wobei die Ionische Flüssigkeit (IL) eine Verbindung der allgemeinen Formel [Kat]ⁿ⁺[An]ⁿ⁻ ist, wobei "Kat" ein Kation bezeichnet und "An" ein Anion bezeichnet und "n" eine ganze Zahl gleich 1 oder 2 bezeichnet, und/oder wobei die Ionische Flüssigkeit (IL) eine Verbindung der allgemeinen Formel [Kat₁]ₓ^{y+}[An₁]_{y}^{x-} ist, wobei "Kat₁" ein Kation bezeichnet und "An₁" ein Anion bezeichnet und wobei "x" und "y", unabhängig voneinander, eine ganze Zahl im Bereich von 1 bis 4 bezeichnen, wobei das Kation [Kat]ⁿ⁺ der Ionischen Flüssigkeit (IL) ein Stickstoff enthaltendes Kation ist, wobei das Stickstoff enthaltende Kation ausgewählt ist aus der Gruppe von quarternären Ammoniumkationen, Imidazoliumkationen, Pyridiniumkationen, Pyrazoliumkationen und Triaziniumkationen, oder wobei das Kation [Kat]ⁿ⁺ der Ionischen Flüssigkeit (IL) ein Phosphor enthaltendes Kation in Form eines Phosphoniumkations ist und wobei das Anion [An]ⁿ⁻ der Ionischen Flüssigkeit (IL) ein organisches oder anorganisches Anion ist; und
wobei die Aktivkohle die metallhaltige Ionische Flüssigkeit (IL) in Mengen von 1 Vol.-% bis 70 Vol.-%, bezogen auf das Volumen der Aktivkohle, aufweist und/oder wobei die Menge an metallhaltiger Ionischer Flüssigkeit (IL) derart ausgelegt ist und/oder der Porenfüllgrad α der Aktivkohle derart bemessen ist, dass 20 % bis 95 % des Porenvolumens der Aktivkohle nicht mit der metallhaltigen Ionischen Flüssigkeit (IL) gefüllt sind.

2. Aktivkohlepartikel nach Anspruch 1, **dadurch gekennzeichnet,**
**dass** die metallhaltige Ionische Flüssigkeit (IL) eine Metallionen, vorzugsweise auf Basis einer Metallverbindung, enthaltende Ionische Flüssigkeit (IL) ist; und/oder
**dass** die Ionische Flüssigkeit (IL) eine Verbindung der allgemeinen Formel [Kat]ⁿ⁺[An]ⁿ⁻ ist, wobei "Kat" ein Kation bezeichnet und "An" ein Anion bezeichnet und "n" eine ganze Zahl gleich 1 bezeichnet, und/oder dass die Ionische Flüssigkeit (IL) eine Verbindung der allgemeinen Formel [Kat₁]ₓ^{y+}[An₁]_{y}^{x-} ist, wobei "Kat₁" ein Kation bezeichnet und "An₁" ein Anion bezeichnet und wobei "x" und "y", unabhängig voneinander, eine ganze Zahl im Bereich von 1 bis 3, vorzugsweise 1 oder 2, bevorzugt jeweils 1, bezeichnen; und/oder dass das Kation [Kat]ⁿ⁺ der Ionischen Flüssigkeit (IL) ausgewählt ist aus Imidazoliumkationen; oder
**dass** das Kation [Kat]ⁿ⁺ der Ionischen Flüssigkeit (IL) ausgewählt ist aus der Gruppe von
- quarternären Ammoniumkationen der allgemeinen Formel (I):
[NR¹R²R³R]⁺ Formel (I)
- Phosphoniumkationen der allgemeinen Formel (II):
[PR¹R²R³R]⁺ Formel (II)
- Imidazoliumkationen der allgemeinen Formel (III): 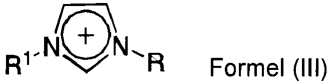 wobei in der Formel (III) der Imidazolkern gegebenenfalls mit mindestens einer Gruppe, ausgewählt aus (C₁-C₈)-Alkylgruppen, (C₁-C₈)-Alkoxygruppen, (C₁-C₈)-Aminoalkylgruppen, (C₅-C₁₂)-Arylgruppen und (C₅-C₁₂)-Aryl-(C₁-C₈)-Alkylgruppen, substituiert ist;
- Pyridiniumkationen der allgemeinen Formel (IV): 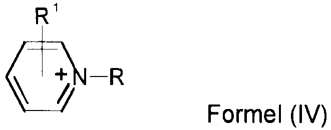 wobei in der Formel (IV) der Pyridinkern gegebenenfalls mit mindestens einer Gruppe, ausgewählt aus (C₁-C₆)-Alkylgruppen, (C₁-C₆)-Alkoxygruppen, (C₁-C₆)-Aminoalkylgruppen, (C₅-C₁₂)-Arylgruppen oder (C₅-C₁₂)-Aryl-(C₁-C₆)-Alkylgruppen, substituiert ist;
- Pyrazoliumkationen der allgemeinen Formel (V): 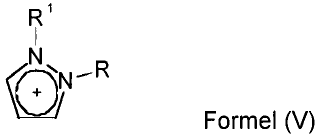 wobei in der Formel (V) der Pyrazolkern gegebenenfalls mit mindestens einer Gruppe, ausgewählt aus (C₁-C₆)-Alkylgruppen, (C₁-C₆)-Alkoxygruppen, (C₁-C₆)-Aminoalkylgruppen, (C₅-C₁₂)-Arylgruppen oder (C₅-C₁₂)-Aryl-(C₁-C₆)-Alkylgruppen, substituiert ist; und
- Triaziniumkationen der allgemeinen Formel (VI): 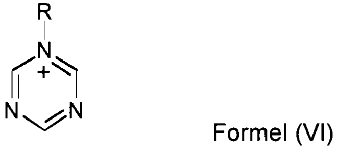 wobei in der Formel (VI) der Triazinkern gegebenenfalls mit mindestens einer Gruppe, ausgewählt aus (C₁-C₆)-Alkylgruppen, (C₁-C₆)-Alkoxygruppen, (C₁-C₆)-Aminoalkylgruppen, (C₅-C₁₂)-Arylgruppen und (C₅-C₁₂)-Aryl-(C₁-C₆)-Alkylgruppen, substituiert ist;
wobei in den Formeln (I) bis (VI), unabhängig voneinander, die Reste R¹, R², R³, unabhängig voneinander, ausgewählt sind aus der Gruppe von
- Wasserstoff;
- linearen oder verzweigten, gesättigten oder ungesättigten, aliphatischen oder alicyclischen (C₁-C₂₀)-Alkylgruppen;
- Heteroarylgruppen oder (C₃-C₈)-Heteroaryl-(C₁-C₆)-Alkylgruppen, insbesondere mit jeweils mindestens einem Heteroatom, insbesondere ausgewählt aus der Gruppe von N, O und S, insbesondere wobei der Heteroarylrest gegebenenfalls mit mindestens einer Gruppe, insbesondere mindestens einer (C₁-C₆)-Alkylgruppe, und/oder mindestens einem Halogenatom, substituiert ist; und
- Arylgruppen oder (C₅-C₁₂)-Aryl-(C₁-C₆)-Alkylgruppen, insbesondere wobei die vorgenannten Gruppen jeweils gegebenenfalls mit mindestens einer (C₁-C₆)-Alkylgruppe und/oder mindestens einem Halogenatom substituiert sind; und
wobei in den Formeln (I) bis (VI), unabhängig voneinander, der Rest R ausgewählt ist aus
- linearen oder verzweigten, gesättigten oder ungesättigten, aliphatischen oder alicyclischen (C₁-C₂₀)-Alkylgruppen;
- (C₃-C₈)-Heteroaryl-(C₁-C₆)-Alkylgruppen, insbesondere mit jeweils mindestens einem Heteroatom, insbesondere ausgewählt aus der Gruppe von N, O und S, insbesondere wobei der Heteroarylrest gegebenenfalls mit mindestens einer Gruppe, insbesondere mindestens einer (C₁-C₆)-Alkylgruppe, und/oder mindestens einem Halogenatom, substituiert ist; und
- (C₅-C₁₂)-Aryl-(C₁-C₆)-Alkylgruppen, insbesondere wobei die vorgenannten Gruppen gegebenenfalls mit wenigstens einer (C₁-C₆)-Alkylgruppe und/oder einem Halogenenatom substituiert sind.

3. Aktivkohlepartikel nach Anspruch 1 oder 2, **dadurch gekennzeichnet,**
**dass** das Kation [Kat]ⁿ⁺ der Ionischen Flüssigkeit (IL) ein Imidazoliumkation der allgemeinen Formel (III): 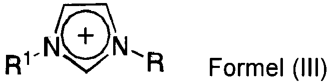 ist,
wobei in der Formel (III) der Imidazolkern gegebenenfalls mit mindestens einer Gruppe, ausgewählt aus (C₁-C₈)-Alkylgruppen, (C₁-C₈)-Alkoxygruppen, (C₁-C₈)-Aminoalkyl-gruppen, (C₅-C₁₂)-Arylgruppen und (C₅-C₁₂)-Aryl-(C₁-C₈)-Alkylgruppen, substituiert ist und
wobei in der Formel (III) die Reste R und R¹, unabhängig voneinander, ausgewählt sind aus der Gruppe von linearen oder verzweigten, gesättigten oder ungesättigten, aliphatischen oder alicyclischen, insbesondere linearen (C₁-C₂₀)-Alkylgruppen, insbesondere
wobei die Reste R und R¹ voneinander verschieden sind und/oder insbesondere wobei die Reste R und R¹ eine voneinander verschiedene Anzahl an Kohlenstoffatomen aufweisen und/oder
wobei in der Formel (III) der Rest R eine Methylgruppe ist und wobei in der Formel (III) der Rest R¹ eine insbesondere lineare (C₁-C₂₀)-Alkylgruppe, vorzugsweise eine insbesondere lineare (C₂-C₁₂)-Alkylgruppe, bevorzugt eine insbesondere lineare (C₂-C₈)-Alkylgruppe, ist oder
wobei in der Formel (III) der Rest R eine Methylgruppe ist und wobei in der Formel (III) der Rest R¹ eine Ethylgruppe, Butylgruppe oder Octylgruppe, insbesondere eine Ethylgruppe, ist; oder
**dass** das Kation [Kat]ⁿ⁺ der Ionischen Flüssigkeit (IL) ein 1-Ethyl-3-methylimidazoliumkation ([EMIM]⁺), 1-Butyl-3-methylimidazoliumkation ([BMIM]⁺) oder 1-Octyl-3-methylimidazoliumkation ([OMIM]⁺), insbesondere ein 1-Ethyl-3-methyl-imidazoliumkation ([EMIM]⁺), ist.

4. Aktivkohlepartikel nach einem der vorangehenden Ansprüche, **dadurch gekennzeichnet,**
**dass** das Anion [An]ⁿ⁻ der Ionischen Flüssigkeit (IL) ausgewählt ist aus Anionen der Gruppe von Chlorocuprat ([CuCl₃]⁻), Bromocuprat ([CuBr₃]⁻), Chlorostannat ([SnCl₃]⁻, [Sn₂Cl₅]⁻), Bromostannat ([SnBr₃]⁻), Chlorozinkat ([ZnCl₃]⁻), Bromozinkat ([ZnBr₃]⁻), Chloroferrat ([FeCl₃]⁻), Bromoferrat ([FeBr₃]⁻), Chlorocobaltat ([CoCl₃]⁻), Bromocobaltat ([CoBr₃]⁻), Chloronickelat ([NiCl₃]⁻), Bromonickelat ([NiBr₃]⁻), Tetrafluoroborat ([BF₄]⁻), Tetrachloroborat ([BCl₄]⁻), Hexafluorophosphat ([PF₆]⁻), Hexafluoroantimonat ([SbF₆]⁻), Hexafluoroarsenat ([AsF₆]⁻), Sulfat ([SO₄]²⁻), Carbonat ([CO₃]²⁻), Fluorosulfonat, [R'-COO]⁻, [R'-SO₃]⁻, [R'-SO₄]⁻, [R'₂PO₄]⁻, Tetrakis-(3,5-bis-(trifluormethyl)-phenyl)borat ([BARF]⁻) und Bissulfonylamid [(R'-SO₂)₂N]⁻, wobei R' ein linearer oder verzweigter, 1 bis 12 Kohlenstoffatome enthaltender aliphatischer oder alicyclischer Alkylrest oder ein (C₅-C₁₈)-Arylrest, ein (C₅-C₁₈)-Aryl-(C₁-C₆)-alkylrest oder ein (C₁-C₆)-Alkyl-(C₅-C₁₈)-arylrest ist, wobei der Rest gegebenenfalls mit Halogenatomen und/oder Sauerstoffatomen substituiert ist; oder
**dass** das Anion [An]ⁿ⁻ der Ionischen Flüssigkeit (IL) ausgewählt ist aus Anionen der Gruppe von Dicyanamid ([N(CN)₂]⁻), Nitrat ([NO₃]⁻), Nitrit ([NO₂]⁻), anionischen Metallkomplexen, insbesondere [CuCl₄]²⁻, [PdCl_{4]}²⁻ oder [AuCl₄]⁻, Acetat ([CH₃COO]⁻), Trifluoracetat ([F₃CCOO]⁻), Tosylat ([C₇H₇SO₃]⁻), Nonafluorbutansulfonat ([C₄F₉SO₃⁻), Tris(pentafluorethyl)trifluorphosphat ([PF₃(C₂F₅)₃]⁻), Tricyanomethid ([C(CN)₃]⁻), Tetracyanoborat ([B(CN)₄]⁻, Thiocyanat ([SCN]⁻), Carboxylat ([R"-COO]⁻), Sulfonat ([R"-SO₃]⁻), Dialkylphosphat ([R"PO₄R"']⁻) oder Bissulfonylimiden [(R"-SO₂)₂N]⁻), wobei R" und R"', unabhängig voneinander, jeweils ein linearer, verzweigter, aliphatischer oder alicyclischer (C₅-C₁₈)-Alkylrest oder ein (C₅-C₁₈)-Arylrest, (C₅-C₁₈)-Aryl-(C₁-C₆)-alkylrest oder (C₁-C₆)-Alkyl-(C₅-C₁₈)-arylrest ist, insbesondere wobei der Rest gegebenenfalls durch Halogenatome oder Sauerstoffatome substituiert ist; oder
**dass** das Anion [An]ⁿ⁻ der Ionischen Flüssigkeit (IL) ein Halogenidanion, insbesondere Cl⁻, Br⁻, F⁻, I⁻, vorzugsweise Cl⁻, ist und/oder dass das Anion [An]ⁿ⁻ der Ionischen Flüssigkeit (IL) ein Carbonsäureanion, insbesondere ein Acetatanion, ist; oder
**dass** die Ionische Flüssigkeit (IL) ausgewählt ist aus der Gruppe der Verbindungen der Formeln (VII) bis (IX) 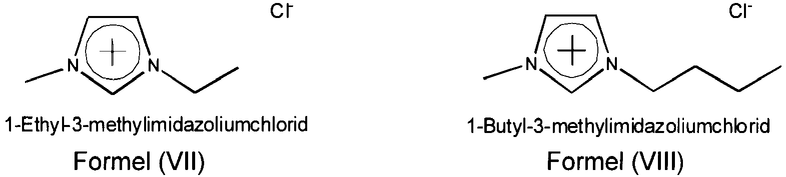 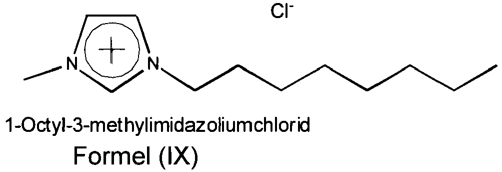 insbesondere wobei die Ionische Flüssigkeit (IL) eine Verbindung der Formel (VII) ist.

5. Aktivkohlepartikel nach einem der vorangehenden Ansprüche, **dadurch gekennzeichnet,**
**dass** die Metallkomponente das Metall, insbesondere in Form einer Metallverbindung, in mindestens einer Ionischen Flüssigkeit (IL), insbesondere in der Ionischen Flüssigkeit (IL), gelöst und/oder dissoziiert, aufweist; und/oder
**dass** die Metallkomponente und/oder die Ionische Flüssigkeit (IL) das Metall in einer positiven Oxidationsstufe, insbesondere mindestens ein Metallkation, aufweist, insbesondere wobei die Oxidationsstufe des Metalls im Bereich von +I bis +VII, insbesondere im Bereich von +I bis +IV, vorzugsweise im Bereich von +I bis +III, liegt und besonders bevorzugt +I oder +II ist; und/oder
**dass** die Metallkomponente und/oder die Ionische Flüssigkeit (IL) mindestens ein Metall, ausgewählt aus der Gruppe von Zn, Ag, Sn, Ni und Cu, aufweist.

6. Aktivkohle nach einem der vorangehenden Ansprüche, **dadurch gekennzeichnet,**
**dass** die Metallkomponente und/oder die Ionische Flüssigkeit (IL) mindestens eine in der Ionischen Flüssigkeit (IL) lösbare oder dissoziierbare Metallverbindung auf Basis des Metalls aufweist und/oder dass die Metallkomponente und/oder die Ionische Flüssigkeit mindestens eine anorganische oder organische Metallverbindung auf Basis des Metalls, insbesondere ein Metallsalz oder Metalloxid, vorzugsweise ein Metallsalz, aufweist; und/oder
**dass** die Metallkomponente und/oder die Ionische Flüssigkeit (IL) ein organisches oder anorganisches Metallsalz auf Basis des Metalls aufweist, wobei das Salz ausgewählt ist aus der Gruppe von Halogenidsalzen, Sulfaten, Sulfiden, Sulfiten, Nitraten, Nitriten, Phosphaten, Phosphiden, Phosphiten, Carbamaten, Alkohalaten und Carbonsäuresalzen, insbesondere Halogenidsalzen und Carbonsäuresalzen; und/oder
**dass** die Metallkomponente und/oder die Ionische Flüssigkeit (IL) ein Metallhalogenid des Metalls, insbesondere ein Fluorid, Chlorid, Bromid oder Iodid, vorzugsweise Chlorid, oder ein Carbonsäuresalz des Metalls, insbesondere Acetat, aufweist; und/oder
**dass** die Metallkomponente und/oder die Ionische Flüssigkeit (IL) eine Metallverbindung, ausgewählt aus der Gruppe von Nickelchlorid, Kupferchlorid, Zinkacetat und Zinnacetat, aufweist; und/oder
**dass** die Ionische Flüssigkeit (IL) zusammen mit dem Metall und/oder der Metallverbindung als Schmelze vorliegt und/oder dass das Metall und/oder die Metallverbindung in der Ionischen Flüssigkeit (IL) zumindest im Wesentlichen kristall- und/oder kristallitfrei vorliegt und/oder dass das Metall und/oder die Metallverbindung in der Ionischen Flüssigkeit (IL) zumindest im Wesentlichen gelöst, insbesondere zumindest im Wesentlichen dissoziiert, ist; und/oder
**dass** die Ionische Flüssigkeit (IL) das Metall, insbesondere die Metallverbindung, in Mengen von 0,001 Gew.-% bis 80 Gew.-%, insbesondere 0,01 Gew.-% bis 60 Gew.-%, vorzugsweise 0,1 Gew.-% bis 50 Gew.-%, bezogen auf die Ionische Flüssigkeit (IL) und berechnet als Metall, enthält und/oder dass die Metallkomponente bzw. die metallhaltige Ionische Flüssigkeit (IL) das Metall, insbesondere in Form der Metallverbindung, in einem molaren Massenanteil im Bereich von 1 % bis 90 %, insbesondere im Bereich von 5 % bis 70 %, vorzugsweise im Bereich von 10 % bis 60 %, bevorzugt im Bereich von 10 % bis 55 %, bezogen auf die metallhaltige Ionische Flüssigkeit (IL) und berechnet als Metall, enthält; und/oder
**dass** das molare Verhältnis von Ionischer Flüssigkeit (IL) zu Metall "[Ionische Flüssigkeit (IL) : Metall]" im Bereich von [10 : 0,1] bis [0,1 : 10], insbesondere im Bereich von [1 : 0,5] bis [1 : 3], vorzugsweise im Bereich von [1 : 0,6] bis [1 : 2], bevorzugt im Bereich von [1 : 1] bis [1 : 1,6], liegt; und/oder
**dass** das Gemisch, insbesondere die Lösung und/oder Schmelze, der Ionischen Flüssigkeit (IL) und des Metalls, insbesondere der Metallverbindung, bei einer Temperatur T = 20 °C und Atmosphärendruck eine Dichte von 1 g/cm³ bis 2,5 g/cm³, insbesondere 1,2 g/cm³ bis 2 g/cm³, vorzugsweise 1,3 g/cm³ bis 1,9 g/cm³, aufweist.

7. Aktivkohle nach einem der vorangehenden Ansprüche, **dadurch gekennzeichnet,**
**dass** die Aktivkohle mit der metallhaltigen Ionischen Flüssigkeit (IL) zumindest teilweise in Kontakt gebracht ist und/oder benetzt und/oder bedeckt, insbesondere imprägniert, ist und/oder dass die Oberfläche der Aktivkohle und/oder das Porensystem der Aktivkohle, insbesondere die Mikroporen, Mesoporen und/oder Makroporen, vorzugsweise die Oberfläche der Aktivkohle und das Porensystem der Aktivkohle, zumindest teilweise mit der metallhaltigen Ionischen Flüssigkeit (IL) in Kontakt gebracht sind und/oder benetzt und/oder bedeckt, insbesondere imprägniert, sind; und/oder
**dass** die Aktivkohle die metallhaltige Ionische Flüssigkeit (IL) in Mengen von 2 Vol.-% bis 60 Vol.-%, vorzugsweise 3 Vol.-% bis 50 Vol.-%, bevorzugt 5 Vol.-% bis 40 Vol.-%, bezogen auf das Volumen der Aktivkohle, aufweist und/oder dass die Aktivkohle die metallhaltige Ionische Flüssigkeit (IL) in Mengen von mindestens 1 Vol.-%, insbesondere mindestens 2 Vol.-%, vorzugsweise mindestens 3 Vol.-%, bevorzugt mindestens 5 Vol.-%, bezogen auf das Volumen der Aktivkohle, aufweist und/oder dass die Aktivkohle die metallhaltige Ionische Flüssigkeit (IL) in Mengen von höchstens 70 Vol.-%, insbesondere höchstens 60 Vol.-%, vorzugsweise höchstens 50 Vol.-%, bevorzugt höchstens 40 Vol.-%, bezogen auf das Volumen der Aktivkohle, aufweist; und/oder
**dass** die Aktivkohle in Bezug auf die metallhaltige Ionische Flüssigkeit (IL) einen Porenfüllgrad α von 0,05 bis 0,8, vorzugsweise von 0,1 bis 0,6, bevorzugt von 0,15 bis 0,5, aufweist und/oder dass die Aktivkohle in Bezug auf die metallhaltige Ionische Flüssigkeit (IL) einen Porenfüllgrad α von höchstens 0,8, vorzugsweise höchstens 0,6, bevorzugt höchstens 0,5, aufweist und/oder dass die Aktivkohle in Bezug auf die metallhaltige Ionische Flüssigkeit (IL) einen Porenfüllgrad α von mindestens 0,01, insbesondere mindestens 0,05, vorzugsweise mindestens 0,1, bevorzugt mindestens 0,15, aufweist, insbesondere wobei der Porenfüllgrad α gemäß der Formel [α = V_{IL} / (Vₚₒᵣₑ · m_{Träger})] berechnet ist, wobei in der Formel "V_{IL}" das Volumen der einzusetzenden Ionischen Flüssigkeit, "m_{Träger}" die Masse der einzusetzenden Aktivkohle und "Vₚₒᵣₑ" das spezifische Porenvolumen der Aktivkohle bezeichnen; und/oder
**dass** der Porenfüllgrad α derart bemessen ist und/oder die Menge an metallhaltiger Ionischer Flüssigkeit (IL) derart ausgelegt ist, dass 30 % bis 90 %, vorzugsweise 40 % bis 80 %, des (inneren) Porenvolumens der Aktivkohle nicht mit der metallhaltigen Ionischen Flüssigkeit (IL) gefüllt sind.

8. Aktivkohle nach einem der vorangehenden Ansprüche, **dadurch gekennzeichnet,**
**dass** die Aktivkohle Teilchendurchmesser im Bereich von 0,01 bis 1 mm, bevorzugt 0,05 bis 0,8 mm, vorzugsweise 0,1 bis 0,7 mm, besonders bevorzugt 0,15 bis 0,6 mm, aufweist, insbesondere wobei, bezogen auf die Aktivkohle, mindestens 80 Gew.-%, insbesondere mindestens 90 Gew.-%, vorzugsweise mindestens 95 Gew.-%, der eingesetzten Aktivkohle Teilchendurchmesser in den vorgenannten Bereichen aufweisen; und/oder
**dass** die Aktivkohle mittlere Partikelgrößen (D50), insbesondere mittlere Teilchendurchmesser (D50), im Bereich von 0,01 bis 1 mm, insbesondere 0,05 bis 0,8 mm, bevorzugt 0,1 bis 0,6 mm, vorzugsweise 0,15 bis 0,5 mm, besonders bevorzugt 0,2 bis 0,4 mm, aufweist; und/oder
**dass** die Aktivkohle ein Gesamtporenvolumen nach Gurvich im Bereich von 0,5 bis 3,5 cm³/g, vorzugsweise 0,6 bis 3 cm³/g, besonders bevorzugt 0,7 bis 2,5 cm³/g, aufweist, insbesondere wobei 30 % bis 80 %, vorzugsweise 40 % bis 75 %, des Gesamtporenvolumens nach Gurvich der Aktivkohle durch Poren mit Porendurchmessern im Bereich von 2 nm bis 50 nm, insbesondere durch Mesoporen, gebildet sind; und/oder
**dass** die Aktivkohle einen mittleren Porendurchmesser im Bereich von 1 bis 60 nm, insbesondere 1 bis 55 nm, bevorzugt 1,5 bis 50 nm, besonders bevorzugt 2 bis 45 nm, aufweist; und/oder
**dass** die Aktivkohle eine spezifische BET-Oberfläche im Bereich von 500 m²/g bis 3.500 m²/g, insbesondere 600 bis 3.000 m²/g, vorzugsweise 700 bis 2.750 m²/g, besonders bevorzugt 800 bis 2.500 m²/g, aufweist; und/oder
**dass** die Aktivkohle eine durch Mikroporen gebildete Oberfläche von 400 bis 2.500 m²/g, insbesondere 500 bis 2.300 m²/g, vorzugsweise 600 bis 2.100 m²/g, besonders bevorzugt 700 bis 1.900 m²/g, aufweist; und/oder
**dass** die Aktivkohle eine Dichte von 1,1 bis 3,5 g/ml, insbesondere von 1,5 bis 3 g/ml, vorzugsweise von 1,75 bis 2,75 g/ml, bevorzugt von 2 bis 2,5 g/ml, aufweist; und/oder
**dass** die Aktivkohle eine Schüttdichte von 0,1 bis 1,5 g/ml, insbesondere von 0,15 bis 1 g/ml, vorzugsweise von 0,2 bis 0,8 g/ml, bevorzugt von 0,3 bis 0,6 g/ml, aufweist.

9. Verfahren zur Herstellung einer Aktivkohle mit reaktiver und/oder katalytischer Aktivität, wie in einem der vorangehenden Ansprüche definiert, wobei die Aktivkohle mit mindestens einer Metallkomponente ausgerüstet und/oder ausgestattet wird, wobei die Metallkomponente mindestens eine metallhaltige Ionische Flüssigkeit (IL) umfasst, wobei die Metallkomponente mindestens ein Metall, ausgewählt aus der Gruppe von Cu, Ag, Au, Zn, Hg, Sn, Ce, Ti, Zr, V, Nb, Cr, Mo, W, Mn, Fe, Ru, Os, Co, Rh, Ir, Ni, Pd und Pt, aufweist, und wobei eine Vielzahl von diskreten Aktivkohlepartikeln in Kugel- und/oder Kornform mit der gegebenenfalls verdünnten metallhaltigen Ionischen Flüssigkeit (IL) in Kontakt gebracht, insbesondere benetzt und/oder beschichtet und/oder imprägniert wird, insbesondere wobei nachfolgend gegebenenfalls zur Verdünnung eingesetztes Lösemittel und/oder gegebenenfalls nicht von der Aktivkohle aufgenommene und/oder überschüssige metallhaltige Ionische Flüssigkeit (IL) entfernt und/oder abgetrennt wird;
wobei die Aktivkohle Teilchendurchmesser im Bereich von 0,01 bis 2 mm aufweist, bestimmt nach der Methode nach ASTM D2862-97/04, und wobei die Aktivkohle ein Gesamtporenvolumen nach Gurvich im Bereich von 0,4 bis 4 cm ³/g aufweist, wobei 30 % bis 85 % des Gesamtporenvolumens nach Gurvich der Aktivkohle durch Poren mit Porendurchmessern im Bereich von 2 nm bis 50 nm gebildet werden;
wobei die Ionische Flüssigkeit (IL) eine Verbindung der allgemeinen Formel [Kat]ⁿ⁺[An]ⁿ⁻ ist, wobei "Kat" ein Kation bezeichnet und "An" ein Anion bezeichnet und "n" eine ganze Zahl gleich 1 oder 2 bezeichnet, und/oder wobei die Ionische Flüssigkeit (IL) eine Verbindung der allgemeinen Formel [Kat₁]ₓ^{y+}[An₁]_{y}^{x-} ist, wobei "Kat₁" ein Kation bezeichnet und "An₁" ein Anion bezeichnet und wobei "x" und "y", unabhängig voneinander, eine ganze Zahl im Bereich von 1 bis 4 bezeichnen, wobei das Kation [Kat]ⁿ⁺ der Ionischen Flüssigkeit (IL) ein Stickstoff enthaltendes Kation ist, wobei das Stickstoff enthaltende Kation ausgewählt wird aus der Gruppe von quarternären Ammoniumkationen, Imidazoliumkationen, Pyridiniumkationen, Pyrazoliumkationen und Triaziniumkationen, oder wobei das Kation [Kat]ⁿ⁺ der Ionischen Flüssigkeit (IL) ein Phosphor enthaltendes Kation in Form eines Phosphoniumkations ist und wobei das Anion [An]ⁿ⁻ der Ionischen Flüssigkeit (IL) ein organisches oder anorganisches Anion ist; und
wobei die Aktivkohle die metallhaltige Ionische Flüssigkeit (IL) in Mengen von 1 Vol.-% bis 70 Vol.-%, bezogen auf das Volumen der Aktivkohle, aufweist und/oder wobei die Menge an metallhaltiger Ionischer Flüssigkeit (IL) derart ausgelegt wird und/oder der Porenfüllgrad α der Aktivkohle derart bemessen wird, dass 20 % bis 95 % des Porenvolumens der Aktivkohle nicht mit der metallhaltigen Ionischen Flüssigkeit (IL) gefüllt werden.

10. Verfahren zur Herstellung einer Aktivkohle mit reaktiver und/oder katalytischer Aktivität, wie in einem der vorangehenden Ansprüche definiert, wobei das Verfahren die folgenden Schritte in der nachstehend spezifizierten Abfolge (a) bis (c) umfasst:
(a) Herstellung und/oder Bereitstellung mindestens einer Metallkomponente auf Basis einer metallhaltigen Ionischen Flüssigkeit (IL), insbesondere in Form einer Lösung und/oder Schmelze, wobei die Metallkomponente mindestens ein Metall, ausgewählt aus der Gruppe von Cu, Ag, Au, Zn, Hg, Sn, Ce, Ti, Zr, V, Nb, Cr, Mo, W, Mn, Fe, Ru, Os, Co, Rh, Ir, Ni, Pd und Pt, aufweist; wobei das mindestens eine Metall, insbesondere in Form von Metallionen, vorzugsweise auf Basis einer Metallverbindung, mit einer Ionischen Flüssigkeit (IL) in Kontakt gebracht, insbesondere in einer Ionischen Flüssigkeit (IL) gelöst wird;
(b) Inkontaktbringen, insbesondere Benetzen und/oder Beschichten und/oder Imprägnieren, der Aktivkohle, insbesondere einer Vielzahl von diskreten Aktivkohlepartikeln, vorzugsweise in Kugel- und/oder Kornform, mit der in Schritt (a) erhaltenen Metallkomponente auf Basis der metallhaltigen Ionischen Flüssigkeit (IL); und
(c) gegebenenfalls Entfernung und/oder Abtrennung von nicht von der Aktivkohle aufgenommener und/oder überschüssiger metallhaltiger Ionischer Flüssigkeit (IL), gegebenenfalls gefolgt von einer Entfernung und/oder Abtrennung des Verdünnungs- und/oder Lösemittels insbesondere in Schritt (c);
wobei die Aktivkohle Teilchendurchmesser im Bereich von 0,01 bis 2 mm aufweist, bestimmt nach der Methode nach ASTM D2862-97/04, und wobei die Aktivkohle ein Gesamtporenvolumen nach Gurvich im Bereich von 0,4 bis 4 cm³/g aufweist, wobei 30 % bis 85 % des Gesamtporenvolumens nach Gurvich der Aktivkohle durch Poren mit Porendurchmessern im Bereich von 2 nm bis 50 nm gebildet werden;
wobei die Ionische Flüssigkeit (IL) eine Verbindung der allgemeinen Formel [Kat]ⁿ⁺[An]ⁿ⁻ ist, wobei "Kat" ein Kation bezeichnet und "An" ein Anion bezeichnet und "n" eine ganze Zahl gleich 1 oder 2 bezeichnet, und/oder wobei die Ionische Flüssigkeit (IL) eine Verbindung der allgemeinen Formel [Kat₁]ₓ^{y+}[An₁]_{y}^{x-} ist, wobei "Kat₁" ein Kation bezeichnet und "An₁" ein Anion bezeichnet und wobei "x" und "y", unabhängig voneinander, eine ganze Zahl im Bereich von 1 bis 4 bezeichnen, wobei das Kation [Kat]ⁿ⁺ der Ionischen Flüssigkeit (IL) ein Stickstoff enthaltendes Kation ist, wobei das Stickstoff enthaltende Kation ausgewählt wird aus der Gruppe von quarternären Ammoniumkationen, Imidazoliumkationen, Pyridiniumkationen, Pyrazoliumkationen und Triaziniumkationen, oder wobei das Kation [Kat]ⁿ⁺ der Ionischen Flüssigkeit (IL) ein Phosphor enthaltendes Kation in Form eines Phosphoniumkations ist und wobei das Anion [An]ⁿ⁻ der Ionischen Flüssigkeit (IL) ein organisches oder anorganisches Anion ist; und
wobei die Aktivkohle die metallhaltige Ionische Flüssigkeit (IL) in Mengen von 1 Vol.-% bis 70 Vol.-%, bezogen auf das Volumen der Aktivkohle, aufweist und/oder wobei die Menge an metallhaltiger Ionischer Flüssigkeit (IL) derart ausgelegt wird und/oder der Porenfüllgrad α der Aktivkohle derart bemessen wird, dass 20 % bis 95 % des Porenvolumens der Aktivkohle nicht mit der metallhaltigen Ionischen Flüssigkeit (IL) gefüllt werden.

11. Verfahren nach Anspruch 10, **dadurch gekennzeichnet,**
**dass** in Schritt (a) derart verfahren wird, dass die Ionische Flüssigkeit (IL) das Metall, insbesondere die Metallverbindung, in Mengen von 0,001 Gew.-% bis 80 Gew.-%, insbesondere 0,01 Gew.-% bis 60 Gew.-%, vorzugsweise 0,1 Gew.-% bis 50 Gew.-%, bezogen auf die Ionische Flüssigkeit (IL) und berechnet als Metall, enthält und/oder dass in Schritt (a) das molare Verhältnis von Ionischer Flüssigkeit (IL) zu Metall "[Ionische Flüssigkeit (IL) : Metall]" im Bereich von [10 : 0,1] bis [0,1 : 10], insbesondere [1 : 0,5] bis [1 : 3], vorzugsweise [1 : 0,6] bis [1 : 2], bevorzugt [1 : 1] bis [1 : 1,6], eingestellt wird; und/oder
**dass** in Schritt (a) und/oder zwischen Schritt (a) und (b) und/oder zwischen Schritt (b) und (c), vorzugsweise zwischen Schritt (a) und (b), ein Verdünnen der metallhaltigen, insbesondere Metallionen enthaltenden Ionischen Flüssigkeit (IL), mit einem Verdünnungs- und/oder Lösemittel erfolgt; und/oder
**dass** ein polares und/oder hydrophiles anorganisches oder organisches, vorzugsweise organisches Verdünnungs- und/oder Lösemittel eingesetzt wird und/oder dass ein Verdünnungs- und/oder Lösemittel mit einem Siedepunkt (bei Atmosphärendruck) von höchstens 250 °C, insbesondere höchstens 200 °C, vorzugsweise höchstens 150 °C, bevorzugt höchstens 100 °C, eingesetzt wird; und/oder
**dass** als Verdünnungs- und/oder Lösemittel ein einwertiger Alkohol, insbesondere Methanol, Ethanol, Butanol und/oder Propanol, vorzugsweise Ethanol, eingesetzt wird; und/oder
**dass** das Verdünnungs- und/oder Lösemittel ausgewählt wird aus der Gruppe von Wasser, Chlorkohlenwasserstoffen, insbesondere Dichlormethan, Aldehyden, Ketonen, insbesondere Aceton, und deren Mischungen; und/oder
**dass** das Verdünnungs- und/oder Lösemittel, bezogen auf 1 Volumenteil Ionische Flüssigkeit (IL), in Mengen von 0,1 Volumenteilen bis 20 Volumenteilen, insbesondere 0,2 Volumenteilen bis 15 Volumenteilen, vorzugsweise 0,3 Volumenteilen bis 10 Volumenteilen, bevorzugt 0,5 Volumenteilen bis 10 Volumenteilen, eingesetzt wird; und/oder
**dass** in Schritt (b) eine Suspension der Aktivkohle in der metallhaltigen, insbesondere Metallionen enthaltenden Ionischen Flüssigkeit (IL) hergestellt wird und/oder dass in Schritt (b) das Inkontaktbringen, insbesondere Benetzen und/oder Beschichten und/oder Imprägnieren, der Aktivkohle in einer Suspension der Aktivkohle in der Ionischen Flüssigkeit (IL) durchgeführt wird; und/oder
**dass** in Schritt (b) ein Benetzen und/oder Beschichten und/oder Imprägnieren sowohl der äußeren als auch der inneren Oberflächen, insbesondere der Mikro-, Meso- und/oder Makroporen, der Aktivkohle erfolgt; und/oder
**dass** in Schritt (b) das Volumen der einzusetzenden Ionischen Flüssigkeit (V_{IL} und/oder die Masse der einzusetzenden Aktivkohle (m_{Träger}) und/oder das spezifische Porenvolumen der Aktivkohle (V_{Pore}) in Abhängigkeit von dem einzustellenden Porenfüllgrad α, insbesondere gemäß der Formel [α = V_{IL} / (V_{Pore} · m_{Träger})], ausgewählt und/oder eingestellt wird bzw. werden, insbesondere so dass ein Porenfüllgrad α im Bereich von 0,05 bis 0,8, vorzugsweise von 0,1 bis 0,6, bevorzugt von 0,15 bis 0,5, resultiert; und/oder
**dass** in Schritt (b) unter Energieeintrag verfahren wird, insbesondere mittels Ultraschalleintrag oder dergleichen; und/oder
**dass** in Schritt (c) unter Erwärmen, insbesondere auf Temperaturen im Bereich von 25 °C bis 90 °C, insbesondere im Bereich von 30 °C bis 75 °C, vorzugsweise im Bereich von 35 °C bis 65 °C, verfahren wird und/oder dass in Schritt (c) unter verringertem Druck, insbesondere im Vakuum, verfahren wird.

12. Verwendung einer Aktivkohle nach einem der Ansprüche 1 bis 8
zur Herstellung von Filtern und Filtermaterialien aller Art, insbesondere zur Entfernung von Schad-, Geruchs- und Giftstoffen aller Art, insbesondere aus Luft- und/oder Gasströmen, wie ABC-Schutzmaskenfiltern, Geruchsfiltern, Flächenfiltern, Luftfiltern, insbesondere Filtern für die Raumluftreinigung, adsorptionsfähigen Trägerstrukturen und Filtern für den medizinischen Bereich; und/oder
als Sorptionsspeicher für Gase oder Flüssigkeiten; und/oder
als Katalysator oder Katalysatorträger; und/oder
für die chemische Katalyse, insbesondere zur Katalyse chemischer Prozesse und Reaktionen, insbesondere Oligomerisations- und Polymerisationsreaktionen, vorzugsweise von Olefinen, wie Ethylen, Propylen, Butylen oder dergleichen; und/oder in oder als Gassensoren oder in Brennstoffzellen; und/oder
für sorptive, insbesondere adsorptive Anwendungen, insbesondere als vorzugsweise reaktives und/oder katalytisches Adsorbens; und/oder
für die Gasreinigung und/oder die Gasaufbereitung; und/oder
für die Entfernung von Schadstoffen, insbesondere gasförmigen Schadstoffen, oder von umweltschädlichen, gesundheitsschädlichen oder toxischen Substanzen oder Gasen; und/oder
zur Aufbereitung und/oder Bereitstellung von Reinraumatmosphären, insbesondere für die Elektroindustrie, insbesondere für die Halbleiter- oder Chipherstellung.

13. Schutzmaterialien, insbesondere für den zivilen oder militärischen Bereich, in Form von Schutzbekleidung, wie Schutzanzüge, Schutzhandschuhe, Schutzschuhwerk, Schutzsocken, Kopfschutzbekleidung und dergleichen, sowie Schutzabdeckungen, vorzugsweise alle vorgenannten Schutzmaterialien für den ABC-Einsatz, hergestellt unter Verwendung einer Aktivkohle nach einem der Ansprüche 1 bis 8 und/oder aufweisend eine Aktivkohle nach einem der Ansprüche 1 bis 8.

14. Filter und Filtermaterialien, insbesondere zur Entfernung von Schad-, Geruchs- und Giftstoffen aller Art, insbesondere aus Luft- und/oder Gasströmen, wie ABC-Schutzmaskenfilter, Geruchsfilter, Flächenfilter, Luftfilter, insbesondere Filter für die Raumluftreinigung, adsorptionsfähige Trägerstrukturen und Filter für den medizinischen Bereich, hergestellt unter Verwendung einer Aktivkohle nach einem der Ansprüche 1 bis 8 und/oder aufweisend eine Aktivkohle nach einem der Ansprüche 1 bis 8.

15. Verfahren zur Reinigung und/oder Aufbereitung von Gasen, insbesondere zur Entfernung von unerwünschten, insbesondere umweltschädlichen, gesundheitsschädlichen oder toxischen Substanzen oder Gasen aus Gasströmen, **dadurch gekennzeichnet, dass** der zu reinigende und/oder aufzubereitende Gasstrom mit einer Aktivkohle nach einem der Ansprüche 1 bis 8 in Kontakt gebracht wird.

## Claims

1. Activated carbon and/or catalytic equipment
wherein the activated carbon is present in the form of discrete activated carbon having a spherical and/or granular shape, wherein the activated carbon particle diameter is in the range of 0.01 to 2 mm as determined by the method according to ASTM D2862-97/04, and wherein the activated carbon has a Gurvich total pore volume in the range of 0.4 to 4 cm³/g, wherein 30% to 85% of the Gurvich total pore volume is formed from pores with a pore diameter in the range of 2 nm to 50 nm;
wherein the activated carbon is equipped and/or furnished with at least one metal component, wherein the metal component comprises at least one metal-containing ionic liquid (IL), wherein the metal component and/or the ionic liquid (IL) has at least one metal selected from the group of Cu, Ag, Au, Zn, Hg, Sn, Ce, Ti, Zr, V, Nb, Cr, Mo, W, Mn, Fe, Ru, Os, Co, Rh, Ir, Ni, Pd and Pt;
wherein the ionic liquid (IL) is a compound of the general formula [Cat]ⁿ⁺[An]ⁿ⁻, wherein "Cat" represents a cation and "An" represents an anion and "n" represents a whole number equal to 1 or 2, and/or wherein the ionic liquid (IL) is a compound of the general formula [Cat₁]ₓ^{y+}[An₁]_{y}^{x-}, wherein "Cat₁" represents a cation and "An₁" represents an anion and wherein "x" and "y", independently from one another, represent a whole number in the range of from 1 to 4, wherein the cation [Cat]ⁿ⁺ of the ionic liquid (IL) is a nitrogen-containing cation, wherein the nitrogen-containing cation is selected from the group of quaternary ammonium cations, imidazolium cations, pyridinium cations, pyrazolium cations, and triazinium cations, or wherein the cation [Cat]ⁿ⁺ of the ionic liquid (IL) is a phosphorus-containing cation in the form of a phosphonium cation, and wherein the anion [An]ⁿ⁻ of the ionic liquid (IL) is an organic or inorganic anion; and
wherein the activated carbon has the metal-containing ionic liquid (IL) in quantities of from 1 vol% to 70 vol% based on the volume of the activated carbon, and/or wherein the quantity of such a metal-containing ionic liquid (IL) is designed and/or the pore filling capacity α of such an activated carbon is measured such that 20% to 95% of the pore volume of the activated carbon is not filled with the metal-containing ionic liquid (IL).

2. The activated carbon particle according to claim 1, **characterised in that**
the metal-containing ionic liquid (IL) is a, preferably metal compound based, metal ion-containing ionic liquid (IL); and/or
the ionic liquid (IL) is a compound of the general formula [Cat]ⁿ⁺[An]ⁿ⁻, wherein "Cat" represents a cation and "An" represents an anion and "n" represents a whole number equal to 1, and/or the ionic liquid (IL) is a compound of the general formula [Cat₁]ₓ^{y+}[An₁]^{x-}, wherein "Cat₁" represents a cation and "An₁" represents an anion and wherein "x" and "y", independently from one another, represent a whole number in the range of from 1 to 3, preferably 1 or 2, more preferably respectively 1; and/or
the [Cat]ⁿ⁺ of the ionic liquid (IL) is selected from imidazolium cations; or the [Cat]ⁿ⁺ of the ionic liquid (IL) is selected from the group of
- quaternary ammonium cations of the general formula (I):
[NR¹R²R³R]⁺ Formula (I)
- phosphonium cations of the general formula (II):
[PR¹R²R³R]⁺ Formula (II)
- imidazolium cations of the general formula (III): 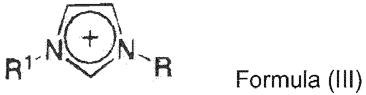 wherein in Formula (III) the imidazole nucleus is optionally substituted with at least one group selected from among (C₁-C₈)-alkyl groups, (C₁-C₈)-alkoxy groups, (C₁-C₈)-aminoalkyl groups, (C₅-C₁₂)-aryl groups and (C₅-C₁₂)-aryl-(C₁-C₈)-alkyl groups;
- pyridinium cations of the general formula (IV): 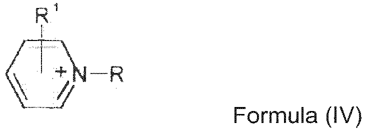 wherein in Formula (IV) the pyridine nucleus is optionally substituted with at least one group selected from among (C₁-C₆)-alkyl groups, (C₁-C₆)-alkoxy groups, (C₁-C₆)-aminoalkyl groups, (C₅-C₁₂)-aryl groups or (C₅-C₁₂)-aryl-(C₁-C₆)-alkyl groups;
- pyrazolium cations of the general Formula (V): 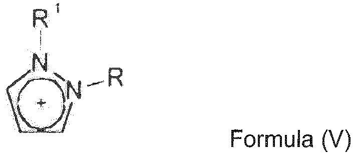 wherein in Formula (V) the pyrazole nucleus is optionally substituted with at least one group selected from among (C₁-C₆)-alkyl groups, (C₁-C₆)-alkoxy groups, (C₁-C₆)-aminoalkyl groups, (C₅-C₁₂)-aryl groups or (C₅-C₁₂)-aryl-(C₁-C₆)-alkyl groups; and
- Triazinium cations of the general formula (VI): 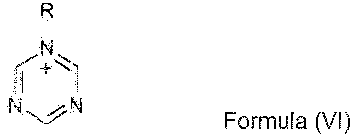 wherein in Formula (VI) the triazine nucleus is optionally substituted with at least one group selected from among (C₁-C₆)-alkyl groups, (C₁-C₆)-alkoxy groups, (C₁-C₆)-aminoalkyl groups, (C₅-C₁₂)-aryl groups and (C₅-C₁₂)-aryl-(C₁-C₆)-alkyl groups;
wherein in Formulas (I) to (VI), independently from one another, the groups R¹, R², and R³, independently from one another, are selected from the group of
- hydrogen
- linear or branched, saturated or unsaturated, aliphatic or alicyclic (C₁-C₂₀)-alkyl groups;
- heteroaryl groups or (C₃-C₈)-heteroary)-(C₁-C₆)-alkyl groups, particularly with at least one heteroatom, particularly selected from the group of N, O, and S, particularly wherein the heteroaryl group is optionally substituted with at least one group, particularly at least one (C₁-C₆)-alkyl group, and/or at least one halogen atom; and
- aryl groups or (C₅-C₁₂)-aryl-(C₁-C₆)-alkyl groups, particularly wherein the respective aforementioned groups are optionally substituted with a (C₁-C₆)-alkyl group and/or at least one halogen atom; and
wherein in Formulas (I) to (VI), independently from one another, the R group is selected from among
- linear or branched, saturated or unsaturated, aliphatic or alicyclic (C₁-C₂₀)-alkyl groups;
- (C₃-C₈)-heteroaryl-(C₁-C₆)-alkyl groups, particularly with at least one heteroatom, particularly selected from the group of N, O, and S, particularly wherein the heteroaryl group is optionally substituted with at least one group, particularly at least one (C₁-C₆)-alkyl group, and/or at least one halogen atom; and
- (C₅-C₁₂)-aryl-(C₁-C₆)-alkyl groups, particularly wherein the aforementioned groups are optionally substituted with a (C₁-C₆)-alkyl group and/or at least one halogen atom.

3. The activated carbon particle according to claim 1 or claim 2, **characterised in that** the cation [Cat]ⁿ⁺ of the ionic liquid (IL) is an imidazolium cation of the general Formula (III) 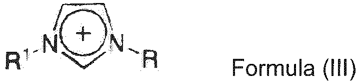 wherein in Formula (III) the imidazole nucleus is optionally substituted with at least one group selected from among (C₁-C₈)-alkyl groups, (C₁-C₈)-alkoxy groups, (C₁-C₈)-aminoalkyl groups, (C₅-C₁₂)-aryl groups and (C₅-C₁₂)-aryl-(C₁-C₈)-alkyl groups, and
wherein in Formula (III), the groups R and R¹, independently from one another, are selected from the group of linear or branched, saturated or unsaturated, aliphatic or alicyclic, particularly linear (C₁-C₂₀)-alkyl groups, particularly
wherein the groups R and R¹ are different from one another and/or particularly wherein the groups R and R¹ have different numbers of carbon atoms from one another, and/or
wherein in Formula (III), the R group is a methyl group and wherein in Formula (III), the R¹ group is particularly a linear (C₁-C₂₀)-alkyl group, preferably a particularly linear (C₂-C₁₂)-alkyl group, more preferably a particularly linear (C₂-C₈)-alkyl group, or
wherein in Formula (III), the R group is a methyl group and wherein in Formula (III), the R¹ group is an ethyl group, butyl group, or octyl group, especially an ethyl group; or
the cation [Cat]ⁿ⁺ of the ionic liquid (IL) is a 1-ethyl-3-methylimidazolium cation ([EMIM]⁺), 1-butyl-3-methylimidazolium cation ([BMIM]⁺) or 1-octyl-3-methylimidazolium cation ([OMIM]⁺), particularly a 1-ethyl-3-methylimidazolium cation ([EMIM]⁺).

4. The activated carbon particle according to one of the foregoing claims,
**characterised in that**
The anion [An]ⁿ⁻ of the ionic liquid (IL) is selected from among anions of the group of chlorocuprate ([CuCl₃]⁻), bromocuprate ([CuBr₃]⁻), chlorostannate ([SnCl₃]⁻, [Sn₂Cl₅]⁻), bromostannate ([SnBr₃]⁻), chlorozincate ([ZnCl₃]⁻), bromozincate ([ZnBr₃]⁻), chloroferrate ([FeCl₃]⁻), bromoferrate ([FeBr₃]⁻), chlorocobaltate ([CoCl₃]⁻), bromocobaltate ([CoBr₃]⁻), chloronickelate ([NiCl₃]⁻), bromonickelate ([NiBr₃]⁻), tetrafluoroborate ([BF₄]⁻), tetrachloroborate ([BCl₄]⁻), hexafluorophosphate ([PF₆]⁻), hexafluoroantimonate ([SbF₆]⁻), hexafluoroarsenate ([AsF₆]⁻), sulphate ([SO₄]²⁻), carbonate ([CO₃]²⁻), fluorosulphonate, [R'-COO]⁻, [R'-SO₃]⁻, [R'-SO₄]⁻, [R'₂PO₄]⁻, tetrakis-(3,5-bis-(trifluoromethyl)-phenyl)borate ([BARF]⁻ ) and bis-sulphonylamide [(R'-SO₂)₂N]⁻, wherein R' is a linear or branched, 1- to 12-carbon atom-containing aliphatic or alicyclic alkyl group, or a (C₅-C₁₈)-aryl group, a (C₅-C₁₈)-aryl-(C₁-C₆)-alkyl group, or a (C₁-C₆)-alkyl-(C₅-C₁₈)-aryl group, wherein the group is optionally substituted with halogen atoms and/or oxygen atoms; or
the anion [An]ⁿ⁻ of the ionic liquid (IL) is selected from among anions of the group of dicyanamide ([N(CN)₂]⁻), nitrate ([NO₃]⁻), nitrite ([NO₂]⁻), anionic metal complexes, particularly [CuCl₄]²⁻, [PdCl₄]²⁻ or [AuCl₄]⁻, acetate ([CH₃COO]⁻), trifluoroacetate ([F₃CCOO]⁻), tosylate ([C₇H₇SO₃]⁻), nonafluorobutanesulphonate ([C₄F₉SO₃⁻), tris(pentafluoroethyl) trifluorophosphate ([PF₃(C₂F₅)₃]⁻), tricyanomethide ([C(CN)₃]⁻), tetracyanoborate ([B(CN)₄]⁻, thiocyanate ([SCN]⁻), carboxylate ([R"-COO]⁻), sulphonate ([R"-SO₃]⁻), dialkylphosphate ([R"PO₄R"']⁻ or bis-sulphonylimides [(R"-SO₂)₂N]⁻), wherein R" and R"', independently from one another, are respectively a linear, branched, aliphatic, or alicyclic (C₅-C₁₈)-alkyl group or a (C₅-C₁₈)-aryl group, (C₅-C₁₈)-aryl-(C₁-C₆)-alkyl group or (C₁-C₆)-alkyl-(C₅-C₁₈)-aryl group, particularly wherein the group is optionally substituted with halogen atoms or oxygen atoms; or
the ionic liquid (IL) is a halide anion, particularly Cl⁻, Br⁻, F⁻, I⁻, preferably Cl⁻, or the anion [An]ⁿ⁻ of the ionic liquid (IL) is a carboxylic acid anion, particularly acetate anion; or
the anion [An]ⁿ⁻ of the ionic liquid (IL) is selected from the group of compounds of the Formulas (VII) to (IX) 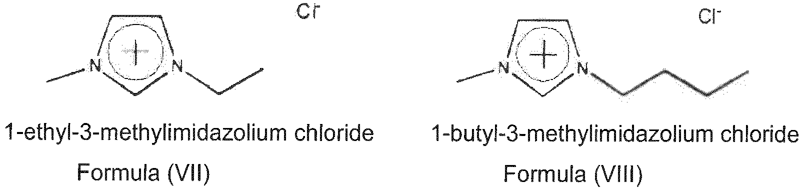 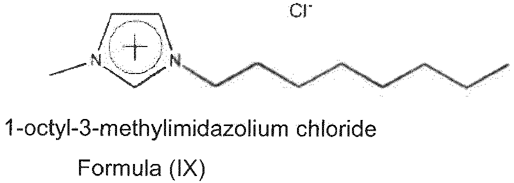 particularly wherein the ionic liquid (IL) is a compound of the Formula (VII).

5. The activated carbon particle according to one of the foregoing claims,
**characterised in that**
the metal component is metal, especially in the form of a metal compound dissolved and/or dissociated in at least one ionic liquid (IL), particularly in the ionic liquid (IL); and/or
the metal component and/or the ionic liquid (IL) has the metal in a positive oxidation state, particularly at least one metal cation, particularly wherein the oxidation state of the metal is in the range of +I to +VII, more particularly in the range of +I to +IV, preferably in the range of +I to +III, and particularly preferably is +I or +II; and/or
the metal component and/or the ionic liquid (IL) has at least one metal selected from the group of Zn, Ag, Sn, Ni and Cu.

6. The activated carbon according to one of the foregoing claims, **characterised in that**
the metal component and/or the ionic liquid (IL) has at least one metal-based metal compound dissoluble or dissociable in the ionic liquid (IL) and/or the metal component and/or the ionic liquid has at least one metal-based inorganic or organic metal compound, particularly a metal salt or metal oxide, preferably a metal salt; and/or
the metal component and/or the ionic liquid (IL) has at least one metal-based organic or inorganic metal salt, wherein the salt is selected from the group halide salts, sulphates, sulphides, sulphites, nitrates, nitrites, phosphates, phosphides, phosphites, carbamates, alcoholates, and carboxylic acid salts, particularly halide salts and carboxylic acid salts; and/or
the metal component and/or the ionic liquid (IL) has a metal halide of the metal, particularly a fluoride, chloride, bromide, or iodide, preferably chloride, or a carboxylic acid salt of the metal, particularly acetate; and/or
the metal component and/or the ionic liquid (IL) has a metal compound selected from the group of nickel chloride, copper chloride, zinc acetate, and tin acetate; and/or
the ionic liquid (IL) together with the metal and/or metal compound is present as a melt and/or the metal and/or the metal compound is present at least as essentially crystal- and/or crystallite-free in the ionic liquid (IL) and/or the metal and/or the metal compound is essentially dissolved, particularly at least essentially dissociated, in the ionic liquid (IL); and/or
the ionic liquid (IL) contains the metal, particularly the metal compound, in quantities of 0.001 wt% to 80 wt%, particularly 0.01 wt% to 60 wt%, preferably 0.1 wt% to 50 wt% based on the ionic liquid (IL) and calculated as the metal, and/or the metal component or metal-containing ionic liquid (IL) contains the metal, particularly in the form of the metal compound, in a molar mass fraction in the range of from 1% to 90%, particularly in the range of from 5% to 70%, preferably in the range of from 10% to 60%, more preferably in the range of 10% to 55%, based on the metal-containing ionic liquid (IL) and calculated as the metal, and/or
the molar ratio of ionic liquid (IL) to metal "[ionic liquid (IL): metal]" in the range of [10: 0.1] though [0.1: 10], particularly in the range of [1: 0.5] to [1: 3], preferably in the range of [1: 0.6] to [1: 2], more preferably in the range of [1: 1] to [1: 1.6]; and/or the mixture, particularly the solution and/or melt, of the ionic liquid (IL) and the metal, particularly the metal compound, has a density of 1 g/cm³ to 2.5 g/cm³, particularly 1.2 g/cm³ to 2 g/cm³, preferably 1.3 g/cm³ to 1.9 g/cm³, at a temperature T = 20 °C.

7. The activated carbon according to one of the foregoing claims, **characterised in that**
the activated carbon is partially brought into contact and/or wetted and/or covered, particularly impregnated with the metal-containing ionic liquid (IL), and/or the surface of the activated carbon and/or pore system of the activated carbon, particularly the micropores, mesopores, and/or macropores, preferably the surface of the activated carbon and the pore system of the activated carbon are at least partially brought into contact and/or wetted and/or covered, particularly impregnated with the metal-containing ionic liquid (IL); and/or
the activated carbon has the metal-containing ionic liquid (IL) in quantities of from 2 vol% to 60 vol%, preferably 3 vol% to 50 vol%, more preferably 5 vol% to 40 vol%, based on the volume of the activated carbon, and/or the activated carbon has the metal-containing ionic liquid (IL) in quantities of at least 1 vol%, particularly at least 2 vol%, preferably at least 3 vol%, more preferably at least 5 vol%, based on the volume of the activated carbon, and/or the activated carbon has the metal-containing ionic liquid (IL) in quantities of at most 70 vol%, particularly at most 60 vol%, preferably at most 50 vol%, more preferably at most 40 vol%, based on the volume of the activated carbon; and/or
relating to the metal-containing ionic liquid (IL), the activated carbon has a pore filling capacity α of from 0.05 to 0.8, preferably from 0.1 to 0.6, more preferably from 0.15 to 0.5, and/or relating to the metal-containing ionic liquid (IL), the activated carbon has a pore filling capacity α of at most 0.8, preferably at most 0.6, more preferably at most 0.5, and/or relating to the metal-containing ionic liquid (IL), the activated carbon has a pore filling capacity α of at least 0.01, particularly at least 0.05, preferably at least 0.1, more preferably at least 0.15, particularly wherein the pore filling capacity α is calculated according to the formula [α = V_{IL} / (Vₚₒᵣₑ • m_{carrier})], wherein in the formula "V_{IL}" is the volume of ionic liquid to be used, "m_{carrier}" is the mass of activated carbon to be used, and "Vₚₒᵣₑ" is the specific pore volume of the activated carbon; and/or
the pore filling capacity α is measured in such a way and/or the quantity of metal-containing ionic liquid (IL) is designed in such a way the 30% to 90%, preferably 40% to 80%, of the (inner) pore volume of the activated carbon is not filled with the metal-containing ionic liquid (IL).

8. The activated carbon according to one of the foregoing claims, **characterised in that**
the activated carbon has a particle diameter in the range of from 0.01 mm to 1 mm, more preferably 0.05 mm to 0.8 mm, preferably 0.1 mm to 0.7 mm, particularly preferably 0.15 mm to 0.6 mm, in particular wherein the activated carbon has at least 80 wt%, particularly at least 90 wt%, preferably at least 95 wt%, based on the activated carbon, of the activated carbon used has a particle diameter within the aforementioned range, and/or
the activated carbon has a mean particle size (D50), particularly a particle diameter (D50) in the range of from 0.01 mm to 1 mm, particularly 0.05 mm to 0.8 mm, more preferably 0.1 mm to 0.6 mm, preferably 0.15 mm to 0.5 mm, particularly preferably 0.2 mm to 0.4 mm; and/or
the activated carbon has a Gurvich total pore volume in the range of from 0.5 cm³/g to 3.5 cm³/g, preferably 0.6 cm³/g to 3 cm³/g, particularly preferably 0.7 cm³/g to 2.5 cm³/g, particularly wherein 30% to 80%, preferably 40% to 75% of the Gurvich total pore volume of the activated carbon is formed of pores with a pore diameter in the range of from 2 nm to 50 nm, particularly formed of mesopores; and/or
the activated carbon has a mean pore diameter in the range of from 1 nm to 60 nm, particularly from 1 nm to 55 nm, preferably from 1.5 nm to 50 nm, particularly preferably from 2 nm to 45 nm; and/or
the activated carbon has a specific BET surface area in the range of from 500 m²/g to 3,500 m²/g, particularly 600 m²/g to 3,000 m²/g, preferably 700 m²/g to 2,750 m²/g, particularly preferably 800 m²/g to 2,500 m²/g; and/or
the activated carbon has a surface formed from micropores of from 400 m²/g to 2,500 m²/g, particularly 500 m²/g to 2,300 m²/g, preferably 600 m²/g to 2,100 m²/g, particularly preferably 700 m²/g to 1,900 m²/g; and/or
the activated carbon has a density of from 1.1 g/mL to 3.5 g/mL, particularly from 1.5 g/mL to 3 g/mL, preferably from 1.75 g/mL to 2.75 g/mL, more preferably from 2 g/mL to 2.5 g/mL; and/or
the activated carbon has a bulk density of from 0.1 g/mL to 1.5 g/mL, particularly from 0.15 g/mL to 1 g/mL, preferably from 0.2 g/mL to 0.8 g/mL, more preferably from 0.3 g/mL to 0.6 g/mL.

9. A method for the production of an activated carbon with reactive and/or catalytic activity, as defined in any one of the forgoing claims, wherein the activated carbon is equipped and/or furnished with at least one metal component, wherein the metal component comprises at least one metal-containing ionic liquid (IL), wherein the metal component has at least one metal selected from the group of Cu, Ag, Au, Zn, Hg, Sn, Ce, Ti, Zr, V, Nb, Cr, Mo, W, Mn, Fe, Ru, Os, Co, Rh, Ir, Ni, Pd, and Pt, and wherein a plurality of discrete activated carbon particles having a spherical and/or granular shape is optionally brought into contact, particularly wetted and/or coated and/or impregnated, with a diluted metal-containing ionic liquid (IL), particularly wherein subsequently the solvent optionally used in dilution and/or the metal-containing ionic liquid (IL) optionally not taken up by the activated carbon and/or excess metal-containing ionic liquid (IL) is removed and/or separated;
wherein the activated carbon has a particle diameter in the range of 0.01 to 2 mm as determined by the method according to ASTM D2862-97/04, and wherein the activated carbon has a Gurvich total pore volume in the range of 0.4 to 4 cm³/g, wherein 30% to 85% of the Gurvich total pore volume is formed from pores with a pore diameter in the range of 2 nm to 50 nm;
wherein the ionic liquid (IL) is a compound of the general formula [Cat]ⁿ⁺[An]ⁿ⁻, wherein "Cat" represents a cation and "An" represents an anion and "n" represents a whole number equal to 1 or 2, and/or wherein the ionic liquid (IL) is a compound of the general formula [Cat₁]ₓ^{y+}[An₁]_{y}^{x-}, wherein "Cat₁" represents a cation and "An₁" represents an anion and wherein "x" and "y", independently from one another, represent a whole number in the range of from 1 to 4, wherein the cation [Cat]ⁿ⁺ of the ionic liquid (IL) is a nitrogen-containing cation, wherein the nitrogen-containing cation is selected from the group of quaternary ammonium cations, imidazolium cations, pyridinium cations, pyrazolium cations, and triazinium cations, or wherein the cation [Cat]ⁿ⁺ of the ionic liquid (IL) is a phosphorus-containing cation in the form of a phosphonium cation, and wherein the anion [An]ⁿ⁻ of the ionic liquid (IL) is an organic or inorganic anion; and
wherein the activated carbon has the metal-containing ionic liquid (IL) in quantities of from 1 vol% to 70 vol% based on the volume of the activated carbon, and/or wherein the quantity of such a metal-containing ionic liquid (IL) is designed and/or the pore filling capacity α of such an activated carbon is measured such that 20% to 95% of the pore volume of the activated carbon is not filled with the metal-containing ionic liquid (IL).

10. A method for the production of an activated carbon with reactive and/or catalytic activity, as defined in any one of the foregoing claims, wherein the method comprises the following steps (a) to (c) in the sequence specified below:
(a) production and/or preparation of at least one metal component based on a metal-containing ionic liquid (IL), particularly in the form of a solution and/or melt, wherein the metal component has at least one metal selected from the group of Cu, Ag, Au, Zn, Hg, Sn, Ce, Ti, Zr, V, Nb, Cr, Mo, W, Mn, Fe, Ru, Os, Co, Rh, Ir, Ni, Pd, and Pt; wherein at least one metal, particularly in the form of metal ions, preferably based on a metal compound, is brought into contact with an ionic liquid (IL), particularly dissolved in an ionic liquid (IL);
(b) bringing into contact, particularly wetting and/or coating and/or impregnating the activated carbon, particularly a plurality of discrete activated carbon particles preferably having a spherical and/or granular shape, with the metal component obtained in step (a) that is based on the metal-containing ionic liquid (IL); and
(c) optionally removing and/or separating of the metal-containing ionic liquid (IL) not taken up by the activated carbon and/or excess metal-containing ionic liquid (IL), optionally followed by the removing and/or separating of the diluent and/or solvent, particularly in step (c);
wherein the activated carbon has a particle diameter in the range of 0.01 to 2 mm as determined by the method according to ASTM D2862-97/04, and wherein the activated carbon has a Gurvich total pore volume in the range of 0.4 to 4 cm³/g, wherein 30% to 85% of the Gurvich total pore volume is formed from pores with a pore diameter in the range of 2 nm to 50 nm;
wherein the ionic liquid (IL) is a compound of the general formula [Cat]ⁿ⁺[An]ⁿ⁻, wherein "Cat" represents a cation and "An" represents an anion and "n" represents a whole number equal to 1 or 2, and/or wherein the ionic liquid (IL) is a compound of the general formula [Cat₁]ₓ^{y+}[An₁]_{y}^{x-}, wherein "Cat₁" represents a cation and "An₁" represents an anion and wherein "x" and "y", independently from one another, represent a whole number in the range of from 1 to 4, wherein the cation [Cat]ⁿ⁺ of the ionic liquid (IL) is a nitrogen-containing cation, wherein the nitrogen-containing cation is selected from the group of quaternary ammonium cations, imidazolium cations, pyridinium cations, pyrazolium cations, and triazinium cations, or wherein the cation [Cat]ⁿ⁺ of the ionic liquid (IL) is a phosphorus-containing cation in the
form of a phosphonium cation, and wherein the anion [An]ⁿ⁻ of the ionic liquid (IL) is an organic or inorganic anion; and
wherein the activated carbon has the metal-containing ionic liquid (IL) in quantities of from 1 vol% to 70 vol% based on the volume of the activated carbon, and/or wherein the quantity of such a metal-containing ionic liquid (IL) is designed and/or the pore filling capacity α of such an activated carbon is measured such that 20% to 95% of the pore volume of the activated carbon is not filled with the metal-containing ionic liquid (IL).

11. The process according to claim 10, **characterised in**
being carried out in step (a) such that the ionic liquid (IL) contains the metal, particularly the metal compound, in quantities of 0.001 wt% to 80 wt%, particularly 0.01 wt% to 60 wt%, preferably 0.1 wt% to 50 wt%, based on the ionic liquid (IL) and calculated as the metal, and/or the molar ratio of ionic liquid (IL) to metal in step (a) is adjusted to "[ionic liquid (IL): metal]" in the range of [10: 0.1] to [0.1: 10], particularly [1: 0.5] to [1: 3], preferably [1: 0.6] to [1: 2], more preferably [1: 1] to [1: 1.6]; and/or
a dilution of the metal-containing, particularly metal ion-containing ionic liquid (IL), with a diluent or solvent takes place in step (a) and/or between step (a) and step (b), and/or between step (b) and step (c), preferably between step (a) and step (b); and/or
a polar and/or hydrophilic inorganic or organic, preferably organic diluent and/or solvent is used, and/or a diluent and/or solvent with a boiling point (at atmospheric pressure) of at most 250 °C, particularly at most 200 °C, preferably at most 150 °C, more preferably at most 100 °C is used; and/or
a monohydric alcohol, particularly methanol, ethanol, butanol, and/or propanol, preferably ethanol, is used as a diluent and/or solvent; and/or
the diluent and/or solvent is selected from the group of water, chlorohydrocarbons, particularly dichloromethane, aldehydes, ketones, particularly acetone, and mixtures thereof; and/or
the diluent and/or solvent is used in quantities of 0.1 parts by volume to 20 parts by volume, particularly 0.2 parts by volume to 15 parts by volume, preferably 0.3 parts by volume to 10 parts by volume, more preferably 0.5 parts by volume to 10 parts by volume, based on 1 part by volume of the ionic liquid (IL); and/or
a suspension of activated carbon in the metal-containing, particularly metal ion-containing ionic liquid (IL) is prepared in step (b), and/or the bringing into contact, particularly wetting and/or coating and/or impregnating the activated carbon in a suspension of activated carbon in the ionic liquid (IL) is carried out in step (b); and/or
a wetting and/or coating and/or impregnating of both the external and internal surfaces, particularly the micro-, meso-, and macropores, of the activated carbon takes place in step (b); and/or
the volume of ionic liquid (V_{IL}) to be used, and/or the mass of activated carbon to be used (m_{carrier}) and/or the specific pore volume of the activated carbon (Vₚₒᵣₑ) as a function of the pore filling capacity α to be established, particularly according to the formula [α = V_{IL} / (Vₚₒᵣₑ • m_{carrier})], is/are selected and/or adjusted in step (b), particularly so that a pore filling capacity α in the range of from 0.05 to 0.8, preferably from 0.1 to 0.6, more preferably from 0.15 to 0.5, will result; and/or step (b) will proceed with energy input, particularly by means of ultrasound input or the like; and/or
step (c) will proceed under heating, particularly at temperatures in the range of from on 25 °C to 90 °C, particularly in the range of from 30 °C to 75 °C, preferably in the range of from 35 °C to 65 °C, and/or step (c) will proceed under reduced pressure, particularly in a vacuum.

12. a use of an activated carbon according to one of claims 1 through 8
for the production of filters and filter materials of all types, particularly for the removal of contaminants, odourants, and toxins of all types, particularly in air or gas streams, such as ABC safety mask filters, odour filters, surface filters, air filters, particularly filters for cleaning room air, adsorptive carrier structures, and filters for the medical field; and/or
as sorption storage units for gases or liquids; and/or
as catalysts or catalyst carriers; and/or
for chemical catalysis, particularly for the catalysis of chemical processes and reactions, particularly oligomerisation and polymerisation reactions, preferably of olefins such as ethylene, propylene, butylene, or the like; and/or
in or as gas sensors or in fuel cells; and/or
for sorptive, particularly adsorptive applications, particularly as preferably reactive and/or catalytic adsorbents; and/or
for gas purification and/or gas treatment; and/or
for the removal of harmful substances, especially gaseous hazardous substances, or of environmental pollutants, substances hazardous to health or toxic substances or gases; and/or
for processing or preparation of cleanroom atmospheres, particularly in the electronic industry, particularly in the production of semiconductors or chips.

13. Protective materials, particularly in the civil or military fields, in the form of protective clothing, such as protective suits, protective gloves, protective footwear, protective socks, protective headgear, and the like, and protective covers, preferably all the aforementioned protective materials for ABC use produced using an activated carbon according to any one of claims 1 through 8 and/or having an activated carbon according to any one of claims 1 through 8.

14. Filters and filter materials, particularly for the removal of contaminants, odourants, and toxins of all types, particularly in air or gas streams, such as ABC safety mask filters, odour filters, surface filters, air filters, particularly filters for cleaning room air, adsorptive carrier structures, and filters for the medical field, produced using an activated carbon according to any one of claims 1 through 8 and/or having an activated carbon according to any one of claims 1 through 8.

15. Method for the cleaning and/or treatment of gases, particularly for the removal of undesired, particularly environmental pollutants, substances hazardous to health and toxic substances or gases from gas streams, **characterised in that** the gas stream to be cleaned or to be treated is brought into contact with an activated carbon according to any one of claims 1 through 8.

## Revendications

1. Charbon actif à activité réactive et/ou catalytique,
dans lequel le charbon actif est présent sous forme de particules discrètes de charbon actif sous forme de billes et/ou de grains, le charbon actif présentant un diamètre des particules dans la plage de 0,01 à 2 mm, déterminé selon la méthode conforme à la norme ASTM D2862-97/04 et le charbon actif présentant un volume de pore total selon Gurvich dans la plage de 0,4 à 4 cm³/g, de 30 % à 85 % du volume de pore total selon Gurvich du charbon actif étant formés par des pores ayant un diamètre de pore dans la plage de 2 nm à 50 nm ;
le charbon actif étant pourvu et/ou doté d'au moins un composé métallique, le composant métallique comprenant au moins un liquide ionique renfermant des métaux (IL), le composant métallique et/ou le liquide ionique (IL) présentant au moins un métal, choisi dans le groupe constitué de Cu, Ag, Au, Zn, Hg, Sn, Ce, Ti, Zr, V, Nb, Cr, Mo, W, Mn, Fe, Ru, Os, Co, Rh, Ir, Ni, Pd et Pt ;
le liquide ionique (IL) étant un composé de formule générale [Kat]ⁿ⁺[An]ⁿ⁻, « Kat » désignant un cation et « An » désignant un anion et « n » désignant un nombre entier égal à 1 ou 2 et/ou le liquide ionique (IL) étant un composé de formule générale [Kat₁]ₓ^{y+}[An_{1]y}^{x-}, « Kat₁ » désignant un cation et « An₁ » désignant un anion et « x » et « y », indépendamment l'un de l'autre, désignant un nombre entier dans la plage de 1 à 4, le cation [Kat]ⁿ⁺ du liquide ionique (IL) étant un cation renfermant de l'azote, le cation renfermant de l'azote étant choisi dans le groupe constitué de cations d'ammonium quaternaires, cations d'imidazolium, cations de pyridinium, cations de pyrazolium et cations de triazinium ou le cation [Kat]ⁿ⁺ du liquide ionique (IL) étant un cation renfermant du phosphore sous la forme d'un cation de phosphonium et l'anion [An]ⁿ⁻ du liquide ionique (IL) étant un anion organique ou inorganique ; et
le charbon actif présentant le fluide ionique renfermant des métaux (IL) en des quantités de 1 % en volume à 70 % en volume, par rapport au volume du charbon actif et/ou la quantité de liquide ionique renfermant des métaux (IL) étant conçue de sorte que et/ou le degré de remplissage des pores α du charbon actif étant mesuré de sorte que de 20 % à 95 % du volume de pore du charbon actif ne sont pas remplis par le liquide ionique renfermant des métaux (IL).

2. Particule de charbon actif selon la revendication 1, **caractérisée en ce**
**que** le liquide ionique renfermant des métaux (IL) est un liquide ionique (IL) renfermant des ions métalliques, de préférence à base d'un composant métallique ; et/ou
en ce que le liquide ionique (IL) est un composé de formule générale [Kat]ⁿ⁺[An]ⁿ⁻, « Kat » désignant un cation et « An » désignant un anion et « n » désignant un nombre entier égal à 1 et/ou en ce que le liquide ionique (IL) est un composé de formule générale [Kat₁]ₓ^{y+}[An₁]_{y}^{x-}, « Kat₁ » désignant un cation et « An₁ » désignant un anion et « x » et « y », indépendamment l'un de l'autre, désignant un nombre entier dans la plage de 1 à 3, de préférence 1 ou 2, de préférence respectivement 1 ; et/ou
en ce que le cation [Kat]ⁿ⁺ du liquide ionique (IL) est choisi parmi des cations d'imidazolium ; ou
en ce que le cation [Kat]ⁿ⁺ du liquide ionique (IL) est choisi dans le groupe constitué de
- cations d'ammonium quaternaires de formule générale (I) :
[NR¹R²R³R]⁺ Formule (I)
- cations de phosphonium de formule générale (II) :
[PR¹R²R³R]⁺ Formule (II)
- cations d'imidazolium de formule générale (III) : 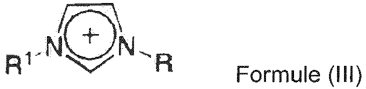 dans la formule (III) le noyau imidazole étant substitué le cas échant par au moins un groupe choisi parmi des groupes alkyle en C₁-C₈, des groupes alcoxy en C₁-C₈, des groupes aminoalkyle en C₁-C₈, des groupes aryle en C₅-C₁₂ et des groupes alkyle en C₁-C₈ aryle en C₅-C₁₂ ;
- cations de pyridinium de formule générale (IV) : 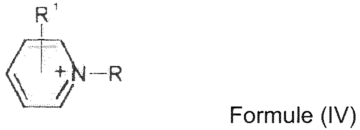 dans la formule (IV), le noyau pyridine étant substitué le cas échéant par au moins un groupe choisi parmi des groupes lkyle en C₁-C₆, des groupes alcoxy en C₁-C₆, des groupes aminoalkyle en C₁-C₆, des groupes aryle en C₅-C₁₂ ou des groupes aryle en C₅-C₁₂ alkyle en C₁-C₆ ;
- cations de pyrazolium de formule générale (V) : 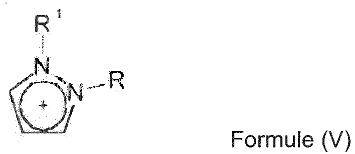 dans la formule (V) le noyau pyrazole étant substitué le cas échéant par au moins un groupe choisi parmi des groupes alkyle en C₁-C₆, des groupes alcoxy en C₁-C₆, des groupes aminoalkyle en C₁-C₆, des groupes aryle en C₅-C₁₂ ou des groupes aryle en C₅-C₁₂ alkyle en C₁-C₆ ; et
- cations de triazinium de formule générale (VI) : 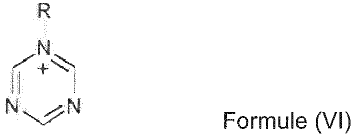 dans la formule (VI) le noyau triazine étant substitué le cas échéant par au moins un groupe choisi parmi des groupes alkyle en C₁-C₆, des groupes alcoxy en C₁-C₆, des groupes aminoaryle en C₁-C₆, des groupes aryle en C₅-C₁₂ et des groupes aryle en C₅-C₁₂ alkyle en C₁-C₆ ;
dans les formules (I) à (VI), indépendamment les unes des autres, les radicaux R¹, R², R³, indépendamment les uns des autres, étant choisi parmi les groupes constitués de
- hydrogène ;
- groupes alkyle en C₁-C₂₀, linéaires ou ramifiés, saturés ou insaturés, aliphatiques ou alicycliques ;
- groupes hétéroaryle ou groupes hétéroaryle en C₃-C₈ alkyle en C₁-C₆, en particulier avec chacun au moins un hétéroatome, en particulier choisi dans le groupe constitué de N, O et S, en particulier dans lequel Ile radical hétéroaryle est substitué le cas échéant par au moins un groupe, notamment au moins un groupe alkyle en C₁-C₆ et/ou au moins un atome d'halogène ; et
- groupes aryle ou groupes aryle en C₅-C₁₂ alkyle en C₁-C₆, en particulier dans lequel les groupes précités sont chacun le cas échéant substitués par au moins un groupe alkyle en C₁-C₆ et/ou au moins un atome d'halogène ; et
dans les formules (I) à (VI), indépendamment des autres, le radical R est choisi parmi
- groupes alkyle en C₁-C₂₀, linéaires ou ramifiés, saturés ou insaturés, aliphatiques ou alicycliques ;
- groupes hétéroaryle en C₃-C₈ alkyle en C₁-C₆, en particulier avec chacun au moins un hétéroatome, en particulier choisi dans le groupe constitué de N, O et S, en particulier dans lequel le radical hétéroaryle est substitué, le cas échéant, par au moins un groupe, en particulier au moins un groupe alkyle en C₁-C₆ et/ou au moins un atome d'halogène ; et
- groupes aryle en C₅-C₁₂ alkyle en C₁-C₆, en particulier dans lequel les groupes précités sont substitués le cas échéant par au moins un groupe alkyle en C₁-C₆ et/ou un atome d'halogène.

3. Particule de charbon actif selon la revendication 1 ou 2, **caractérisée en ce**
**que** le cation [Kat]ⁿ⁺ du liquide ionique (IL) est un cation d'imidazolium de formule générale (III) : 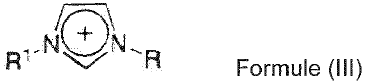 dans la formule (III), le noyau imidazole étant substitué, le cas échéant, par au moins un groupe, choisi parmi des groupes alkyle en C₁-C₈, des groupes alcoxy en C₁-C₈, des groupes aminoalkyle en C₁-C₈, des groupes aryle en C₅-C₁₂ et des groupes aryle en C₅-C₁₂ alkyle en C₁-C₈ et
dans la formule (III) les radicaux R et R¹, indépendamment l'un de l'autre, étant choisis dans le groupe constitué de groupes alkyle linéaires ou ramifiés, saturés ou insaturés, aliphatiques ou alicycliques, notamment des groupes alkyle linéaires en C₁-C₂₀, en particulier
les radicaux R et R¹ étant différents l'un de l'autre et/ou en particulier les radicaux R et R¹ présentant un nombre différent l'un de l'autre d'atomes de carbone et/ou
dans la formule (III) le radical R étant un groupe méthyle et dans la formule (III) le radical R¹ étant un groupe alkyle en C₁-C₂₀ en particulier linéaire, de préférence un groupe alkyle en C₂-C₁₂ en particulier linéaire, préférablement un groupe alkyle en C₂-C₈ en particulier linéaire ou
dans la formule (III) le radical R étant un groupe méthyle et dans la formule (III) le radical R¹ étant un groupe éthyle, un groupe butyle ou un groupe octyle, en particulier un groupe éthyle ; ou
en ce que le cation [Kat]ⁿ⁺ du liquide ionique (IL) est un cation 1-éthyl-3-méthylimidazolium ([EMIM]⁺), un cation 1-butyl-3-méthylimidazolium ([BMIM]⁺) ou un cation 1-octyl-3-méthylimidazolium ([OMIM]⁺), en particulier un cation 1-éthyl-3-méthyl-imidazolium ([EMIM]⁺).

4. Particule de charbon actif selon une des revendications précédentes, **caractérisée en ce**
**que** l'anion [An]ⁿ⁻ du liquide ionique (IL) est choisi parmi des anions du groupe constitué de chlorocuprate ([CuCl₃]⁻). bromocuprate ([CuBr₃]⁻), chlorostannate ([SnCl₃]⁻, [Sn₂Cl₅]⁻), bromostannate ([SnBr₃]⁻), chlorozincate ([ZnCl₃]⁻), bromozincate ([ZnBr₃]⁻), chloroferrate ([FeCl₃]⁻), bromoferrate ([FeBr₃]⁻), chlorocobaltate ([CoCl₃]⁻), bromocobaltate ([CoBr₃]⁻), chloronickelate ([NiCl₃]⁻), bromonickelate ([NiBr₃]⁻), tétrafluoroborate ([BF₄]⁻), tétrachloroborate ([BCl₄]⁻), hexafluorophosphate ([PF₆]⁻), hexafluoroantimonate ([SbF₆]⁻), hexafluoroarsenate ([AsF₆]⁻), sulfate ([SO₄]²⁻), carbonate ([CO₃]²⁻), fluorosulfonate, [R'-COO]⁻, [R'-SO₃]⁻ , [R'-SO₄]⁻, [R'₂PO₄]⁻, tétrakis-(3,5-bis-(trifluorméthyl)-phényl)borate ([BARF]⁻) et bissulfonylamide [(R'-SO₂)₂N]⁻, R' étant un radical alkyle linéaire ou ramifié, renfermant de 1 à 12 atomes de carbone aliphatique ou alicyclique ou un radical aryle en C₅-C₁₈, un radical aryle en C₅-C₁₈ alkyle en C₁-C₆ ou un radical alkyle en C₁-C₆ aryle en C₅-C₁₈, le radical étant le cas échéant substitué par des atomes d'halogène et/ou atomes d'oxygène ; ou
en ce que l'anion [An]ⁿ⁻ du liquide ionique (IL) est choisi parmi des anions du groupe constitué de dicyanamide ([N(CN)₂]⁻), nitrate ([NO₃]⁻), nitrite ([NO₂]⁻, complexes métalliques anioniques, en particulier [CuCl₄]²⁻, [PdCl₄]²⁻ ou [AuCl₄]⁻, acétate ([CH₃COO]⁻), trifluoracétate ([F₃CCOO]⁻), tosylate ([C₇H₇SO₃]⁻). nonafluorbutansulfonate ([C₄F₉SO3⁻), tris(pentafluoréthyl)trifluorphosphate ([PF₃(C₂F₅)₃]⁻). tricyanométhide ([C(CN)₃]⁻), tétracyanoborate ([B(CN)₄]⁻, thiocyanate ([SCN]⁻), carboxylate ([R"-COO]⁻), sulfonate ([R"-SO₃]⁻), dialkylphosphate ([R"PO₄R"']⁻) ou bissulfonylimides [(R"-SO₂)₂N]⁻), R" et R"', indépendamment l'un de l'autre, étant respectivement un radical alkyle en C₅-C₁₈ linéaire, ramifié, aliphatique ou alicyclique ou un radical aryle en C₅-C₁₈, un radical aryl en C₅-C₁₈ alkyle en C₁-C₆ ou un radical alkyle en C₁-C₆ aryle en C₅-C₁₈, en particulier, le radical étant substitué le cas échéant par des atomes d'halogène ou des atomes d'oxygène ; ou
en ce que l'anion [An]ⁿ⁻ du liquide ionique (IL) est un anion halogénure, en particulier Cl⁻, Br⁻, F⁻, I⁻, de préférence Cl⁻ et/ou en ce que l'anion [An]ⁿ⁻ du liquide ionique (IL) est un anion d'acide carboxylique, en particulier un anion d'acétate ; ou
en ce que le liquide ionique (IL) est choisi dans le groupe des composés de formules -VII) à (IX) 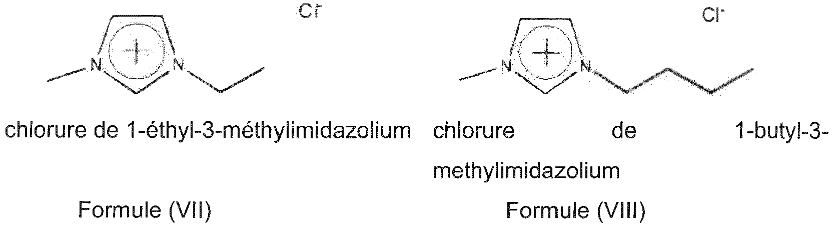 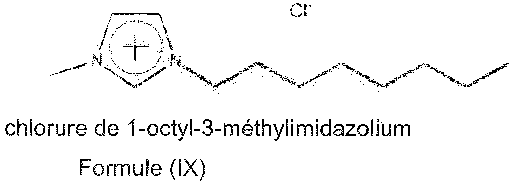 en particulier, le liquide ionique (IL) étant un composé de formule (VII).

5. Particule de charbon actif selon une des revendications précédentes, **caractérisée en ce**
**que** le composant métallique présente le métal, en particulier sous la forme d'un composé métallique, dissous et/ou dissocié dans au moins un liquide ionique (IL), en particulier dans le liquide ionique (IL) ; et/ou
en ce que le composant métallique et/ou le liquide ionique (IL) présentent le métal dans une étape d'oxydation positive, en particulier au moins un cation métallique, en particulier, l'étape d'oxydation du métal se trouvant dans la plage de +I à +VII, en particulier dans la plage de +I à +IV, de préférence dans la plage de +I à +III et étant de façon particulièrement préférée +I ou +II ; et/ou
en ce que le composant métallique et/ou le liquide ionique (IL) présentent au moins un métal, choisi dans le groupe constitué de Zn, Ag, Sn, Ni et Cu.

6. Charbon actif selon une des revendications précédentes, **caractérisé en ce**
**que** le composant métallique et/ou le liquide ionique (IL) présente au moins un composé métallique à base du métal pouvant être dissous ou dissocié dans le liquide ionique (IL) et/ou en ce que le composant métallique et/ou le liquide ionique présentent au moins un composé métallique inorganique ou organique à base du métal, notamment un sel métallique ou un oxyde métallique, de préférence un sel métallique ; et/ou
en ce que le composant métallique et/ou le liquide ionique (IL) présente un sel métallique organique ou inorganique à base du métal, le sel étant choisi dans le groupe constitué de sel d'halogénure, sulfates, sulfures, sulfites, nitrates, nitrites, phosphates, phosphures, phosphites, carbamates, acoolates et sels d'acide carboxylique, en particulier sels d'halogénure et sels d'acide carboxylique ; et/ou
en ce que le composant métallique et/ou le fluide ionique (IL) présente un halogénure métallique du métal, en particulier un fluorure, chlorure, bromure ou iodure, de préférence le chlorure ou un sel d'acide carboxylique du métal, en particulier l'acétate ; et/ou
en ce que le composant métallique et/ou le liquide ionique (IL) présentent un composé métallique, choisi dans le groupe constitué de chlorure de nickel, chlorure de cuivre, acétate de zinc ou acétate d'étain ; et/ou
en ce que le liquide ionique (IL), conjointement avec le métal et/ou le composé métallique sont présents sous forme de masse fondue et/ou en ce que le métal et/ou le composé métallique dans le liquide ionique (IL) sont présents au moins essentiellement dépourvus de cristal et/ou cristallite et/ou en ce que le métal et/ou le composé métallique dans le liquide ionique (IL) sont au moins essentiellement dissous, en particulier au moins essentiellement dissociés ; et/ou
en ce que le liquide ionique (IL) contient le métal, en particulier le composé métallique, en des quantités de 0,001 % en poids à 80 % en poids, en particulier
de 0,01 % en poids à 60 % en poids, de préférence de 0,1 % en poids à 50 % en poids, par rapport au liquide ionique (IL) et calculées sous forme de métal et/ou en ce que le composant métallique ou le fluide ionique (IL) renfermant des métaux contient le métal, en particulier sous la forme du composé métallique, en une proportion de masse molaire dans la plage de 1 % à 90 %, en particulier dans la plage de 5 % à 70 %, de préférence dans la plage de 10 % à 60 %, préférablement dans la plage de 10 % à 55 %, par rapport au liquide ionique (IL) renfermant les métaux et calculée sous forme de métal ; et/ou
en ce que le rapport molaire du liquide ionique (IL) au métal « [Liquide ionique (IL): Métal] » se trouve dans la plage de [10 : 0,1] à [0,1 : 10], en particulier dans la plage de [1 : 0,5] à [1 : 3], de préférence dans la plage de [1 : 0,6] à [1 : 2], préférablement dans la plage de [1 : 1] à [1 : 1,6] ; et/ou
en ce que le mélange, en particulier la solution et/ou la masse fondue, du liquide ionique (IL) et du métal, en particulier du composé métallique, à une température T = 20 °C et à pression atmosphérique présente une densité de 1 g/cm³ à 2,5 g/cm³, en particulier 1,2 g/cm³ à 2 g/cm³, de préférence 1,3 g/cm³ à 1,9 g/cm³.

7. Charbon actif selon une des revendications précédentes, **caractérisé en ce**
**que** le charbon actif est amené au moins partiellement en contact et/ou mouillé et/ou recouvert, en particulier imprégné, avec le liquide ionique (IL) renfermant des métaux et/ou en ce que la surface du charbon actif et/ou le système de pores du charbon actif, en particulier les micro-pores, les méso-pores et/ou les macro-pores, de préférence la surface du charbon actif et le système de pores du charbon actif, sont au moins partiellement amenés en contact et/ou mouillés et/ou recouverts, en particulier imprégnés, avec le fluide ionique (IL) renfermant les métaux ; et/ou
en ce que le charbon actif présente le fluide ionique (IL) renfermant des métaux en des quantités de 2 % en volume à 60 % en volume, de préférence de 3 % en volume à 50 % en volume, préférablement de 5 % en volume à 40 % en volume, par rapport au volume du charbon actif et/ou en ce que le charbon actif présente le liquide ionique (IL) renfermant des métaux en des quantités d'au moins 1 % en volume, en particulier au moins 2 % en volume, de préférence au moins 3 % en volume, préférablement au moins 5 % en volume, par rapport au volume du charbon actif et/ou en ce que le charbon actif présente le liquide ionique (IL) renfermant des métaux en des quantités de 70 % en volume maximum, en particulier 60 % en volume maximum, de préférence 50 % en volume maximum, préférablement 40 % en volume maximum, par rapport au volume du charbon actif ; et/ou
en ce que le charbon actif, par rapport au liquide ionique (IL) renfermant des métaux, présente un degré de remplissage des pores α de 0,05 à 0,8, de préférence de 0,1 à 0,6, préférablement de 0,15 à 0,5 et/ou en ce que le charbon actif, par rapport au liquide ionique (IL) renfermant des métaux, présente un degré de remplissage de pores α de 0,8 maximum, de préférence de 0,6 maximum, préférablement de 0,5 maximum et/ou en ce que le charbon actif, par rapport au liquide ionique (IL) renfermant des métaux, présente un degré de remplissage des pores α d'au moins 0,01, en particulier au moins 0,05, de préférence au moins 0,1, préférablement au moins 0,15, en particulier, le degré de remplissage des pores α étant calculé conformément à la formule [α = V_{IL} / (V_{Pore} • m_{Support})], dans la formule « V_{IL}» désignant le volume du liquide ionique à employer, « m_{Träger} » désignant la masse du charbon actif à employer et «Vₚₒᵣₑ » désignant le volume de pore spécifique du charbon actif ; et/ou
en ce que le degré de remplissage α est mesuré et/ou la quantité de liquide ionique (IL) renfermant des métaux est choisie de sorte que de 30 % à 90 %, de préférence de 40 % à 80 %, du volume de pore (interne) du charbon actif ne soient pas remplis par le liquide ionique (IL) renfermant des métaux.

8. Charbon actif selon une des revendications précédentes, **caractérisé en ce**
**que** le charbon actif présente un diamètre de particule dans la plage de 0,01 à 1 mm, préférablement de 0,05 à 0,8 mm, de préférence de 0,1 à 0,7 mm, de manière particulièrement préférée de 0,15 à 0,6 mm, en particulier, par rapport au charbon actif, au moins 80 % en poids, en particulier au moins 90 % en poids, de préférence au moins 95 % en poids, du charbon actif utilisé présentent un diamètre de particule dans les plages précitées ; et/ou
en ce que le charbon actif présente une taille moyenne des particules (D50), notamment un diamètre moyen des particules (D50), dans la plage de 0,01 à 1 mm, en particulier de 0,05 à 0,8 mm, préférablement de 0,1 à 0,6 mm, de préférence de 0,15 à 0,5 mm, de manière particulièrement préférée de 0,2 à 0,4 mm ; et/ou
en ce que le charbon actif présente un volume de pore total selon Gurvich dans la plage de 0,5 à 3,5 cm³/g, de préférence de 0,6 à 3 cm³/g, de manière particulièrement préférée de 0,7 à 2,5 cm³/g, en particulier, de 30 % à 80 %, de préférence de 40 % à 75 %, du volume de pore total selon Gurvich du charbon actif étant formés par des pores avec un diamètre de pore dans la plage de 2 nm à 50 nm, en particulier par des méso-pores ; et/ou
en ce que le charbon actif présente un diamètre moyen des pores dans la plage de 1 à 60 nm, en particulier de 1 à 55 nm, préférablement de 1,5 à 50 nm, de manière particulièrement préférée de 2 à 45 nm; et/ou
en ce que le charbon actif présente une surface spécifique BET dans la plage de 500 m²/g à 3 500 m²/g, en particulier de 600 à 3 000 m²/g, de préférence de 700 à 2 750 m²/g, de manière particulièrement préférée de 800 à 2 500 m²/g et/ou en ce que le charbon actif présente une surface formée par des micro-pores de 400 à 2 500 m²/g, en particulier de 500 à 2 300 m²/g, de préférence de 600 à 2 100 m²/g, de manière particulièrement préférée de 700 à 1 900 m²/g ; et/ou
en ce que le charbon actif présente une densité de 1,1 à 3,5 g/ml, en particulier de 1,5 à 3 g/ml, de préférence de 1,75 à 2,75 g/ml, préférablement de 2 à 2,5 g/ml ; et/ou
en ce que le charbon actif présente une densité apparente de 0,1 à 1,5 g/ml, en particulier de 0,15 à 1 g/ml, de préférence de 0,2 à 0,8 g/ml, préférablement de 0,3 à 0,6 g/ml.

9. Procédé de fabrication d'un charbon actif à activité réactive et/ou catalytique, tel que défini dans l'une des revendications précédentes, le charbon actif étant pourvu et/ou doté d'au moins un composant métallique, le composant métallique comprenant au moins un liquide ionique (IL) renfermant des métaux, le composant métallique présentant au moins un métal, choisi dans le groupe constitué de Cu, Ag, Au, Zn, Hg, Sn, Ce, Ti, Zr, V, Nb, Cr, Mo, W, Mn, Fe, Ru, Os, Co, Rh, Ir, Ni, Pd et Pt et une pluralité de particules discrètes de charbon actif sous forme de billes et/ou de grains étant mise en contact, notamment mouillée et/ou revêtue et/ou imprégnée, avec le liquide ionique (IL) renfermant des métaux éventuellement dilué, en particulier, le cas échéant à la suite de la dilution, le solvant utilisé et/ou le cas échéant le liquide ionique (IL) renfermant des métaux non absorbé par le charbon actif et/ou excédentaire étant retiré et/ou séparé ;
le charbon actif présentant un diamètre de particules dans la plage de 0,01 à 2 mm, déterminé selon la méthode conforme à la norme ASTM D2862-97/04 et le charbon actif présentant un volume de pore total selon Gurvich dans la plage de 0,4 à 4 cm³/g, de 30 % à 85 % du volume de pore total selon Gurvich du charbon actif étant formés par des pores avec un diamètre de pore dans la plage de 2 nm à 50 nm;
le liquide ionique (IL) étant un composé de formule générale [Kat]ⁿ⁺[An]ⁿ⁻, «Kat » désignant un cation et « An » désignant un anion et « n » désignant un nombre entier égal à 1 ou 2 et/ou le liquide ionique (IL) étant un composé de formule générale [Kat₁]ₓ^{y+}[An₁]_{y}^{x-}, « Kat₁ » désignant un cation et «An₁ » désignant un anion et « x » et « y », indépendamment l'un de l'autre, désignant un nombre entier dans la plage de 1 à 4, le cation [Kat]ⁿ⁺ du liquide ionique (IL) étant un cation renfermant de l'azote, le cation renfermant de l'azote étant choisi dans le groupe constitué de cations d'ammonium quaternaires, cations d'imidazolium, cations de pyridinium, cations de pyrazolium et cations de triazinium ou le cation [Kat]ⁿ⁺ du liquide ionique (IL) étant un cation renfermant du phosphore sous forme d'un cations de phosphonium et l'anion [An]ⁿ⁻ du liquide ionique (IL) étant un anion organique ou inorganique ; et
le charbon actif présentant le liquide ionique (IL) renfermant des métaux en des quantités de 1 % en volume à 70 % en volume, par rapport au volume du charbon actif et/ou la quantité de liquide ionique (IL) renfermant des métaux étant choisie et/ou le degré de remplissage des pores α du charbon actif étant mesuré de sorte que de 20 % à 95 % du volume de pore du charbon actif ne soient pas remplis par le liquide ionique (IL) renfermant les métaux.

10. Procédé de fabrication d'un charbon actif à activité réactive et/ou catalytique, tel que défini dans une des revendications précédentes, le procédé comprenant les étapes suivantes dans l'ordre mentionné ci-dessous (a) à (c) :
(a) fabrication et/ou mise à disposition d'au moins un composant métallique à base d'un liquide ionique (IL) renfermant des métaux, en particulier sous la forme d'une solution et/ou d'une masse fondue, le composant métallique présentant au moins un métal, choisi dadans le groupe constitué de Cu, Ag, Au, Zn, Hg, Sn, Ce, Ti, Zr, V, Nb, Cr, Mo, W, Mn, Fe, Ru, Os, Co, Rh, Ir, Ni, Pd et Pt ; le au moins un métal, en particulier sous la forme d'ions métalliques, de préférence à base d'un composé métallique, étant amené en contact avec un liquide ionique (IL), en particulier dissous dans un liquide ionique (IL) ;
(b) mise en contact, notamment mouillage et/ou revêtement et/ou imprégnation, du charbon actif, en particulier d'une pluralité de particules discrètes de charbon actif, de préférence sous forme de billes et/ou de grains, avec le composant métallique à base du liquide ionique (IL) renfermant des métaux obtenu dans l'étape (a) ; et
(c) le cas échéant retrait et/ou séparation du liquide ionique (IL) renfermant des métaux non absorbé par le charbon actif et/ou excédentaire, suivi le cas échéant par un retrait et/ou une séparation du diluant et/ou du solvant, notamment dans l'étape (c) ;
le charbon actif présentant un diamètre de particules dans la plage de 0,01 à 2 mm, déterminé selon la méthode conforme à la norme ASTM D2862-97/04 et le charbon actif présentant un volume de pore total selon Gurvich dans la plage de 0,4 à 4 cm³/g, de 30 % à 85 % du volume de pore total selon Gurvich du charbon actif étant formés par des pores avec un diamètre de pore dans la plage de 2 nm à 50 nm;
le liquide ionique (IL) étant un composé de formule générale [Kat]ⁿ⁺[An]ⁿ⁻, «Kat» désignant un cation et « An » désignant un anion et « n » désignant un nombre entier égal à 1 ou 2 et/ou le liquide ionique (IL) étant un composé de formule générale [Kat₁]ₓ^{y+}[An₁]_{y}^{x-}, « Kat₁ » désignant un cation et « An₁ » désignant un anion et « x » et « y », indépendamment l'un de l'autre, désignant un nombre entier dans la plage de 1 à 4, le cation [Kat]ⁿ⁺ du liquide ionique (IL) étant un cation renfermant de l'azote, le cation renfermant de l'azote étant choisi dans le groupe constitué de cations d'ammonium quaternaires, cations d'imidazolium, cations de pyridinium, cations de pyrazolium et cations de triazinium ou le cation [Kat]ⁿ⁺ du liquide ionique (IL) étant un cation renfermant du phosphore sous forme d'un cations de phosphonium et l'anion [An]ⁿ⁻ du liquide ionique (IL) étant un anion organique ou inorganique ; et
le charbon actif présentant le liquide ionique (IL) renfermant des métaux en des quantités de 1 % en volume à 70 % en volume, par rapport au volume du charbon actif et/ou la quantité de liquide ionique (IL) renfermant des métaux étant choisie et/ou le degré de remplissage des pores α du charbon actif étant mesuré de sorte que de 20 % à 95 % du volume de pore du charbon actif ne soient pas remplis par le liquide ionique (IL) renfermant les métaux.

11. Procédé selon la revendication 10, **caractérisé en ce**
**que**, dans l'étape (a) la procédure suivie est telle que le liquide ionique (IL) contienne le métal, en particulier le composé métallique, en des quantités de 0,001 % en poids à 80 % en poids, en particulier de 0,01 % en poids à 60 % en poids, de préférence de 0,1 % en poids à 50 % en poids, par rapport au liquide ionique (IL) et calculé sous forme de métal et/ou en ce que, dans l'étape (a), le rapport molaire du liquide ionique (IL) au métal « [liquide ionique (IL): Métal] » soit défini dans la plage de [10 : 0,1] à [0,1 : 10], en particulier [1 : 0,5] à [1 : 3], de préférence [1 : 0,6] à [1 : 2], préférablement [1 : 1] à [1 : 1,6] ; et/ou
en ce que, dans l'étape (a) et/ou entre l'étape (a) et (b) et/ou entre l'étape (b) et (c), de préférence entre l'étape (a) et (b), une dilution du liquide ionique (IL) renfermant les métaux, en particulier les ions métalliques, soit effectuée avec un diluant et/ou un solvant ; et/ou
en ce qu'un diluant et/ou un solvant polaire et/ou hydrophile inorganique ou organique, de préférence organique est utilisé et/ou en ce qu'un diluant et/ou un solvant avec un point d'ébullition (à pression atmosphérique) de 250 °C au maximum, en particulier de 200 °C au maximum, de préférence de 150 °C au maximum, préférablement de 100 °C au maximum, est utilisé ; et/ou
en ce qu'un alcool monovalent, en particulier du méthanol, de l'éthanol, du butanol et/ou du propanol, de préférence de l'éthanol, est utilisé comme diluant et/ou solvant ; et/ou
en ce que le diluant et/ou le solvant sont choisis dans le groupe constitué de l'eau, hydrocarbures chlorés, en particulier dichlorométhane, aldéhydes, cétones, en particulier l'acétone et leurs mélanges ; et/ou
en ce que le diluant et/ou le solvant, par rapport à 1 partie en volume de liquide ionique (IL), est utilisé en quantités de 0,1 partie en volume à 20 parties en volume, en particulier de 0,2 partie en volume à 15 parties en volume, de préférence de 0,3 partie en volume à 10 parties en volume, préférablement de 0,5 partie en volume à 10 parties en volume ; et/ou
en ce que, dans l'étape (b), une suspension du charbon actif est fabriquée dans le liquide ionique (IL) renfermant des métaux, en particulier des ions métalliques et/ou en ce que, dans l'étape (b), la mise en contact, notamment le mouillage et/ou le revêtement et/ou l'imprégnation, du charbon actif est effectuée dans une suspension du charbon actif dans le liquide ionique (IL) ; et/ou
en ce que, dans l'étape (b), un mouillage et/ou un revêtement et/ou une imprégnation sont effectués aussi bien de la surface externe que de la surface interne, en particulier des micro-pores, des méso-pores et/ou des macro-pores du charbon actif ; et/ou
en ce que, dans l'étape (b), le volume du liquide ionique (V_{IL}) à employer et/ou la masse du charbon actif à employer (m_{Support}) et/ou le volume de pore spécifique du charbon actif (V_{Pore}) sont choisis et/ou définis en fonction du degré de remplissage des pores α à définir, en particulier selon la formule [α = V_{IL} / (Vₚₒᵣₑ • m_{Support})], en particulier de sorte qu'un degré de remplissage des pores α dans la plage de 0,05 à 0,8, de préférence de 0,1 à 0,6, préférablement de 0,15 à 0,5, en résulte ; et/ou
en ce que, dans l'étape (b), la procédure est effectuée sous apport d'énergie, en particulier au moyen d'un apport d'ultrasons ou analogue ; et/ou
en ce que, dans l'étape (c), la procédure est effectuée sous chauffage, en particulier à des températures dans la plage de 25 °C à 90 °C, en particulier dans la plage de 30 °C à 75 °C, de préférence dans la plage de 35 °C à 65 °C et/ou en ce que, dans l'étape (c), la procédure est effectuée sous pression réduite, en particulier sous vide.

12. Utilisation d'un charbon actif selon une des revendications 1 à 8
pour la fabrication de filtres et de matériaux filtrants de toutes sortes, en particulier pour l'élimination de substances nocives, odorantes et toxiques de toutes sortes, en particulier de flux d'air et/ou de flux gazeux, comme des filtres pour masques de protection ABC, des filtres anti-odeur, des filtres de surface, des filtres à air, en particulier des filtres pour la purification de l'air ambiant, des structures de support capables d'adsorption et des filtres pour le domaine médical ; et/ou
en tant que réservoirs à sorption pour des gaz ou liquides ; et/ou
en tant que catalyseur ou support de catalyseur ; et/ou
pour la catalyse chimique, en particulier pour des réactions et processus chimiques de catalyse, en particulier des réactions d'oligomérisation et de polymérisation, de préférence d'oléfines, comme l'éthylène, le propylène, le butylène ou analogues ; et/ou
dans ou en tant que capteurs de gaz ou dans des piles à combustible ; et/ou
pour des utilisations de sorption, en particulier d'adsorption, en particulier en tant qu'adsorbants de préférence réactifs et/ou catalytiques ; et/ou
pour l'épuration des gaz et/ou le traitement des gaz ; et/ou
pour l'élimination de substances nocives, en particulier de substances nocives sous forme gazeuse ou de substances ou gaz nuisibles pour l'environnement, la santé ou toxiques ; et/ou
pour la préparation et/ou la mise à disposition d'atmosphère de salle blanche, en particulier pour l'industrie électrique, en particulier pour la fabrication de puces ou de semi-conducteurs.

13. Matériaux de protection, en particulier pour le domaine civil ou militaire, sous forme de vêtement de protection, comme des équipements de protection, des gants de protection, des chaussures de protection, des chaussettes de protection, des vêtements de protection de la tête et analogue, comme des couvercles de protection, de préférence l'ensemble des matériaux de protection précités pour une utilisation ABC, fabriqués en utilisant un charbon actif selon une des revendications 1 à 8 et/ou présentant un charbon actif selon une des revendications 1 à 8.

14. Filtre et matériaux filtrants, en particulier pour l'élimination de substances nocives, odorantes et toxiques de toutes sortes, en particulier de flux d'air et/ou gazeux, comme des filtres pour masque de protection ABC, des filtres anti-odeur, des filtres de surface, des filtres à air, en particulier des filtres pour la purification de l'air ambiant, des structures de support capables d'adsorption et des filtres pour le domaine médical, fabriqués en utilisant un charbon actif selon une des revendications 1 à 8 et/ou présentant un charbon actif selon une des revendications 1 à 8.

15. Procédé de purification et/ou de traitement de gaz, en particulier pour l'élimination de substances ou gaz indésirables, en particulier nuisibles pour l'environnement, nuisibles pour la santé ou toxiques, de flux gazeux, **caractérisé en ce que** le flux gazeux à purifier et/ou à traiter est amené en contact avec un charbon actif selon une des revendications 1 à 8.
